(19) Europäisches Patentamt

European Patent Office

Office européen des brevets

(11) **EP 0 611 500 B1**

(12) **EUROPEAN PATENT SPECIFICATION**

(45) Date of publication and mention
of the grant of the patent:
**28.07.1999 Bulletin 1999/30**

(51) Int Cl.6: **H04B 7/185**

(21) Application number: **92924112.3**

(86) International application number:
**PCT/US92/08966**

(22) Date of filing: **27.10.1992**

(87) International publication number:
**WO 93/09613 (13.05.1993 Gazette 1993/12)**

(54) **SATELLITE COMMUNICATION SYSTEM**

Satellitenkommunikationssystem

SYSTEME DE COMMUNICATION PAR SATELLITES

(84) Designated Contracting States:
**AT BE CH DE DK ES FR GB GR IE IT LI NL SE**

(30) Priority: **28.10.1991 US 783754**

(43) Date of publication of application:
**24.08.1994 Bulletin 1994/34**

(60) Divisional application: **98122368.8**

(73) Proprietor: **Teledesic LLC
Kirkland, Washington 98033 (US)**

(72) Inventors:
• **TUCK, Edward, Fenton
West Covina, CA 91790 (US)**
• **PATTERSON, David, Palmer
Los Altos, CA 94022 (US)**
• **LOCKIE, Douglas, Gene
Los Gatos, CA 95030 (US)**
• **STUART, James, R.
Louisville, CO 80027-1046 (US)**
• **STURZA, Mark, Alan
Woodland Hills, CA 91364 (US)**
• **ASHFORD, Donald, A.
San Francisco, CA 94109 (US)**
• **BROWN, Alison, K.
Monument, CO 80132 (US)**
• **GRENCIONS, Vilnis, G.
Santa Clara, CA 95050 (US)**
• **JHA, Asu, Ram
Cerritos, CA 90701 (US)**
• **LIRON, Moshe, Lerner
Palo Alto, CA 94303 (US)**
• **WACKERNAGEL, H.,
Deceased (US)**

(74) Representative: **Powell, Stephen David et al
WILLIAMS, POWELL & ASSOCIATES
4 St Paul's Churchyard
London EC4M 8AY (GB)**

(56) References cited:
**EP-A- 0 365 885        EP-A- 0 427 201
US-A- 4 943 808**

• **Book no. , 1986, 'SATELLITENSYSTEME FüR
KOMMUNIKATION, FERNSEHEN UND
RUNDFUNK - THEORIE UND TECHNOLOGIE,
PAGE 23', H.DODEL ET AL. HüTHIG VERLAG
GMBH, HEIDELBERG (DE)**

**Description**

*TECHNICAL FIELD*

**Satellite Communication System**

The present invention relates to the field of satellite communications. More particularly, this invention comprises a dynamic geodesic constellation of 840 autonomous satellites in low Earth orbit. Each satellite in the distributed, non-hierarchical constellation is an equally important node in the network, possesses independent switching intelligence and is capable of communicating directly with a broad variety of subscribers using portable, mobile and fixed terminals. The system will provide continuous world-wide service for voice, data and video signals. This novel satellite network has the ability to bypass traditional land-based networks and will offer a revolutionary expansion of global communications potential.

*BACKGROUND ART*

Public telephone systems have generally used the same system architecture for over one hundred years. Conventional systems employ highly centralized and hierarchical switching facilities as nodes that tie together a complex web of connected links. While a very small portion of their subscribers use direct links to geostationary satellites, the vast majority of the links that couple the conventional phone network comprise a bewildering and dissimilar assortment of cables, wires, fibers and microwave repeaters. Like all hierarchical systems, conventional telephone networks are extremely vulnerable when the performance of any high-ranking node in the hierarchy is impaired. For example, a fire in a Hinsdale, Illinois wire center denied long-distance service to the Chicago area for several days. Relatively minor software failures can disrupt or even suspend service in large, densely-populated urban areas. This vulnerability to localized failure is compounded by the limits which a centralized architecture imposes on the expansion potential of the network. On average, every time a new subscriber is added to a conventional land-based communication network, expensive additions to switching hardware and connecting wires must be installed. The marginal cost of adding each new subscriber is extremely high, and the cost of raising that capital is a drain on telephone subscribers and on the economy at large. Conventional telephone systems are inherently circumscribed by their hierarchical design, and these limits now impose critical barriers to the enormous augmentation of capacity which the previous networks must provide to meet the burgeoning world demand for communications services in the coming decades.

Several attempts to bypass these inherent limits have met with mixed results. Large consumers of phone services have begun to install their own private networks to carry large volumes of voice messages, video, and broadband data calls. While some of these expensive and awkward enhancements provide partial solutions, the unalterable constraints imposed by a centralized switching topology continue to confine the future growth of existing networks.

Some extension of the century-old centralized telephone switching infrastructure has been achieved using geostationary satellites. These spacecraft, however, offer additional communications capabilities that are quite limited. Since these satellites operate in equatorial orbits, they are not accessible to customers located in high latitudes. Because they must share their orbit with many other services, their number is restricted to a relatively small population. Since all of these spacecraft occupy a single circular orbit, they can not be connected together in a geodesic network. A geodesic network, which could provide enormously greater capacity, must be generally spherical in shape. Geostationary satellites also suffer from a very serious disadvantage--the distant altitude of their orbits. These satellites are so far from Earth that the signal takes about one-quarter of a second to traverse the nearly 50,000 miles (80,000 km) along the round trip from the ground up to the satellite, and back to the ground. The delays sensed by the telephone user's ear that are introduced by this long round trip are not only annoying, but can render some conversations which are relayed between more than one geostationary satellite virtually unintelligible. Radio signals which are exchanged between a ground station and a geosynchronous satellite may also be impaired by this great round trip distance. A telephone customer on the ground using a portable phone who wanted to communicate directly with a satellite in geostationary orbit would need a telephone capable of producing an output in excess of hundreds of Watts. Generating this power output is not only thoroughly impractical for users of portable phones, but may also create a radiation hazard for the individual wielding the telephone.

Geostationary satellites do not supply an adequate solution to the formidable expansion needs of conventional telephone networks. Although cellular service has grown rapidly over the past decade, even greatly expanded cellular service would not provide an adequate solution. Cellular systems are plagued by poor performance, and are ultimately constrained by the same structural limits that circumscribe the future of land-based systems. Cellular customers are still limited to geographic regions served by radio towers called "cell sites." Even in the United States, these cell sites are not universally prevalent, since market forces restrict cellular service to only the most densely populated urban portions of our country. Cellular service is available to only a small minority of privileged users in wealthy countries, and is virtually non-existent in lesser developed parts of the world.

No system that is currently available to the general public is capable of taking advantage of the enormous enrichment of communications capacity that could be achieved if the traditional centralized grid of terrestrial switches, and their connecting cables, wires, fibers and microwave repeaters could be completely bypassed. Public phone companies are not presently able to sell continuous global service to customers who wish to use phones that are not coupled to the land-based network. The problem of providing an economically feasible network for voice, data and video which can be used by subscribers all over the world has presented a major challenge to the communications business. The development of a communications system that offers a solution to the immutable obstacles to growth which bind conventional phone networks would constitute a major technological advance and would satisfy a long felt need within the telephone industry.

EP-A-0365885 discloses a sateilite cellular telephone and data communications system in which a plurality of satellites in low-earth-orbit route calls in the form of data packets between earth-based users including mobile terminals and gateways. Forty eight satellites are located in six highly-inclined orbiting planes and they each behave as a distributed local processor determining how switching of the calls is to occur.

*BRIEF DESCRIPTION OF THE DRAWINGS*

Figure 1 is schematic diagram which shows a model of the network provided by the present invention.

Figure 2 illustrates a single element of the satellite constellation through the depiction of a single inclined orbital plane occupied by one satellite.

Figure 3 is a block diagram that reveals the network concepts embodied by the present invention.

Figure 4 is a block diagram of a gateway.

Figure 5 is a "ping-pong" diagram that portrays the sequence of events that occur when a call is initiated.

Figure 6 is a schematic diagram that reveals the fundamental architecture of the present invention.

Figure 7 is a perspective view of a hand-held portable phone. In one of the preferred embodiments, a hemispherical microwave antenna extends from the body of the phone on a collapsible mast.

Figures 8 and 9 supply side and top views of a generally trapezoidal, semi-conical embodiment of the antennas.

Figures 10 and 11 present side and top views of a hemispherical embodiment of an antenna.

Figure 12 is a perspective view of an embodiment of an antenna which takes the shape of a right circular cylinder.

Figures 13 and 14 provide enlarged illustrations of one of the circular antenna elements. Figure 13 is a top view and Figure 14 is a cross-sectional view.

Figures 15, 16, 17, 18, and 19 are schematic representations of a five bit, time delay phase shifter.

Figures 20, 21, and 22 reveal side, cross-sectional, and top views of an alternate embodiment of the invention which incorporates dual frequency antenna elements.

Figures 23 and 24 show enlarged side and top views of one of the alternative embodiments of the dual frequency antennas.

Figures 25 and 26 depict enlarged top and cross-sectional views of one of the dual frequency antenna elements.

Figures 27 and 28 reveal schematic block diagrams of the receive and transmit circuits utilized in one of the several embodiments of the invention.

Figures 29 and 30 depict side and top views of another embodiment of the miniaturized antenna.

Figures 31, 32, 33, and 34 are plan and sectional views of dual frequency antennas.

Figures 35 and 36 show cross-sectional and plan views of an antenna with a hexagonal lattice.

Figure 37 is a flowchart of the preferred embodiment of the fast packet switch.

Figure 38 presents a block diagram of a satellite switch node.

Figure 39 is a block diagram of a 32 by 1 packet priority multiplexor.

Figure 40 reveals a block diagram of a fast packet switch.

Figure 41 shows a 1 by 32 self-routing switch module.

Figure 42 depicts a block diagram of a mobile/fixed satellite link.

Figures 43, 44, and 45 disclose the Earth-fixed cell method.

Figure 46 shows a supercell containing 16 cells.

Figure 47 shows satellite footprints, overlaps, and gaps at the equator.

Figure 48 is a flow diagram for processing incoming packets that may be utilized to implement the Earth-fixed cell method.

Figure 49 is perspective view of a satellite that includes a hemispherical array of antenna facets and fully extended rectangular solar panels.

Figure 50 depicts a schematic diagram of the satellite similar to the one illustrated in Figure 49.

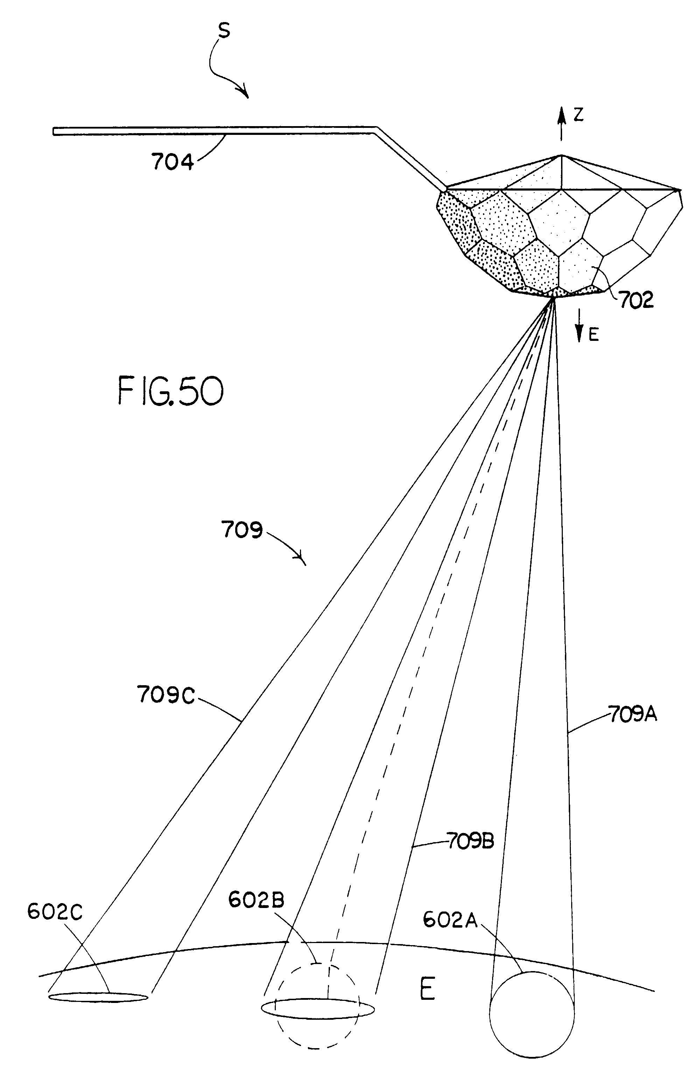

Figure 50 also reveals three sets of electronically steered beams produced by the hexagonal antennas and the circular and elliptical footprints which the beams illuminate on the Earth's surface.

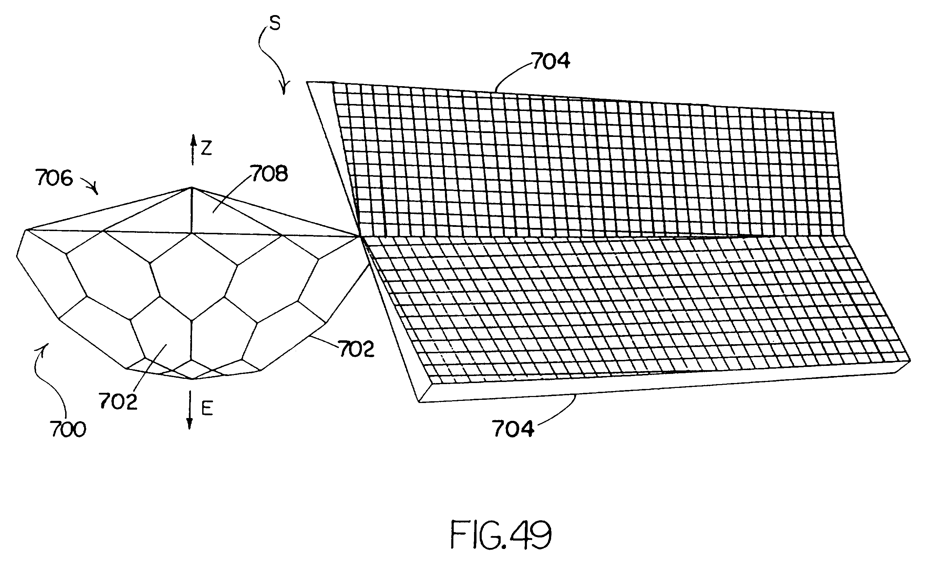

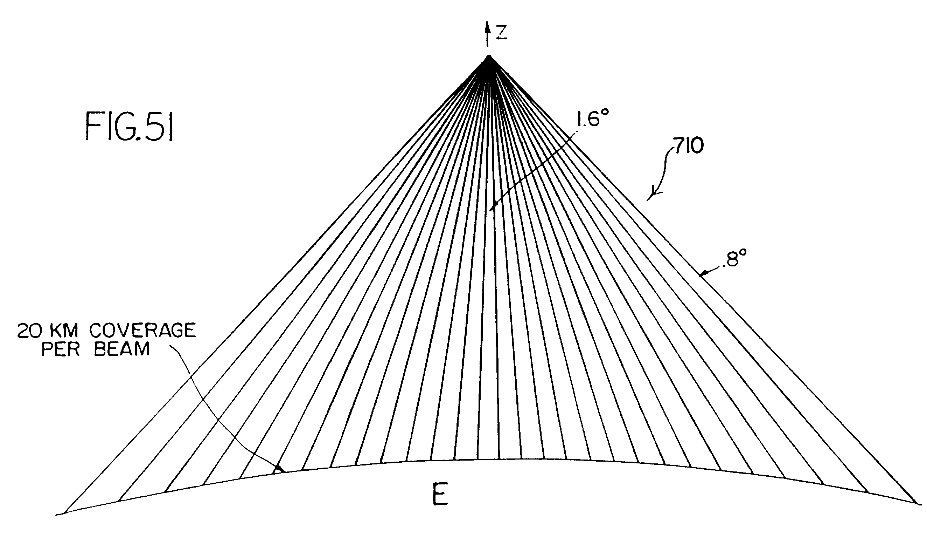

Figure 51 presents a schematic depiction of the pattern of multiple beams generated by the satellite shown in Figures 49 and 50.

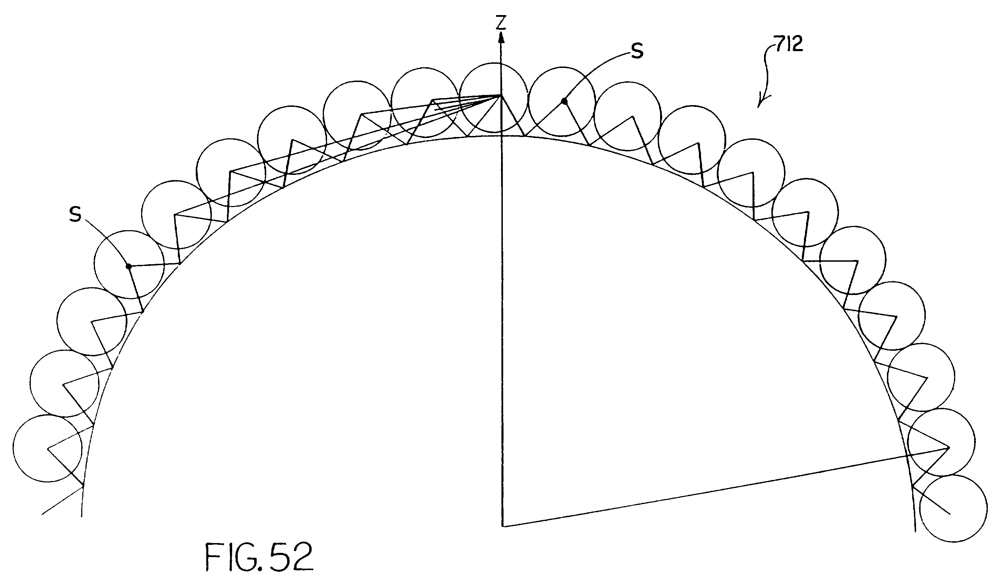

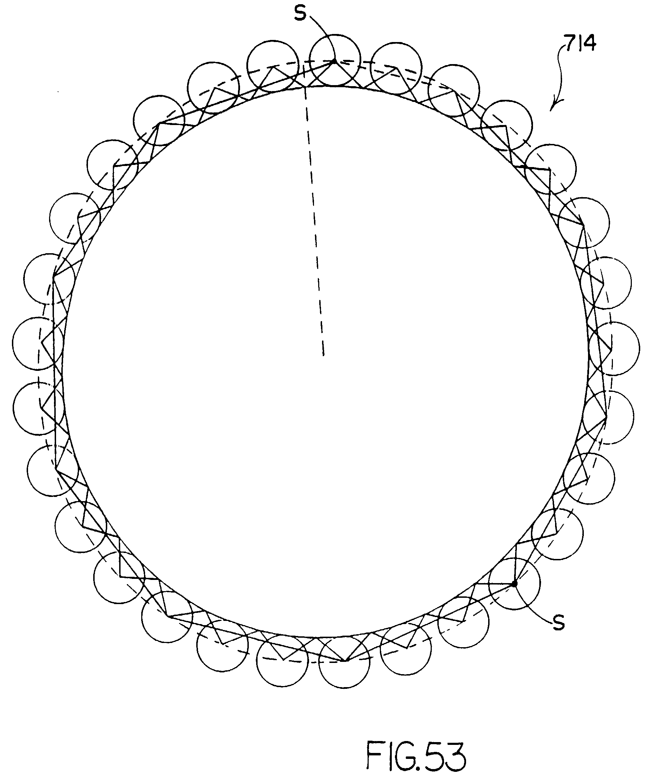

Figures 52 and 53 are plots that reveal the geometric relationship of several spacecraft traveling in one of the many orbital planes in the satellite constellation. The pathways between neighboring satellites that are not occluded by the limb of the Earth provide communication links between spacecraft in the same orbit.

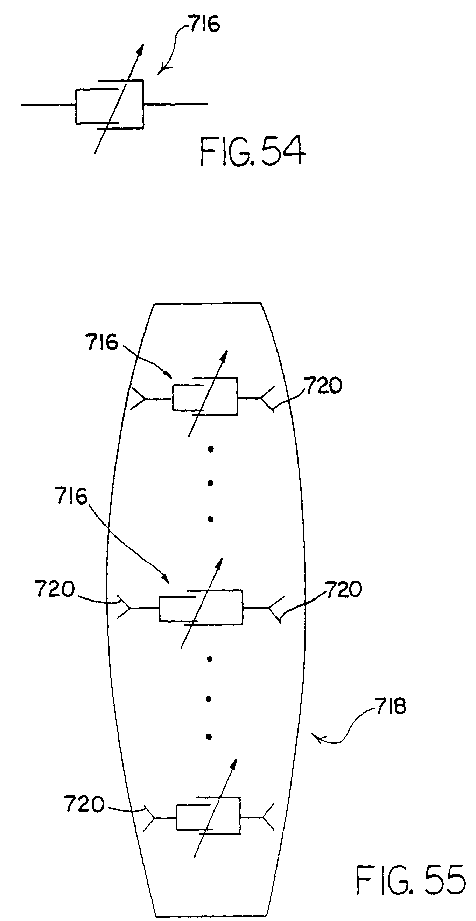

Figure 54 reveals a schematic diagram of a GaAs MMIC time delay network.

Figure 55 shows a schematic of the active lens, which includes a large number of the time delay networks shown in Figure 54.

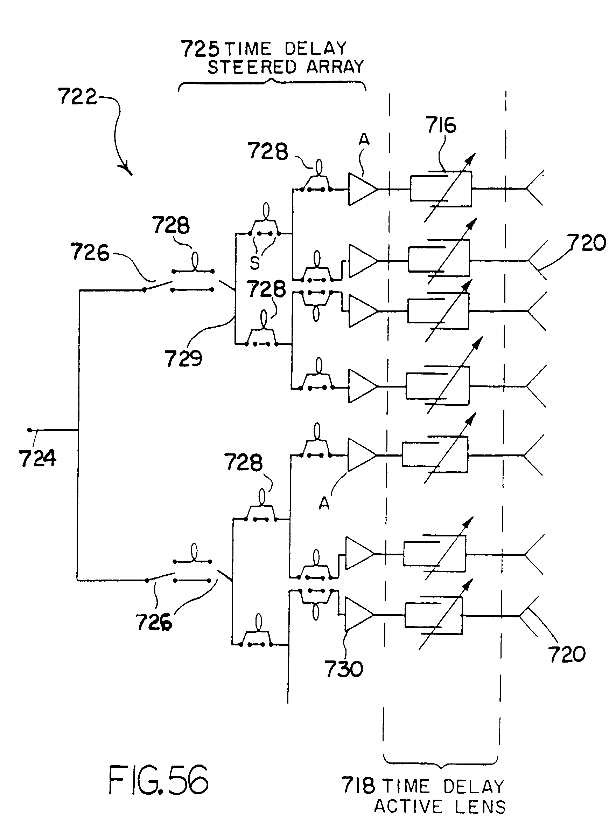

Figure 56 is a schematic illustration of an active lens which incorporates a time delay steered antenna array.

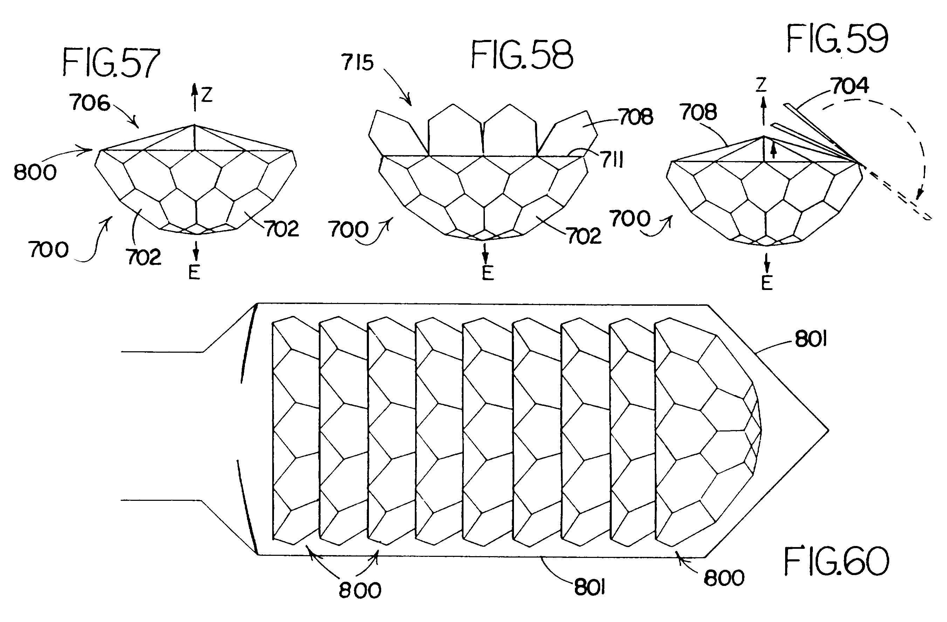

Figure 57 is a side view of the Earth-facing antenna array and space-facing segments of the present invention of an embodiment called "Domesat".

Figure 58 reveals the space-facing segments in an opened configuration, which allows for the deployment of solar panels that are stored within the spacecraft interior during the flight to low Earth orbit.

Figure 59 shows the circular arc depicting the movement of the rolled-up solar panels as they are deployed after orbit has been achieved.

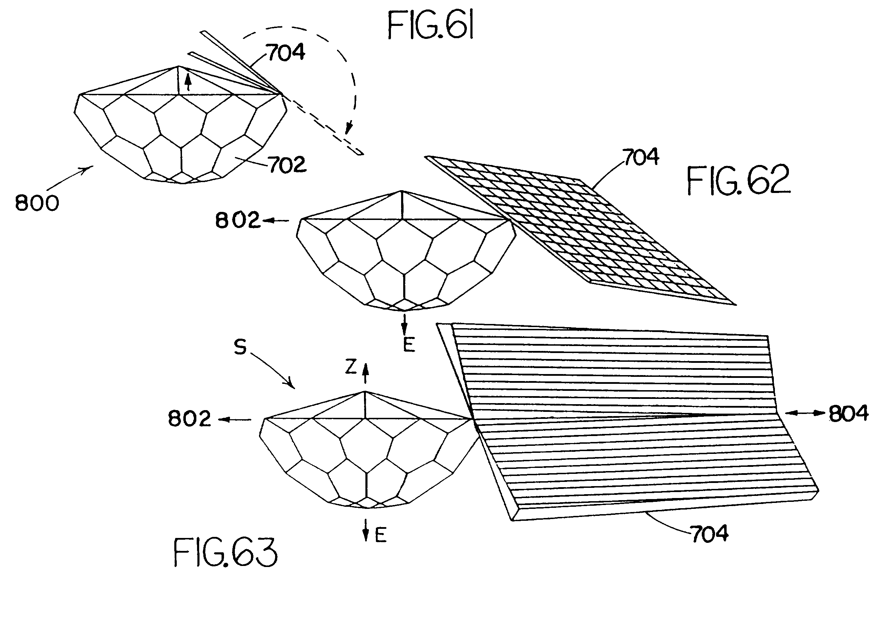

Figure 60 portrays a number of satellites produced in accordance with the present invention stored in a launch vehicle.

Figures 61, 62, and 63 depict the sequential deployment of the solar panels.

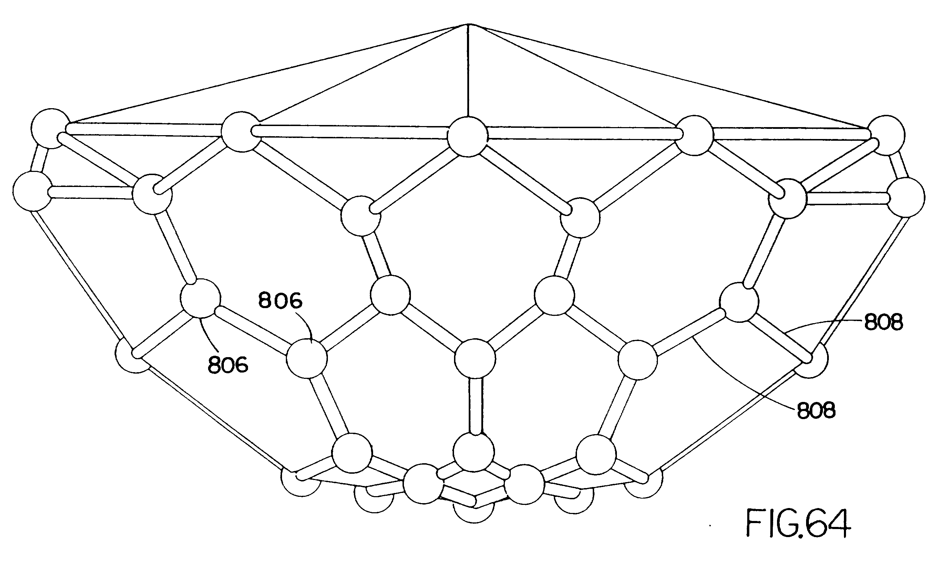

Figure 64 supplies a detailed side view of the tubular and spherical elements which are employed to connect the individual panels of the antenna array.

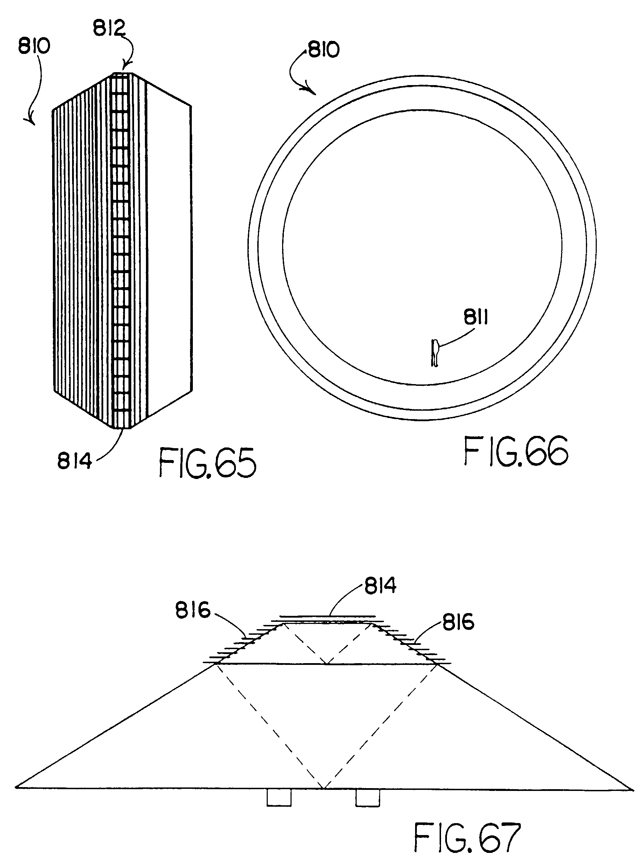

Figures 65, 66, and 67 illustrate three views of an alternative embodiment of the invention called "Gearsat."

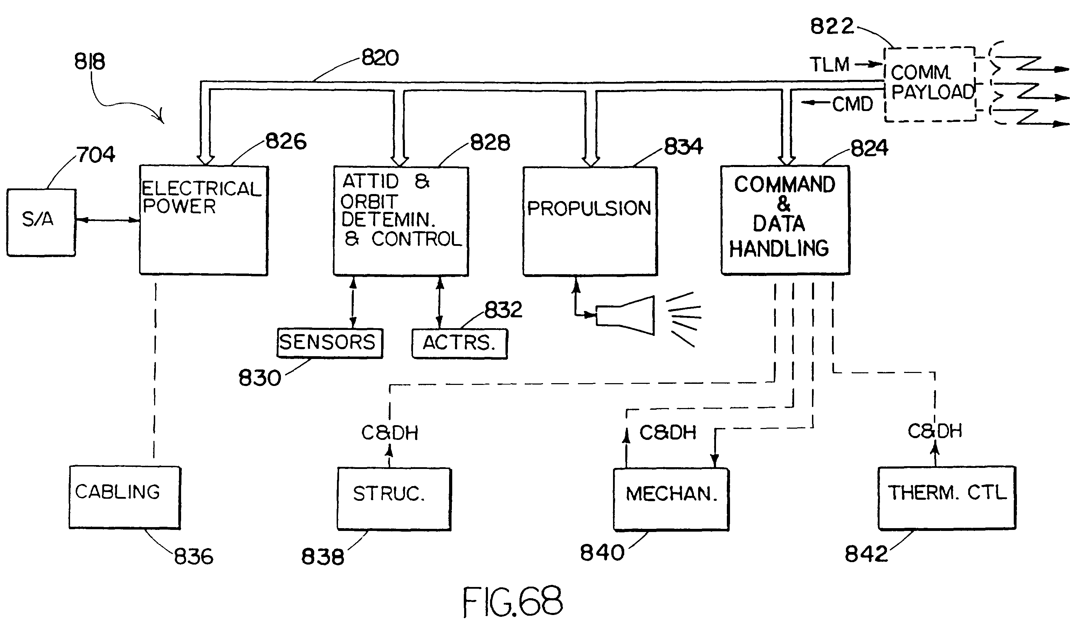

Figures 68, 69, 70, and 71 are schematic diagrams of on-board internal systems that control the satellite and that handle traffic among other satellites and terminals on the ground.

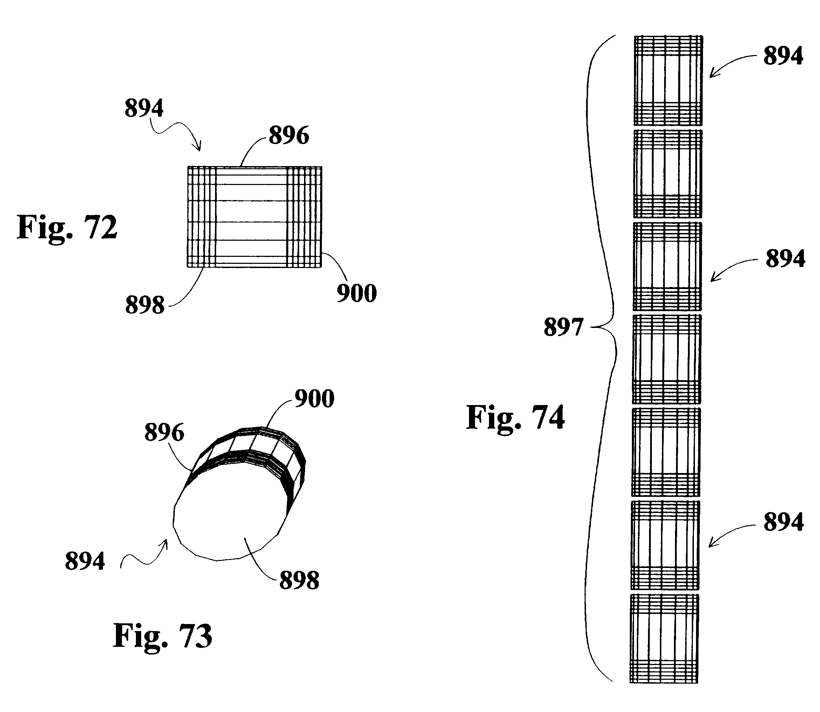

Figures 72, 73, 74, 75, 76, 77, and 78 illustrate an alternative embodiment of spacecraft designs referred to as "Batsat."

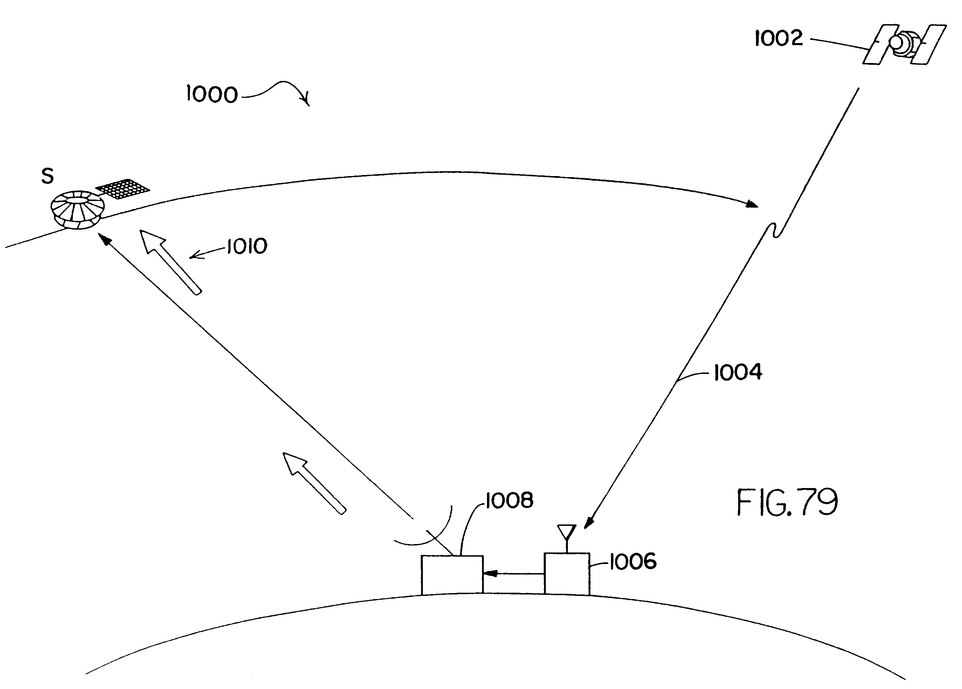

Figure 79 is schematic depiction of a low Earth orbit satellite using transmissions of communications packets from a ground station to compute its orbital position.

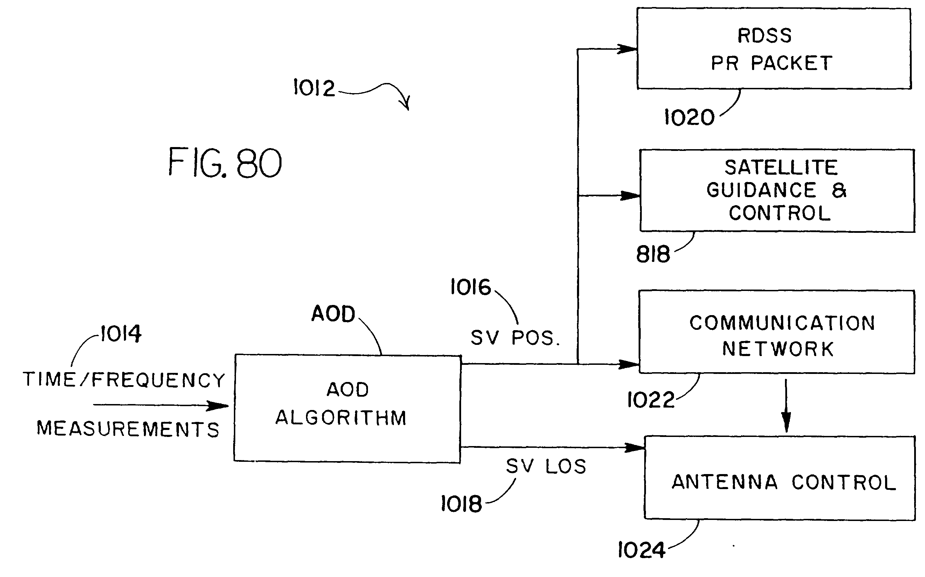

Figure 80 illustrates the autonomous orbit determination algorithm.

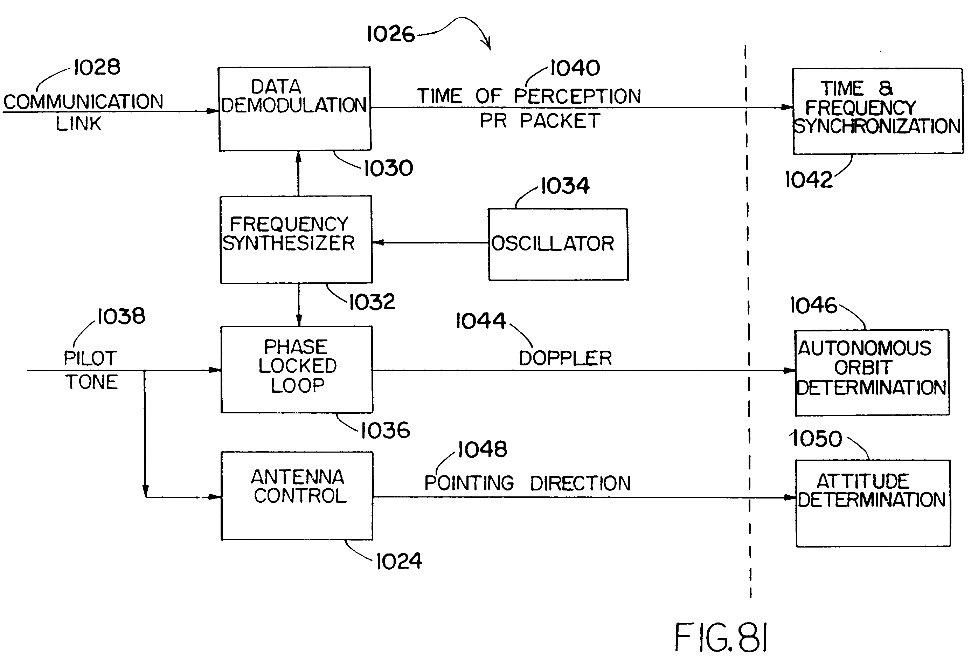

Figure 81 is a block diagram of position determination circuitry.

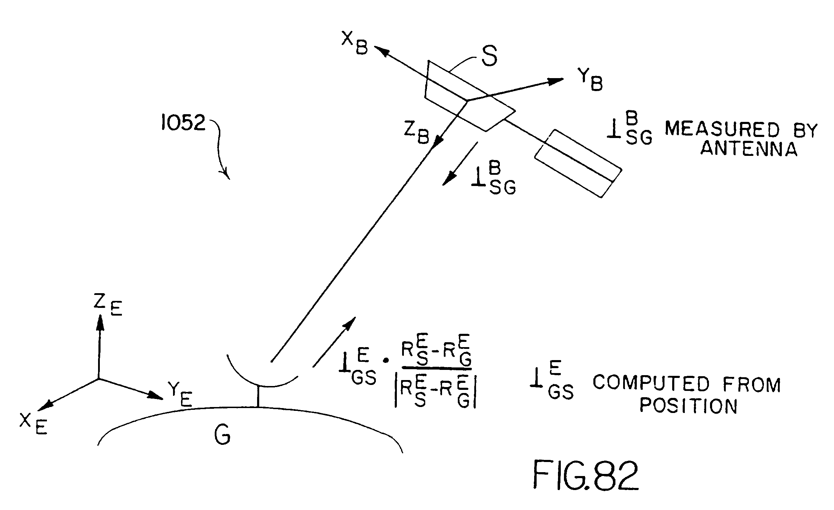

Figure 82 depicts the autonomous attitude determination method.

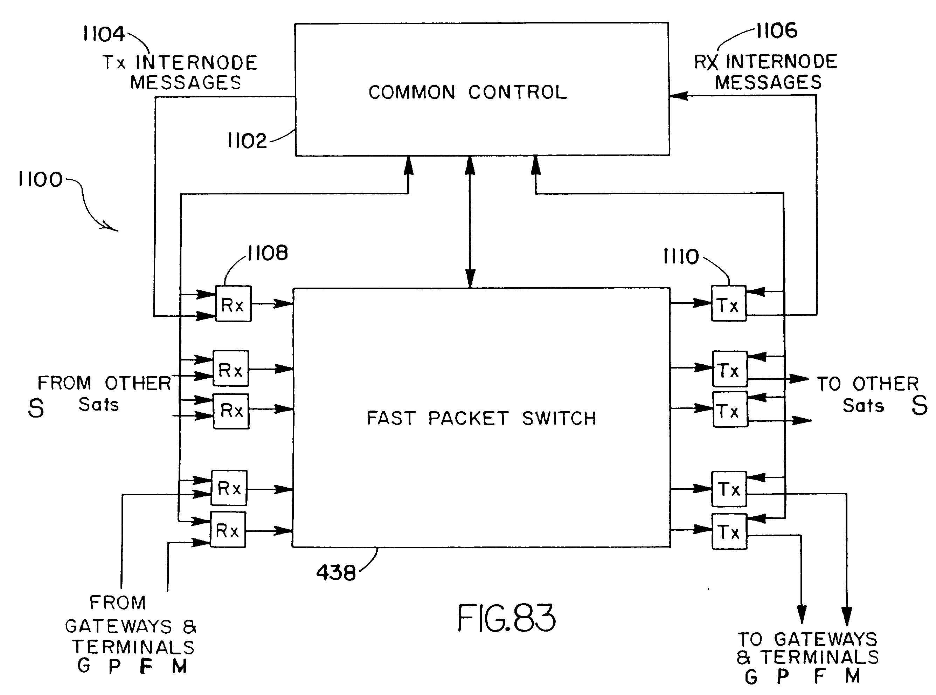

Figure 83 is a schematic diagram of node hardware architecture.

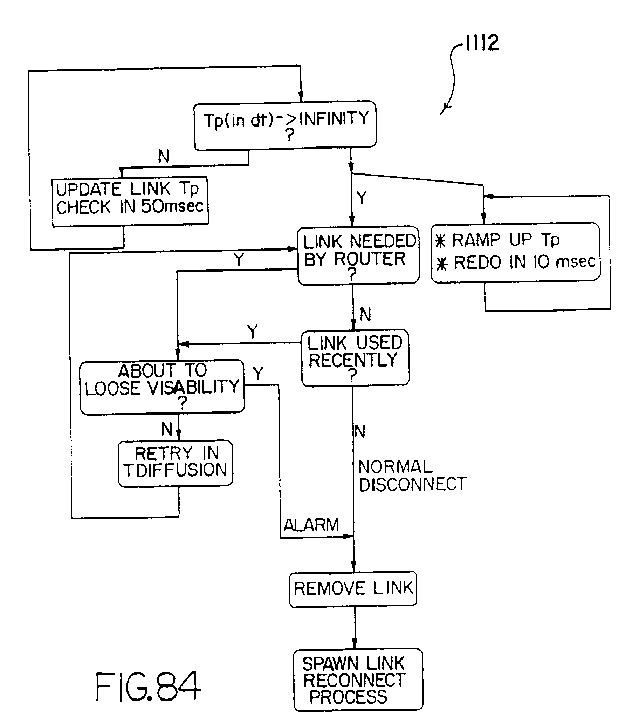

Figure 84 is a schematic diagram of link control.

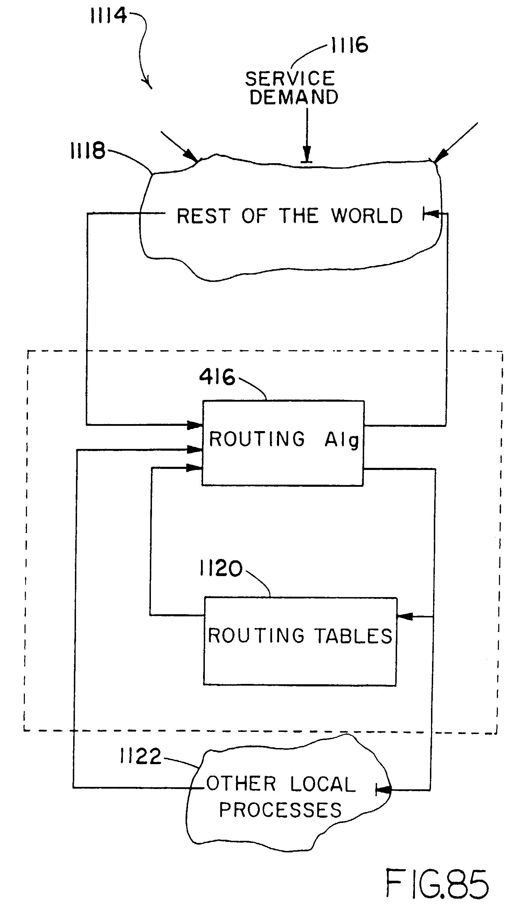

Figure 85 is a schematic diagram of a routing process.

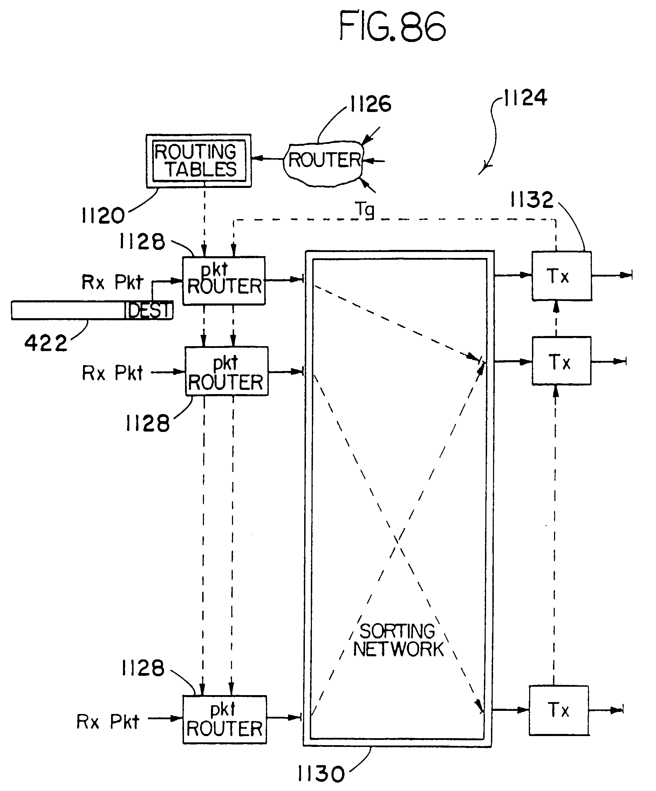

Figure 86 is a flowchart of dynamic packet routing.

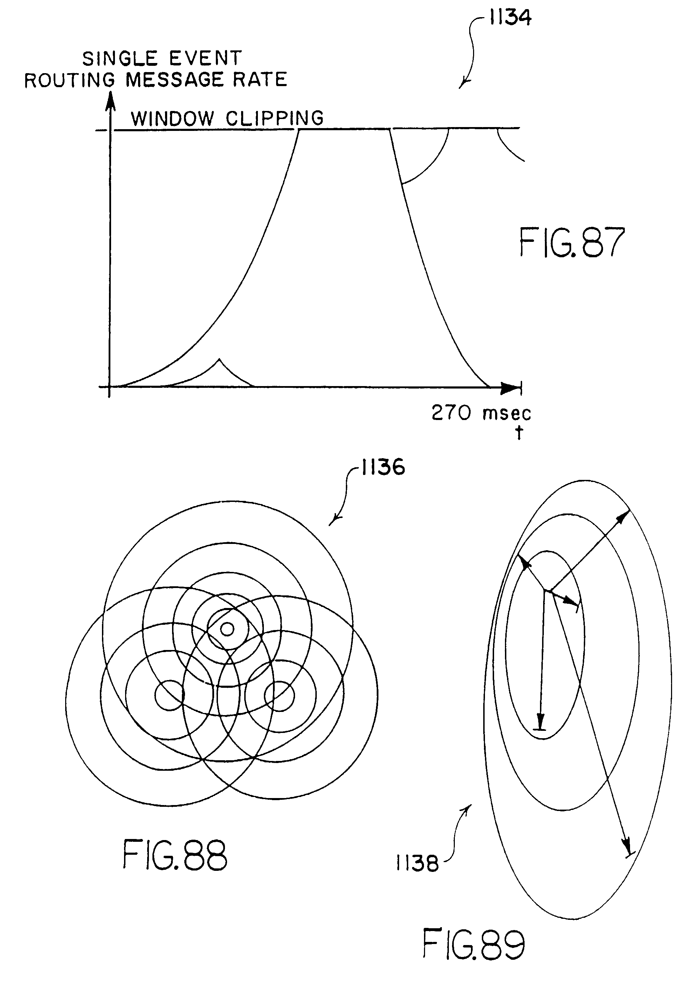

Figures 87, 88, and 89 are schematics that show routing information diffusion rates.

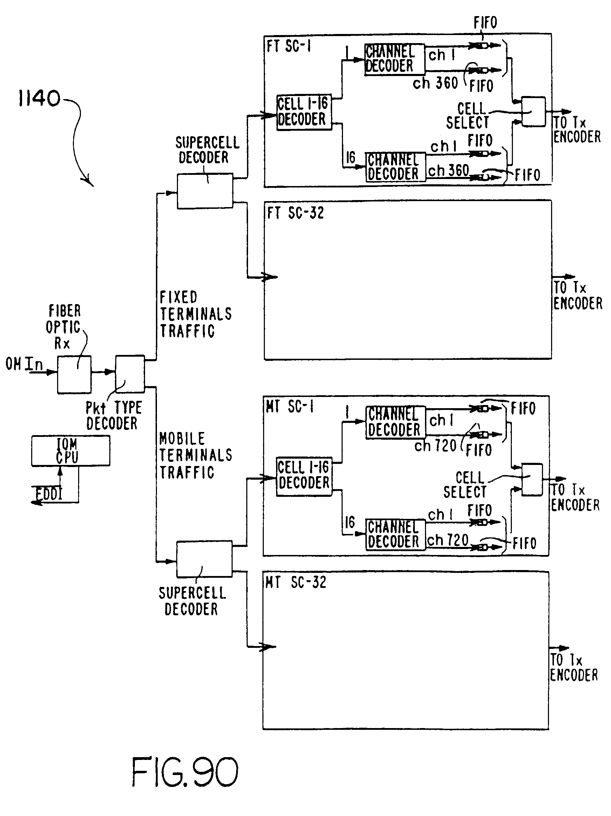

Figure 90 is a schematic diagram of an output module.

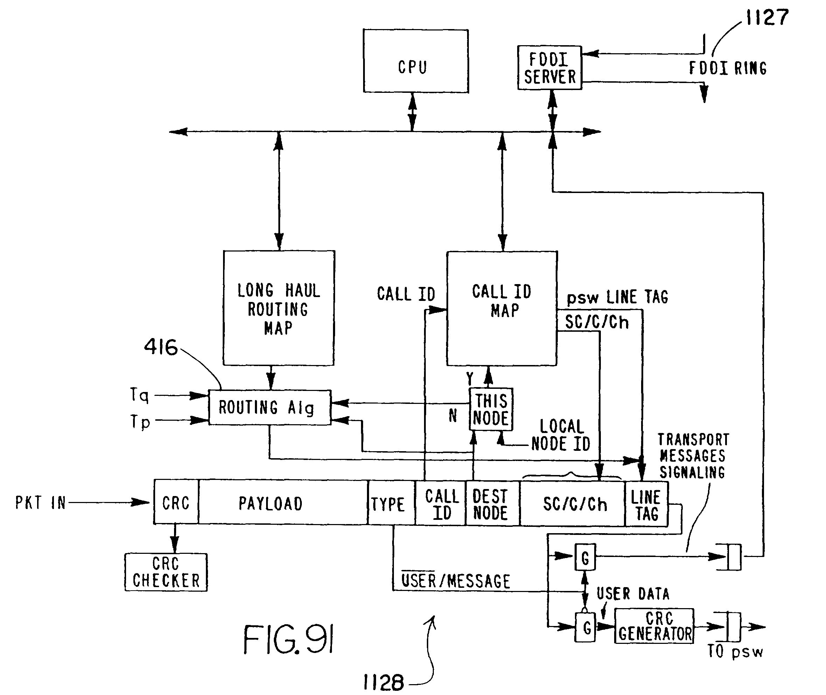

Figure 91 is a schematic diagram of a packet router.

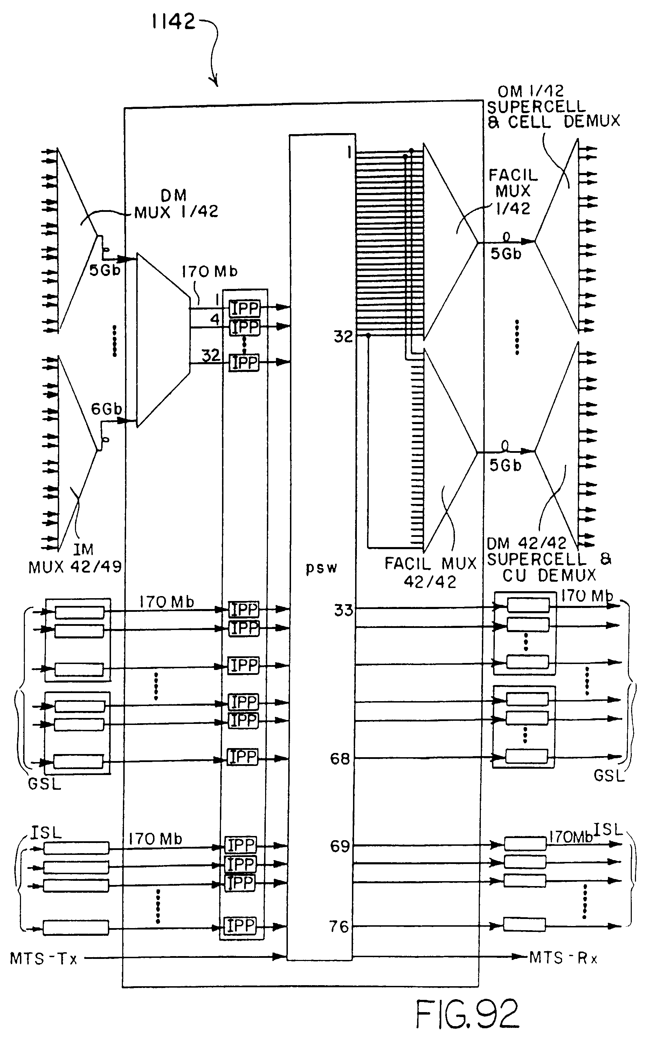

Figure 92 is a schematic diagram of switching architecture.

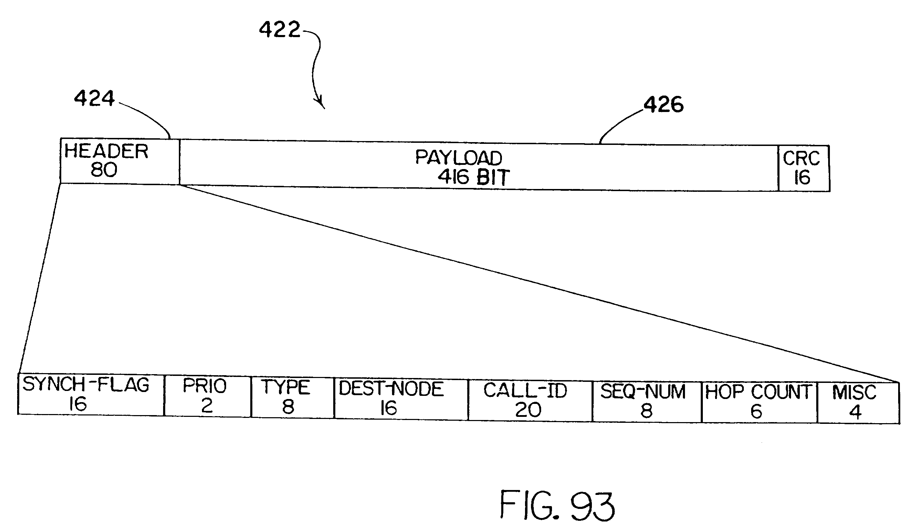

Figure 93 is another schematic diagram of a packet structure.

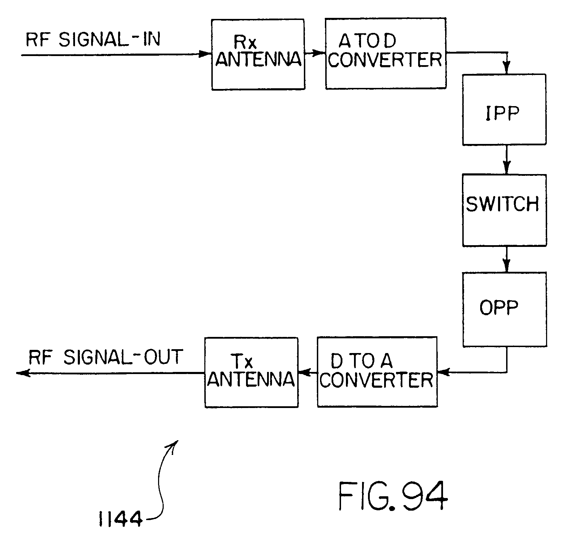

Figure 94 is a schematic diagram illustrating signal flow.

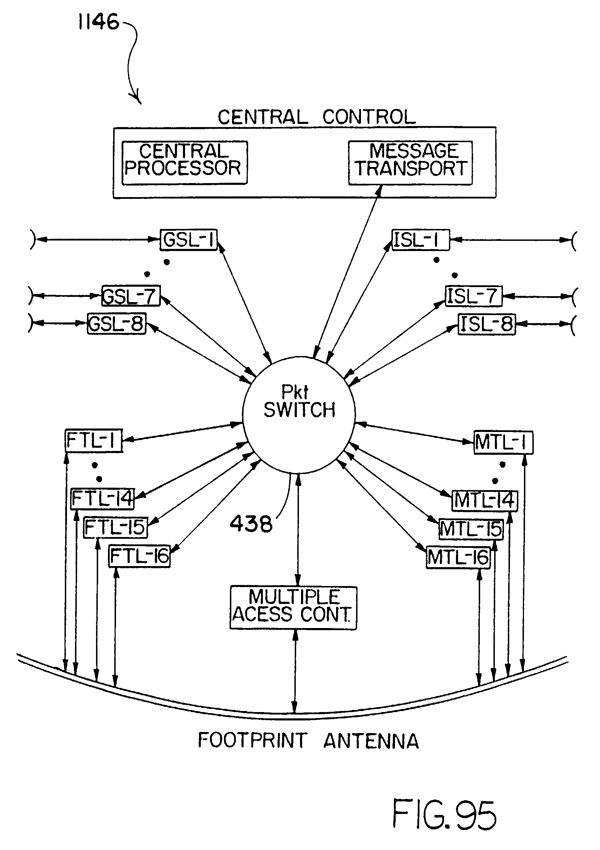

Figure 95 is a schematic diagram which discloses system architecture.

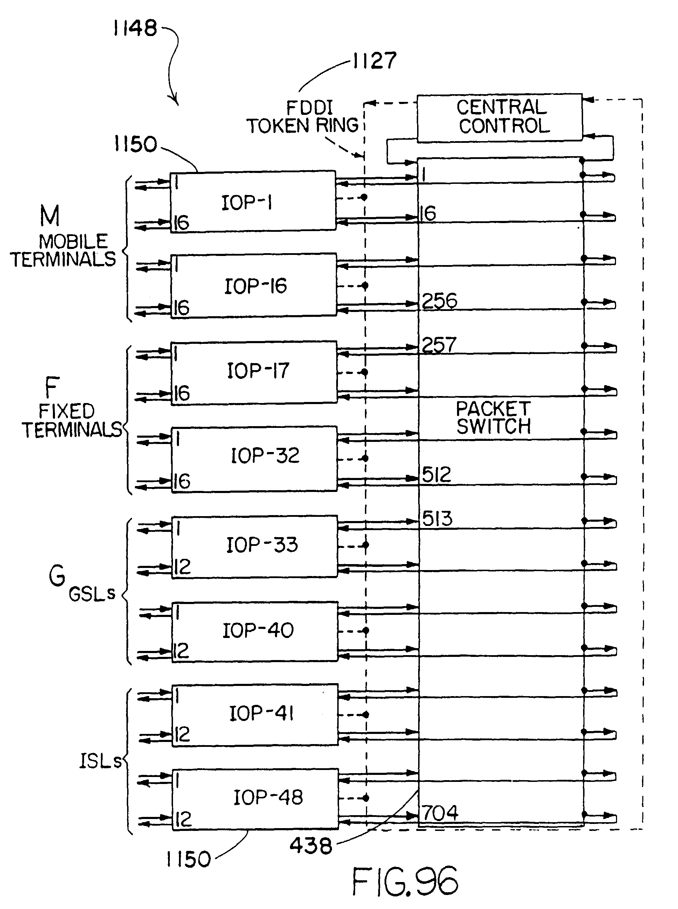

Figure 96 is a schematic diagram of a packet switch and input output processors in a token ring.

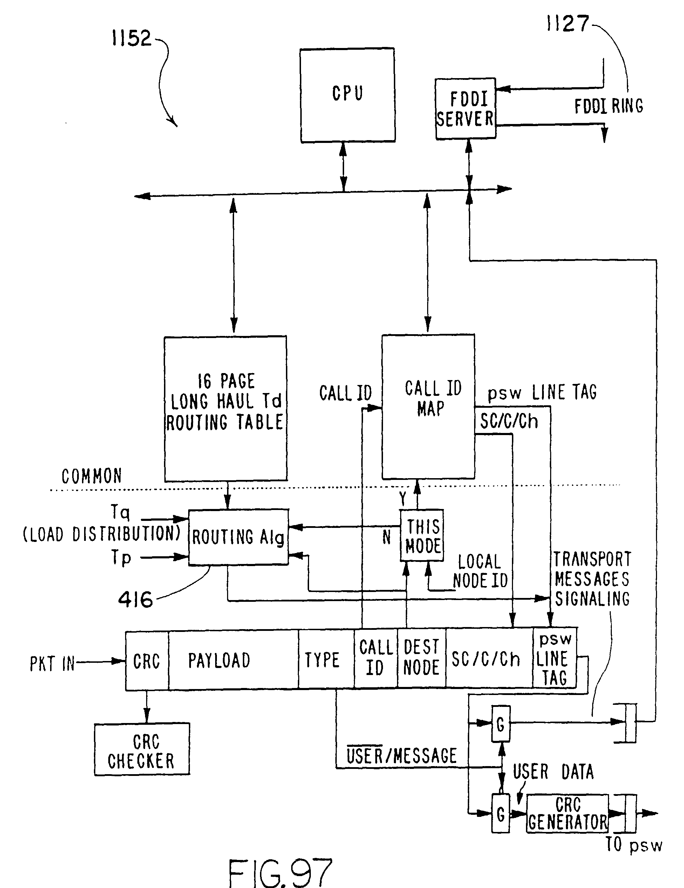

Figure 97 is another schematic diagram of an input packet processor.

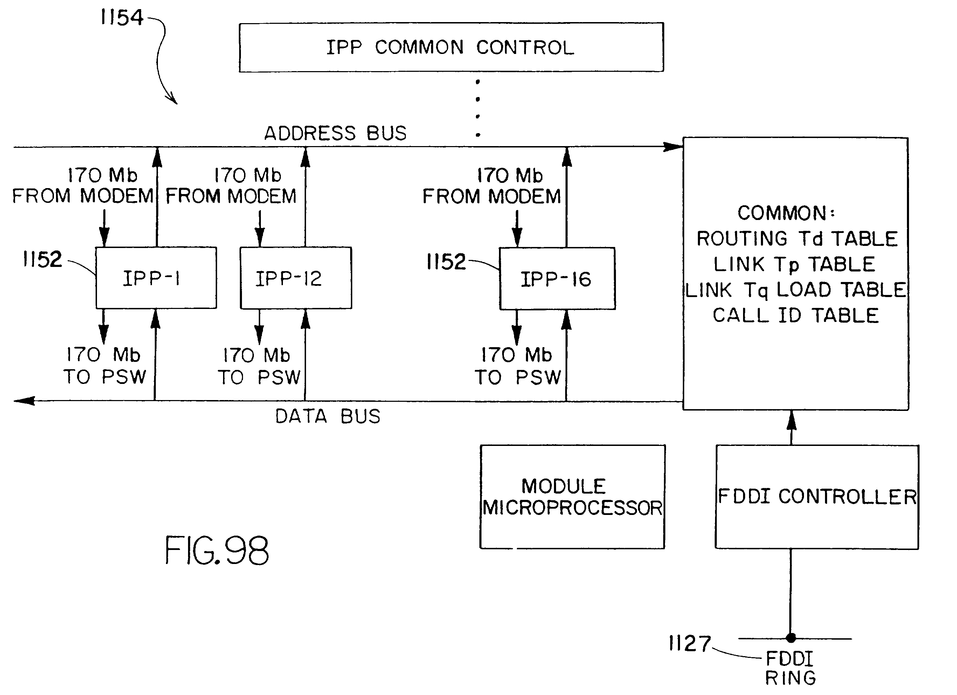

Figure 98 is a schematic diagram showing IPP common control.

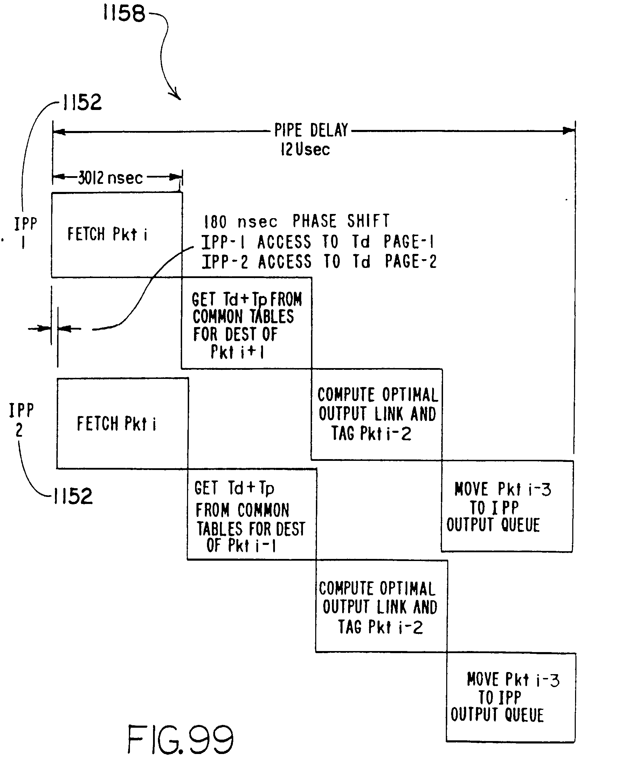

Figure 99 is a schematic diagram of an IPP 4-stage pipeline.

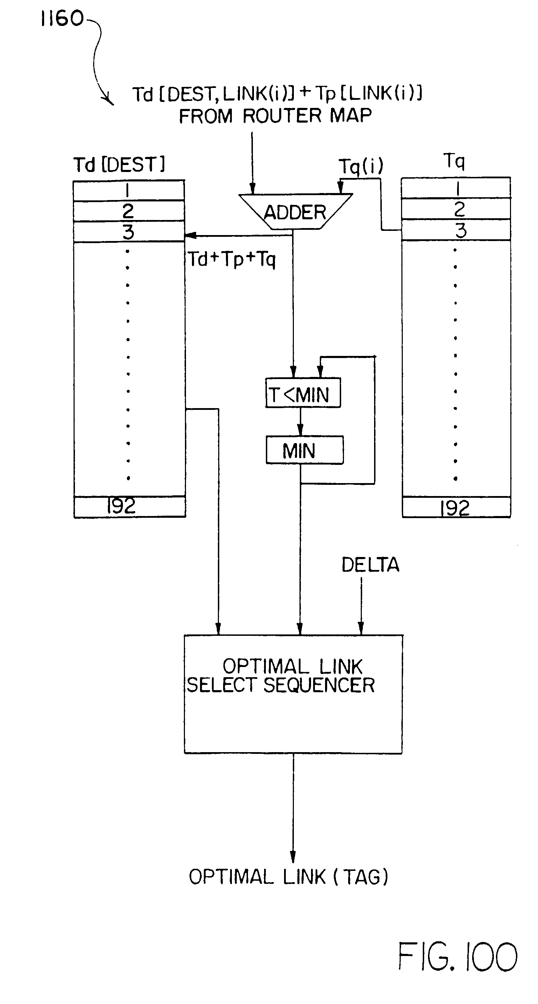

Figure 100 is a schematic diagram of an IPP optimal route controller.

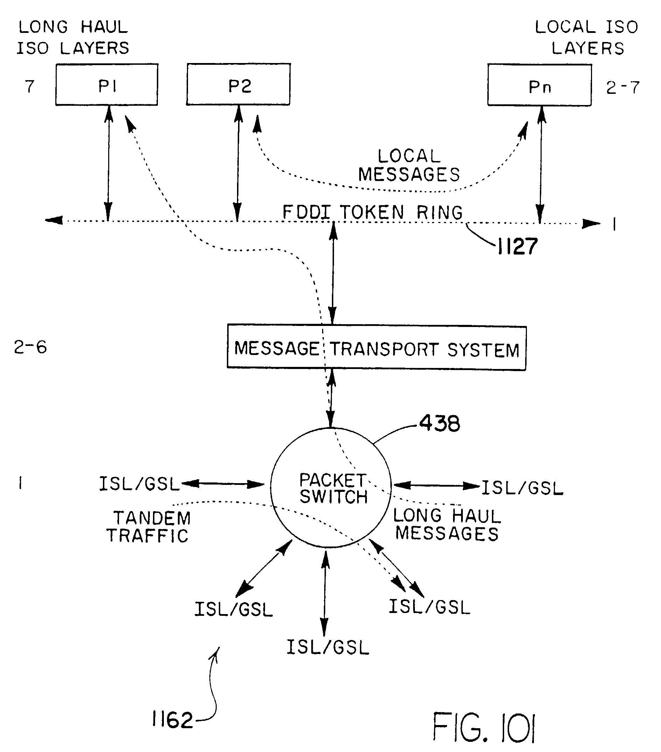

Figure 101 is a schematic diagram that portrays a message communication.

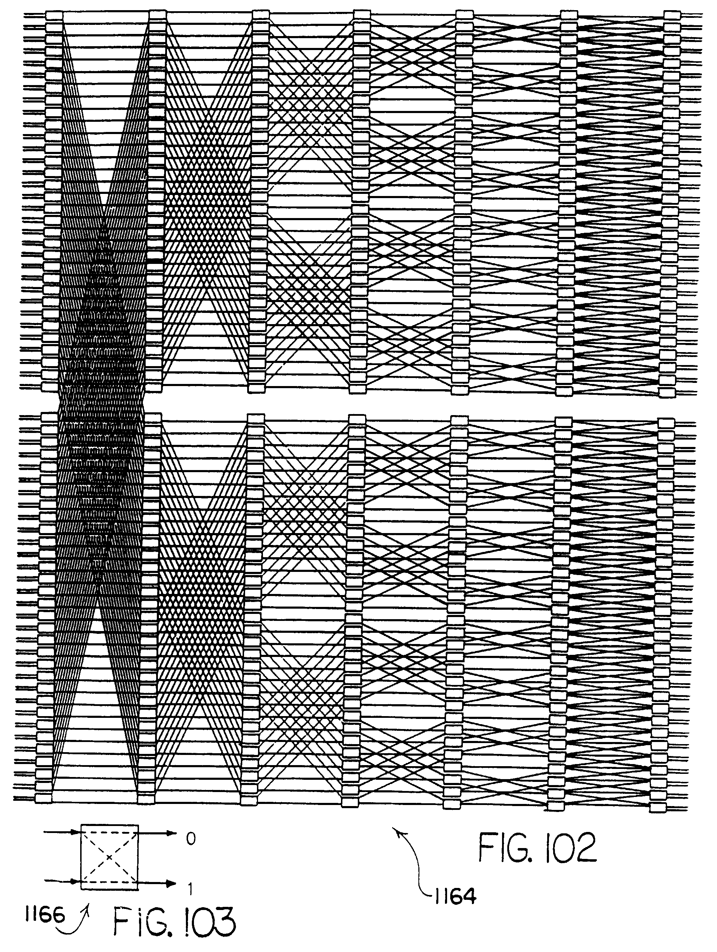

Figure 102 is another schematic diagram of a 128 by 128 switch.

Figure 103 is a schematic diagram of a switching cell.

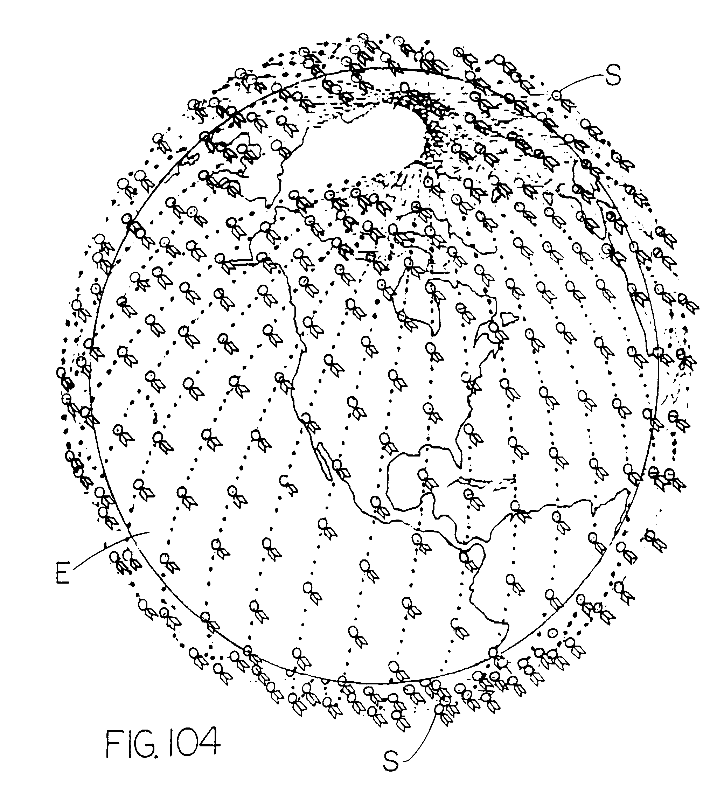

Figure 104 is a conceptual view of the satellite constellation orbiting the Earth.

*BEST MODE FOR CARRYING OUT THE INVENTION*

*Summary of the Invention*

The Satellite Communication System disclosed and claimed in this patent application overcomes the limits that circumscribe the performance and potential of existing telephone systems. The present invention is capable of offering continuous voice, data and video service to customers across the globe on the land, on the sea, or in the air. Instead of merely improving upon or expanding existing land-based systems, the present invention bypasses centralized terrestrial switching hardware by placing all the intelligence of the network in orbit. Unlike conventional hierarchical systems, which are linked together by a complex web of wires, cables, glass fibers, and microwave repeaters that are very expensive to build and maintain, the present invention liberates the true communications potential of existing land-based networks by routing signals through spacecraft in low Earth orbit.

The essence of the system disclosed in this application is a dynamic constellation of satellites. Each satellite functions as a communications node of equal rank and importance that is linked to its nearest neighbors. The topology of the constellation resembles a geodesic dome, which offers several advantages over the topology of conventional networks. In previous systems, some call traffic is diverted through distant nodes when the most direct routes between the origin and destination of a call are completely saturated with traffic. These lengthy diversions greatly impair the quality of the connection by introducing time delays, echoes, and additional noise. In the geodesic network of the present invention, such a low-quality diversion becomes unnecessary, since a parallel route can be found which only increases delays by a relatively small amount.

The novel constellation of satellites not only offers a graceful response to overloads by minimizing deleterious diversions of traffic, but also eliminates the devastating consequences of the failure of a node. In current systems, when a node fails, service for entire sections of the network is disrupted. In dramatic contrast, the failure of a node in a geodesic system can be compensated by simply removing the inoperative satellite from the network. Adjacent spacecraft in the web then share the workload of their disabled neighbor until it can be repaired or replaced.

The preferred embodiment of the invention comprises a low Earth orbit satellite system that includes 40 spacecraft traveling in each of 21 orbital planes at an altitude of 700km (435 miles). This relatively large number of satellites in the constellation was selected to provide continuous coverage of the Earth's surface at high angles of radiation with respect to the Earth's surface, thus avoiding foliage, terrain, and minimizing the length of the signal's passage through rain. Each of the individual 840 spacecraft functions as a sovereign switch which knows the position of its neighbors, and independently handles traffic without ground control. The satellites are capable of transporting calls to millions of customers using portable, mobile and fixed residential and business terminals, and gateways to public phone networks. The constellation uses the 20 and 30 GHz frequency bands for communications between Earth and the constellation, and the 60 GHz band for communicating among the satellites. The use of these extremely high frequencies allows for the use of relatively low power, miniaturized antenna components both on the ground and aboard the satellites. The entire constellation is designed to serve over twenty million subscribers and 60,000 full time DS-0 (64kbps) circuits. The satellites will be coupled to traditional public and private phone systems on the ground through gateways which each utilize relatively large antennas and handle large volumes of call traffic. In the preferred embodiment of the invention, this interface between the terrestrial systems gateway and the terrestrial network is based on current standard ISDN interfaces to preserve compatibility.

Unlike presently available cellular systems which relay calls to subscribers from local radio towers, the present invention offers direct communication between the satellites of the constellation and individuals using lightweight portable, mobile and fixed telephones. This direct link is made possible by innovative miniature antennas coupled to hand-held phones. The antennas can be integrally formed as part of the housing of portable phones or may be used as separate components mounted on the outside of a vehicle. They are designed to communicate with satellites that are more than forty degrees above the user's horizon so that interference and shadowing caused by terrain and nearby buildings is substantially eliminated. The handheld antennas comprise multi-element, electronically steerable phased arrays that measure only a few inches in diameter and are less than two inches (5.1 cm) high. While the signals from these antennas are sufficiently powerful to provide dependable service virtually anywhere on land, sea or in the air, the radiated power is low enough to insure that the telephone does not pose significant radiation hazards.

One of the preferred embodiments of the invention includes a faceted, high-gain, antenna array on each satellite. This electronically steered array is formed from a number of flat antenna panels which are fabricated from ultra-lightweight honeycomb materials and advanced composites. The interior of the dome-shaped antenna array contains electronic equipment and batteries, and is used to store solar cell panels which unfurl when the spacecraft reaches its final orbit. Each panel contains a large number of gallium-arsenide (GaAs) monolithic microwave integrated circuits (MMIC) which comprise its antenna array elements, power amplifiers and low-noise receiver pre-amplifiers. The cup-like shape of the satellite allows several satellites to be nested in a compact arrangement that fits within the payload bay of a launch vehicle. Each antenna array simultaneously generates 256 beams which are electronically steered to 4,096 positions on the surface of the Earth. Each individual beam illuminates a region on the ground called a "cell" that measures roughly 400 (20 x 20) square kilometers. Since the cells are small and the satellite moves rapidly over the Earth's surface, a system in which the cells were fixed relative to the satellite would cause a terminal to be "handed-off" from cell to cell every few seconds. To avoid this, an innovative logical/physical cell mapping scheme is utilized to create "Earth-fixed cells" which enhances the efficiency of the system and eliminates click noise during telephone calls that might result from a constant series of handoffs between satellites.

The present invention also incorporates novel software which runs on a processor onboard each satellite in the network. Autonomous Orbit Determination (AOD) algorithms provide each spacecraft with location information about its own position and the position of every other satellite in the network. This position information is used to determine the optimum pathway for routing call traffic among the satellites in the constellation. These data are also used to maintain each spacecraft in its proper orbital position, to steer antennas that receive and transmit signals from neighboring satellites, and may be used to offer Radio Determination Satellite Service (RDSS) which is superior to service currently available from the Global Positioning Systems (GPS) service. One embodiment of the AOD software employs a ranging algorithm that calculates distances between spacecraft or between spacecraft and ground stations by measuring time delays that are inherent in the radio transmissions conveyed by the network. A second embodiment of the AOD software incorporates an algorithm which fixes spacecraft position by measuring the Doppler shifts of satellite or ground station transmissions. The AOD software also determines the attitude of the spacecraft using data from the antenna steering function. A third embodiment uses signals from known, fixed location ground terminals to determine both satellite location and attitude with great accuracy.

The AOD software generates position information that is used by a second computer program that utilizes a novel Adaptive Routing Algorithm (ARA). Like the AOD software, the ARA runs continuously on a processor on board each satellite. The output produced by the AOD program enables the ARA software to monitor the constantly-changing topology of the constellation. The ARA is also responsible for keeping track of the flow of call traffic through the nodes and links of the constellation and to compensate for traffic congestion and node failures.

Each satellite carries fast packet switch circuitry to direct calls among other satellites and to customers on Earth using portable, mobile and fixed terminals. The voice, data and video information within the telephone calls is arranged in a digital format called a "packet." A single call may include thousands, millions, or even billions of packets. The packets comprise a sequence of several hundred ones and zeroes, and are divided into two general groups or strings of bits: the first called a "header," the second referred to as a "payload." The header includes the address of the destination of the packet, while the payload contains the digitized substance of the call itself. The present invention utilizes a "datagram" approach that routes every packet conveyed by the system independently at every node in the network. The packets are directed along an optimized pathway through the network by a fast packet switch that directs traffic based on instructions from the processor that continuously runs the Adaptive Routing Algorithm. The innovative switching methods employed by the fast packet switch present on each satellite optimize the utilization of the network facilities and minimize transmission delays.

The present invention will not only supply an enormous expansion of telephone capacity, but will also offer a broad range of services that will meet rising world demand in the next century. By liberating conventional land-based systems from the tyranny of hierarchical and centralized switching facilities on the ground, the Satellite Communication System will revolutionize the telecommunications industry.

*System Overview & Architecture*

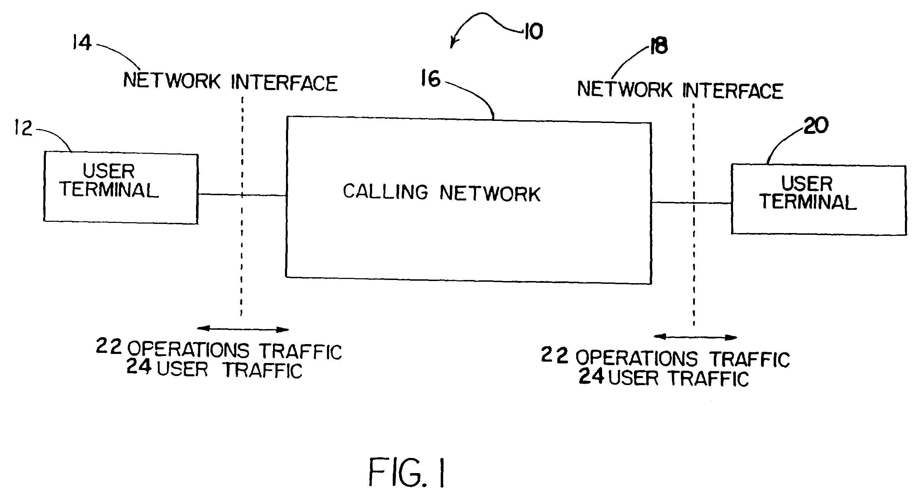

Figure 1 is a conceptual block diagram which outlines the fundamental architecture of one of the preferred embodiments of the present invention. The end-to-end network model 10 shown in Figure 1 extends from a first generalized user terminal 12, and includes a first network interface 14, the "Calling Network" 16, a second network interface 18 and a second generalized user terminal 20. This system 10 comprises a fast packet network having only a single interface to and from the network which transports two general kinds of messages. These two types of messages are Operations Traffic 22 and User Traffic 24. This architectural configuration contrasts with earlier conventional networks which incorporate separate interfaces and networks for signaling and call handling. The user terminals 12 and 20 depicted in Figure 1 are generalized terminals that define a particular communications pathway through the system 10. The entire communication system 10 is designed to serve many millions or even billions of terminals.

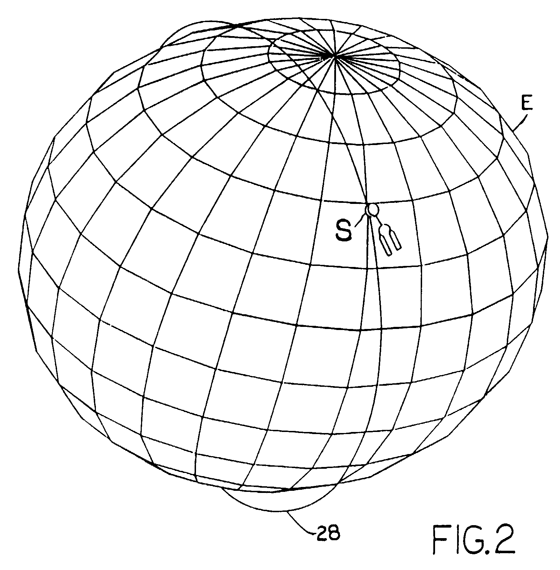

Figure 2 is a schematic depiction of a single satellite (S) of the constellation operating in one of the twenty-one orbits 28 that circle the Earth (E). A conceptual view of a more densely populated constellation (C) is shown orbiting the Earth in Figure 104.

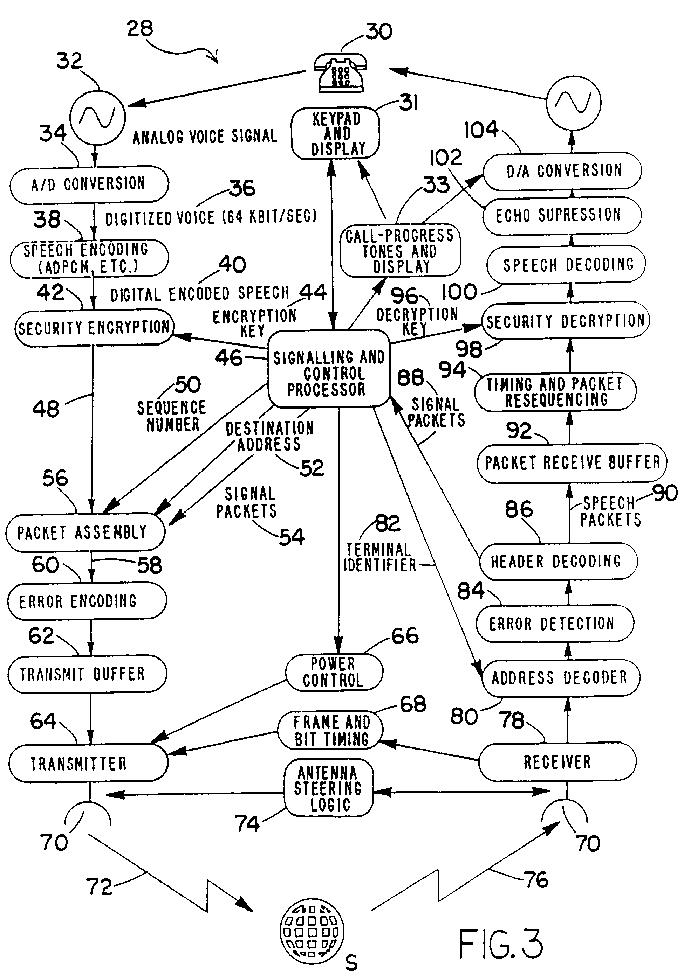

Figure 3 presents functional blocks that each provide specialized signal processing. The components portrayed in Figure 3 may reside in a hand-held personal phone (P), a mobile phone (M), fixed phone (F), or may be located at a gateway (G). Each of these blocks occupies a particular position along a communications pathway that extends up to one or more satellites S via an antenna, and then back down through the antenna to the terminal 30.

Although this network 28 is capable of conveying virtually any form of information, including audio, video or data signals, Figure 3 emphasizes a telephone call in which voices from either end of the call are transmitted through the network. The user gains access to the network by using the keypad and display 31 on terminal 30. Tones and text appearing on display 31 that help guide the user through the access procedure are generated by circuitry in stage 33. Once the call is established, the user's voice, which is represented in the drawing as an analog voice signal 32, is processed by an Analog-to-Digital "A/D" Converter 34. The digitized output 36 produced by converter 34 is a stream of ones and zeroes which are generated at the rate of 64,000 bits per second (KBIT/sec). The digital signal 36 is then processed by a speech encoder 38, yielding digital encoded speech 40. To protect telephone calls from eavesdroppers, the signal is then passed to encryption equipment 42, which utilizes an encryption key 44 from a signalling and control processor 46. Encrypted output 48 is then combined with sequence numbers 50, destination addresses 52, and signal packets 54 generated by processor 46. All these signals are merged together by a packet assembler 56 that composes packets 58. An error encoder 60 adds information to the packets 58 which enables the packets 58 to be checked for transmission-induced errors farther downstream. The packets 58 that are ready to be transported wait in a transmit buffer 62. In the last processing stage associated with the uplink portion of the journey, packets 58 are forwarded to transmitter 64, which is coupled to power control circuitry 66 and frame and bit timing circuitry 68. Finally, radio signals 72 are emitted from an antenna 70 which may be controlled by steering logic circuits 74.

Signals 76 dispatched from a satellite S may be sensed by the same antenna 70, and are processed by a receiver 78 and an address decoder 80, which receives terminal identifier information 82 from the signalling and control processor 46. After any errors have been discovered by an error detector 84, the header portion of the packet is read by header decoding stage 86. Once the headers are decoded, signal packets 88 are sent to signalling and control processor 46, and speech packets 90, which carry the voice "cargo," are passed to a packet receive buffer 92. These packets 90 are resequenced at stage 94 and decrypted using key 96 at stage 98. At this point, the digital signal undergoes speech decoding 100, echo suppression 102, and is reconstituted as an analog signal at converter 104 that may be perceived by the user at terminal 30.

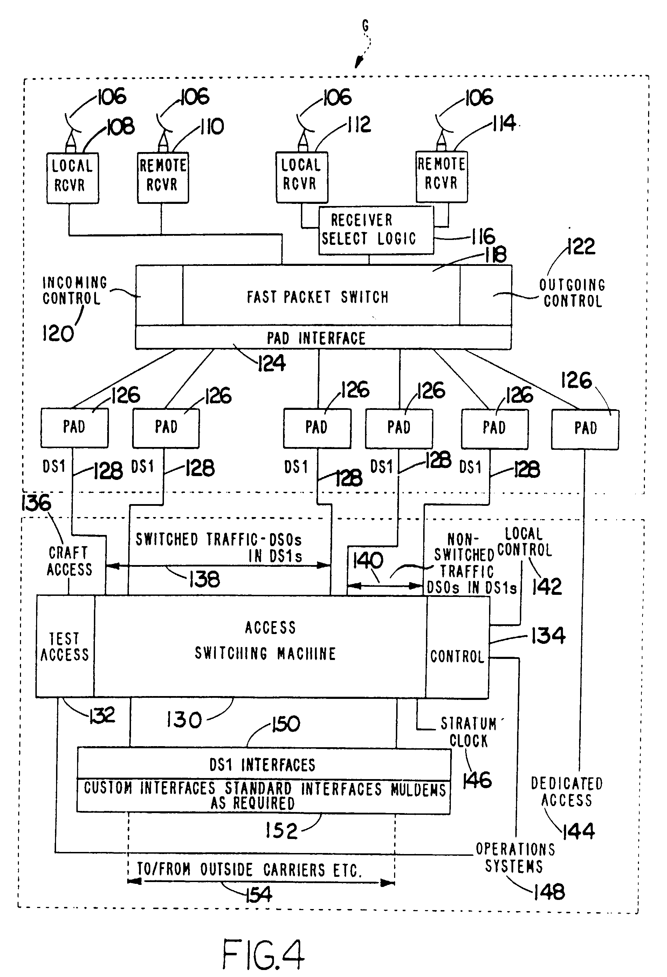

Figure 4 presents a block diagram of an earth station or gateway G. The gateway G includes antennas 106 which convey signals to local and remote receivers 108 and 110. These antennas 106 are capable of communicating directly with the satellites S in the network. One group of local and remote receivers 108 and 110 are coupled directly to a fast packet switch 118, while another group 112 and 114 are coupled to the fast packet switch 118 through receiver select logic 116. The fast packet switch 118 includes incoming control circuitry 120, outgoing control circuitry 122 and a Packet Assembly and Disassembly interface 124. A series of Packet Assembly and Disassembly (PAD) stages 126 connect the fast packet switch 118 to an access switching machine 130 via DS-1 links 128. The access switching machine 130 comprises test access circuitry 132, which includes a link for spacecraft access 136, control circuitry 134, and a clock 146. Both switched and unswitched traffic 138 and 140 is carried over DS-0 links that are, in turn, conveyed by larger DS-1 links. Local control of the access switching machine 130 in gateway G is maintained over link 142. Dedicated access to one of the PADs 126 is supplied via link 144. Outside telephone carriers 154 are coupled to the access switching machine 130 through operating systems 148, DS-1 interfaces 150, and custom or standard interfaces 152.

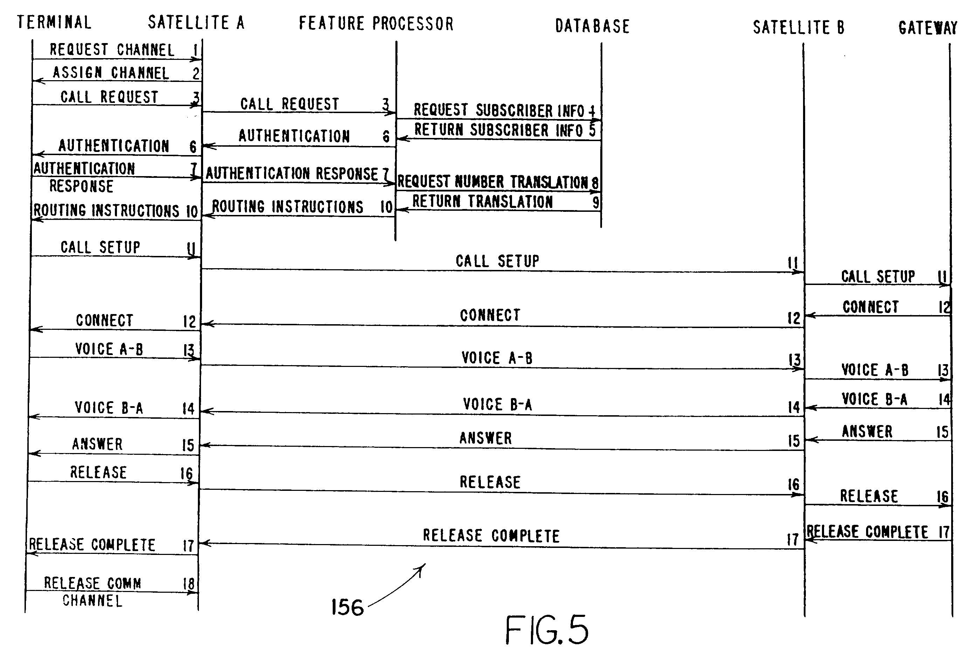

Figure 5 presents a "ping-pong" diagram 156 that portrays the sequence of events that occur when a call is placed between a terminal and a land line. Different portions of the diagram show steps which occur at the terminal and in various satellites and gateways. The chart reveals a sequence of events in which a terminal first requests and is then assigned a communications channel. After subscriber information is authenticated, a call is configured or "setup", and eventually terminated or "released".

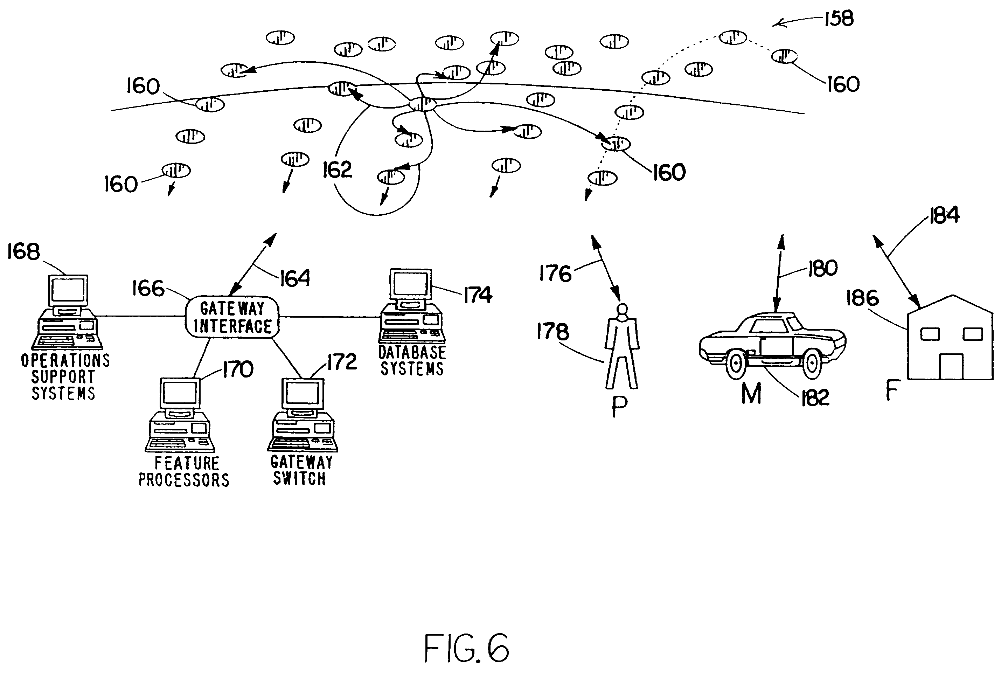

Figure 6 is a schematic diagram that reveals the fundamental architecture of the present invention. A portion of the network 158 includes satellite nodes 160, which communicate over inter-satellite links 162. Signals are passed between the orbiting nodes 160 and gateway interfaces 166 over gateway-satellite links (GSLs) 164. The gateway interfaces 166 are, in turn, connected to operation support systems 168, feature processors 170, gateway switches 172 and database systems 174. As shown schematically in Figure 6, the network 158 also communicates directly with customers 178 using hand-held phones and car phones 182 over mobile terminal satellite links (MTSL's) 176 and 180 that are capable of carrying 16 kilobits of voice or data signals per second (kbps). Subscribers 186 using fixed terminal satellite links (FTSL's) 184 will be able to communicate at the rate of 64 kbps. The apparatus and methods depicted in Figures 3, 4, 5 and 6 are explained in greater detail in the sections appearing below entitled *System Communication Links* and *Call Handling.*

*Terrestrial Antennas*

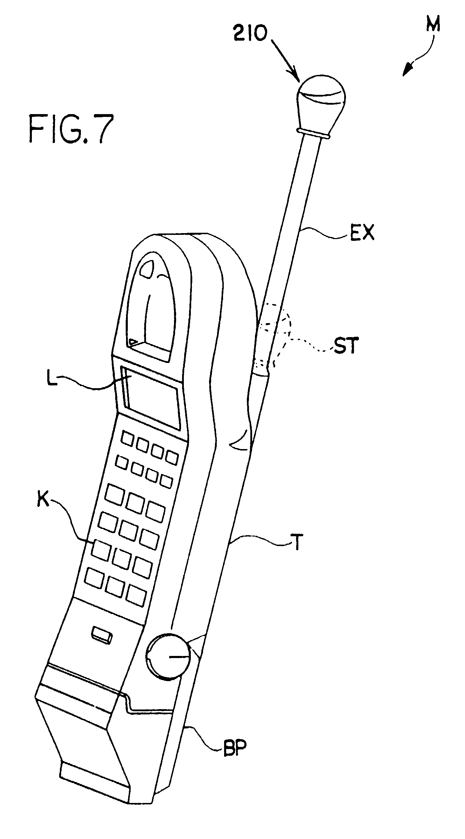

Figure 7 illustrates a hand-held portable phone that includes a Terrestrial Antenna for a Satellite Communication System. In one of the preferred embodiments, a hemispherical millimeter wave antenna 210 is used in conjunction with a portable telephone T that includes an LCD display screen L, a keypad K, and a battery pack B. In this version of a compact hand-held transceiver T, the antenna 210 is mounted on a collapsible mast M, which is shown in both the extended and stowed positions, EX and ST.

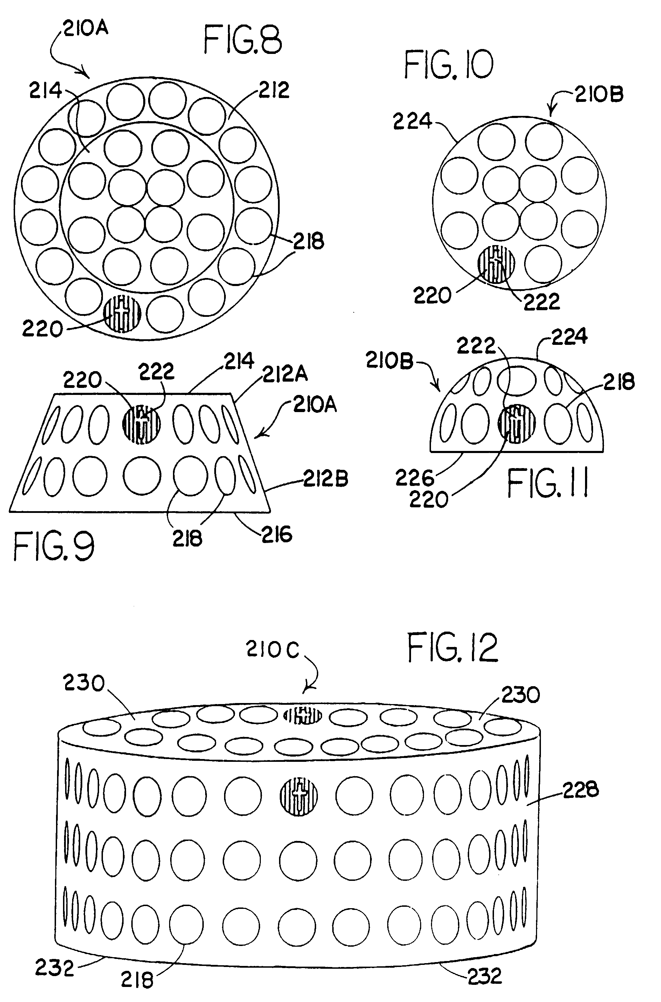

Figures 8 and 9 exhibit top and side views of the invention 210A, which incorporates a generally trapezoidal, semi-conical housing. An inclined exterior surface 212 includes an upper and a lower portion 212a and 212b. This slanted ring 212 is attached to both a top circular surface 214 and a bottom circular surface 216. Both the side and top surfaces 212 and 214 provide support for a number of generally circular antenna elements 218. The patches 218 on the side 212 of the antenna 210A form an azimuth array, while those situated on the top 214 belong to an elevation array. These elements 218 utilize a conductive patch 220 bearing a cross-slot 222 that is formed from two individual perpendicular slots 222a and 222b. In one embodiment that is designed for use with the 20 Ghz band, the diameter of the top surface 214 is 1.5 inches (3.8 cm). The side surface 212 is 1.0 inch (2.5 cm) high, and the bottom surface 216 is 2.5 inches (6.4 cm) wide. The nominal gain of this embodiment is approximately 20 dB. For the 30 GHz band, the diameter of the radiating patches shrink to about seventy percent of the larger 20 GHz antenna patch. For a trapezoidal geometry where the ratio of the bottom 216 and top 214 surfaces is 5/3, beams emanated by this embodiment are capable of being steered electronically over 360 degrees in the azimuth plane and plus or minus 60 degrees in the elevation plane. Active and passive microwave components are located within the housing attached to a ground plane.

Figures 10 and 11 depict another embodiment of the invention 210B, which makes use of dualfrequency radiating elements located on a hemispherical or dome-shaped surface. A hemispherical surface 224, which is mated to a bottom circular surface 226, is covered by antenna elements 218. The preferred embodiment of this configuration 210B utilizes a dome having a diameter of about 2.5 inches (1 cm). The nominal gain of the hemispherical antenna is about 20 dB over the desired range of scan angles. The radiating elements, along with their integrated phase shifter, provide beam steering over 360 degrees in the azimuth plane and plus or minus 60 degrees in the elevation plane. A variation of the dome embodiment 210B is characterized by a flattened or truncated surface at the top of the dome.

Figure 12 shows a perspective view of an embodiment of the invention 210C that takes the shape of a right circular cylinder having a curved cylindrical surface 228, a top circular surface 230, and a bottom circular surface 232. Like the hemisphere 210B, the cylindrical antenna 210C has a nominal gain of 20 dB, and offers beam steering over 360 degrees in the azimuth plane and plus or minus 70 degrees in the elevation plane. For 20 GHz operation, this antenna is designed to measure three inches (7.6 cm) across and one inch (2.5 cm) high. A reduction of thirty to forty per cent can be achieved if the 30 GHz frequency is utilized.

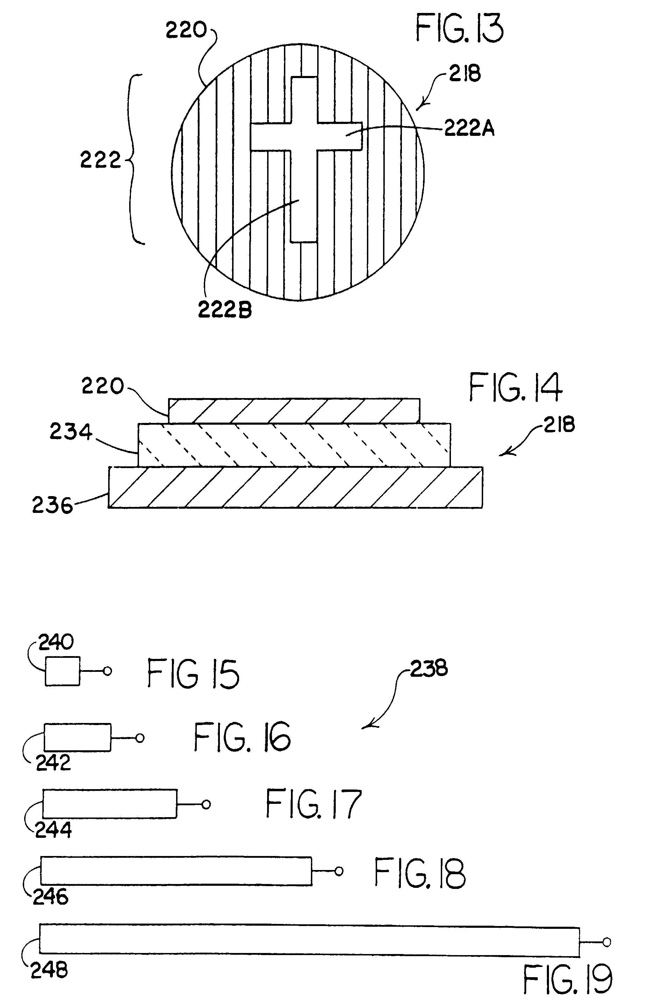

Figures 13 and 14 supply detailed renditions of one of the circular antenna elements 218. Figure 13 is a top view which includes a conductive patch layer 220 that has been milled, molded, or etched so that it bears two intersecting slots 222a and 222b. The resulting cross-slot 222 comprises two perpendicular slots which do not have equal lengths. The dissimilar lengths insure that the radiation emitted from the antenna 210 will be circularly polarized. Figure 14 portrays a cross-section of element 218. A copper patch 220 that includes cross-slot 222 sits atop a nonconductive substrate layer 234, which resides above a ground plane layer 236. Each conductive patch 220 is 233 mils in diameter and from 0.25 to 1.00 mil thick.

Figures 15, 16, 17, 18 and 19 supply schematic diagrams of a five bit, time delay phase shifter 238. Each printed circuit delay line 240, 242, 244, 246, and 248 provides the necessary phase shift depending on the line length. In one embodiment of the invention, these lines 240, 242, 244, 246, and 248 provide phase shifts of 11.25, 22.50, 25.00, 90.00, and 180.00 degrees, respectively. The present invention utilizes these conductive pathways to select the appropriate delay for steering the antenna beams. Each antenna element 218 is coupled to its own phase shifter 238. The series-resonant printed circuit patch arrays are formed by connecting rows of patches through high impedance microstrip lines. The radiating patch elements are excited by low-loss microstrip lines arranged perpendicular to the resonant arrays. Each feed line will excite all the resonant arrays, forming a pencil beam in the broadside direction. The direction of the beam is steered by the low-loss, phase shifting elements with solid state switches located in the feed line. The present invention combines the phased array section and using a common aperture beamformer into a compact, low-loss, low-profile antenna structure.

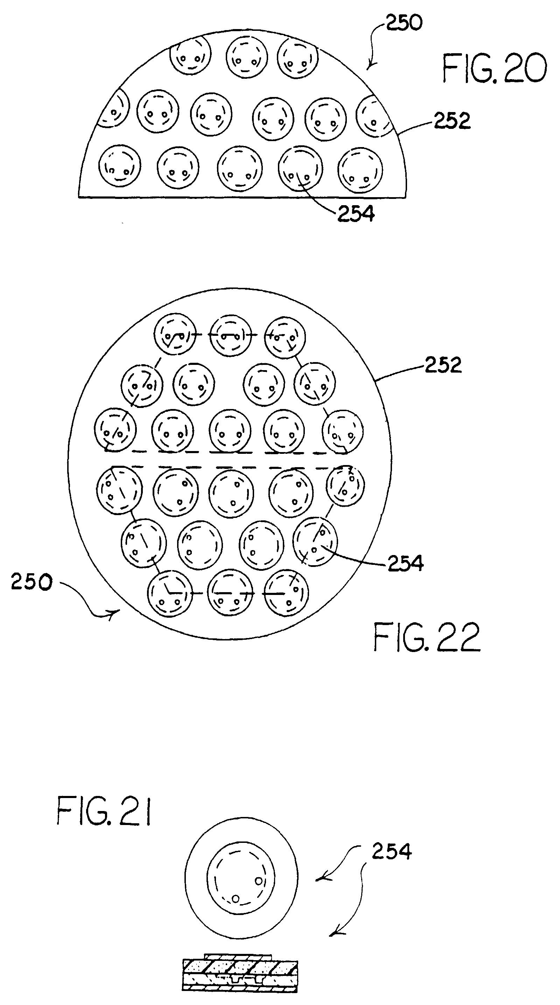

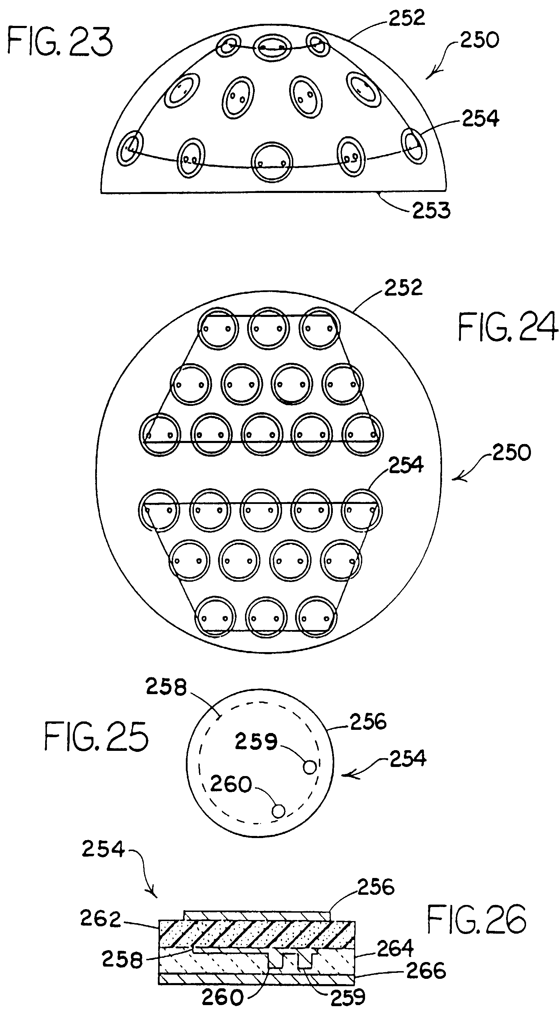

Figures 20, 21 and 22 reveal side, cross-sectional and top views of an alternate embodiment of the invention 250 which incorporates a hemispherical structure 252 covered by dual frequency antenna elements 254. Figures 23 and 24 show enlarged side and top views of one of the alternative embodiments of the dual frequency antennas. The edge of lower circular surface 253 is visible in Figure 23. Figures 25 and 26 show enlarged top and cross-sectional views of one of the dual frequency antenna elements 254 which includes an upper conductive layer 256, a lower conductive layer 258, and two conductive vias 259 and 260. The cross-sectional view in Figure 26 also depicts a foam layer 262, a dielectric layer 264, and a ground plane layer 266. The radiating elements are printed on a high performance substrate. The feed networks and distribution circuits are printed on the lower side of the substrate. The active microwave components are located below the dielectric substrate. The entire antenna structure is secured to the ground plate 266.

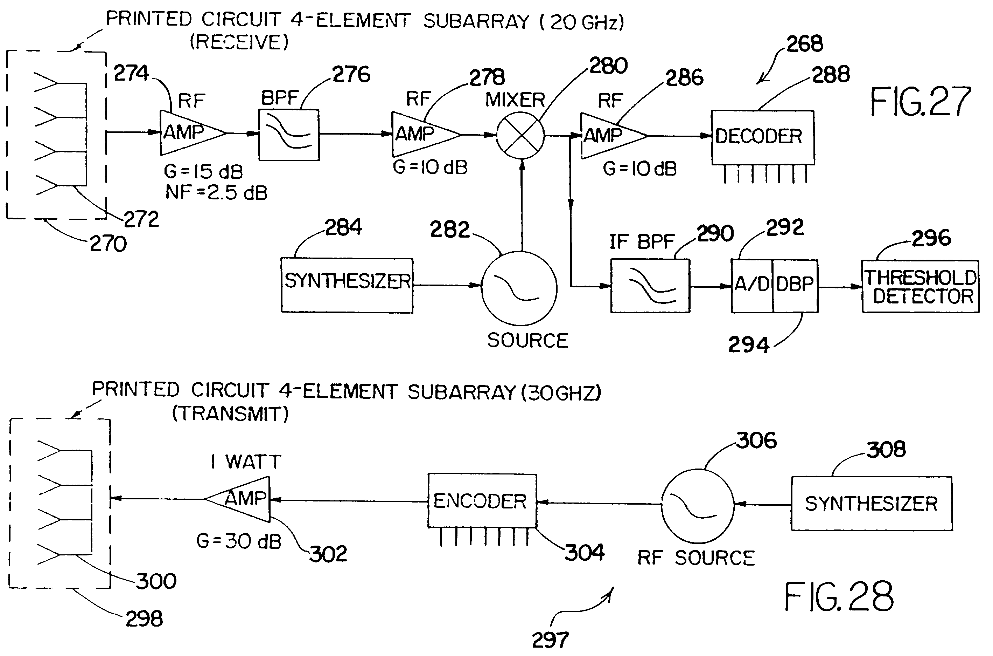

Figures 27 and 28 reveal schematic block diagrams of the receive and transmit circuits 268 and 297 utilized in one of the several embodiments of the invention. The receive circuit 268 comprises a 20 GHz printed circuit four element subarray 270 which includes feeds 272. The feeds 272 convey signals to a first radio frequency (RF) amplifier 274, a first band pass filter (BPF) 276, a second RF amplifier 278, and a mixer 280. The mixer 280 combines the output of the second RF amplifier 278 and a source 282, which, in turn, receives the output of a synthesizer 284. The output of the mixer 280 is fed to a third RF amplifier 286 and to an intermediate frequency (IF) band pass filter (BPF) 290, an analog-to-digital (A/D) converter 292, a digital band pass filter (DBP) 294, and a threshold detector 296. A decoder 288 is connected to the output lead of RF amplifier 286. The transmit circuit 297 shown in Figure 28 contains a 30 GHz printed circuit four element subarray 298 which has feeds 300 coupled to an amplifier 302, an encoder 304, an RF source 306 and a synthesizer 308.

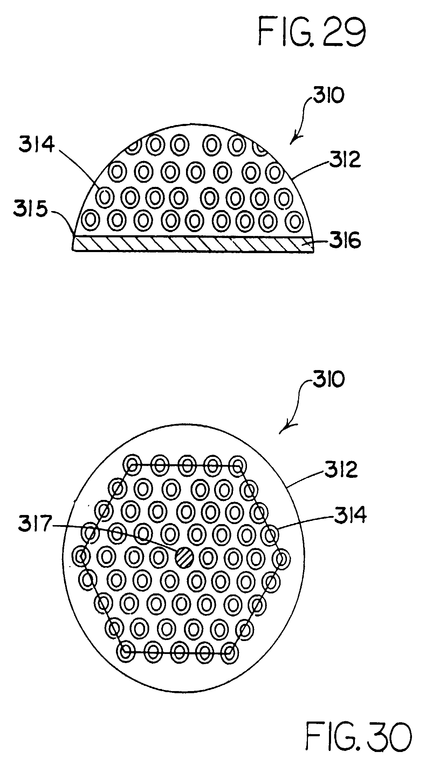

Figures 29 and 30 depict side and top views of another embodiment 310 of the miniaturized antenna that is characterized by a top element 312, radiating elements 314, a soft substrate 315, a ground plane 316 and a dummy element 317. The radiating elements 314 are arranged in a hexagonal lattice pattern and are separated by approximately 0.075 inches (0.19 cm).

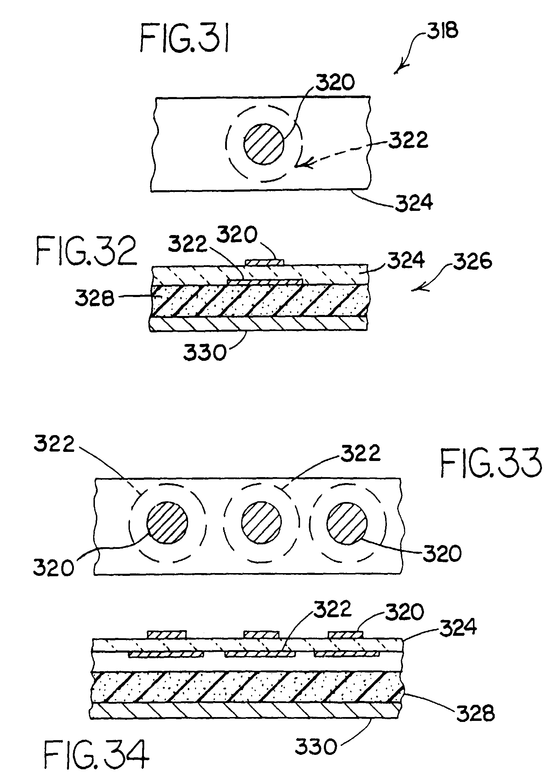

Figures 31, 32, 33, and 34 are plan and sectional views of dual frequency antennas. Figure 31 exhibits a top view 318 of a 30 GHz printed circuit patch element 320 above a 20 GHz patch element 322. Figure 32 shows the same hardware in a cross-sectional side view 326 that reveals the substrate layer 324 that separates the 20 GHz and 30 GHz elements 320 and 322, as well as a layer of foam 328 and a ground plane 330. Figure 33 shows a series of 20 and 30 GHz patches residing together on a portion of an antenna. Figures 33 and 34 portray an alternative arrangement in which the active patches 320 and 322 are situated on either side of the substrate 324, as opposed to having element 322 embedded within substrate 324 as shown in Figure 32.

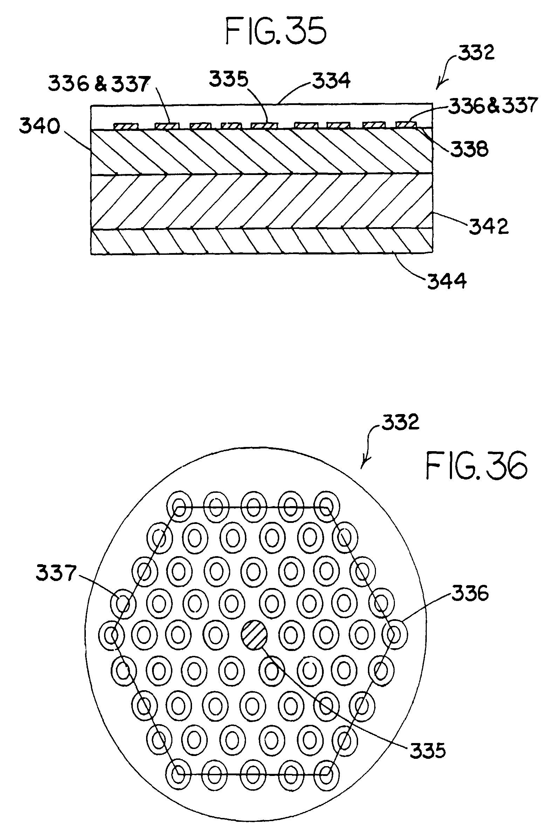

Figures 35 and 36 show cross-sectional and plan views of an antenna with a hexagonal lattice. Figure 35 comprises a cross-sectional view 332 that includes a radome 334 covering a dummy element 335, dual frequency printed circuit elements 336 and 337, a microwave substrate 338, feed networks and distribution circuits 340, active microwave components 342, and a ground plane and support structure 344. The top view shown in Figure 36 reveals an array of 20 and 30 GHz patches 336 and 337 deployed in a hexagonal lattice with the dummy element 335 at its center.

The Terrestrial Antennas disclosed above may be used for voice or data communications. The portable transceiver unit T that incorporates the present invention 210 will provide a direct ground to satellite link (GSL) to a constellation of 840 spacecraft in low Earth orbit. The compact antennas 210 are designed to send and receive signals to satellites that are within a cone having a vertical axis that point toward the zenith which measures 80 degrees across. The angle from the terminal to the satellite, called the "mask angle," is sufficiently wide to insure that there are always at least two satellites in the constellation flying overhead to service portable units, but is also high enough above the horizon to virtually eliminate occultation by terrain, buildings, or trees. The 40 degree mask angle also limits the path length of the signal, protects link margins and thus reduces power requirements.

For optimal performance, the vertical axis of the antenna 210 should point at the zenith, but the beam steering capabilities of the antenna 210 can overcome the effects of using the transceiver T at different angles, as long as the signal from the portable phone remains pointed somewhere within the mask angle. If the orientation of the antenna 210 presents a problem for the subscriber, the hand-held unit can be connected to an external antenna which is mounted at a fixed angle or which is more sensitive. The low power design of the present invention substantially eliminates any radiation hazards.

The number of elements 218 which are deployed on the antennas 210 is directly proportional to the total gain achieved by the array. The number, N, for a hexagonal lattice is given by the expression:

$$N = \left( \left( 1.5 * \frac{D}{\lambda} \right) \right)^2$$

where D is the aperture and $\lambda$ is the wavelength at the highest frequency. This expression indicates that about 61 elements having two inch (5.1 cm) aperture should be used for a frequency of 30 GHz. The appropriate phase shift, $\phi$, that is electronically selected to steer the beams using the various microstrip phase delay lines is determined by the following equation:

$$\phi = \frac{2\pi\lambda}{d} \sin\theta$$

where $\theta$ is the scan angle.

The design choices for the selection of materials is largely determined by the performance requirements that are encountered using the 20 GHz the 30 GHz frequency bands. Three commercially available materials would be suitable for the substrates for the present invention. These include Rohacell rigid styrofoam material and Roger RT/5870 and RT/5880 materials, which are both glass microfiberreinforced PTFE composite substrates. While Teflon fiberglass is an extremely rigid material, which is a desirable property for the substrate, its cost is nearly twice that of styrofoam. The dielectric constant, $e_r$, for each of these substrates ranges from 1.35 to 2.55. Although styrofoam is the least expensive material, it is far less rigid than either RT/5870 or RT/5880. One quarter ounce copper is used for the printed circuit antenna elements. The housing enclosure can be fabricated from a lightweight aluminum alloy.

*Fast Packet Switch*

The fast packet switch aboard each satellite in the constellation provides novel fast packet switching for a network having a rapidly changing topology. Each packet moved through the network is routed independently at each network node along an optimum route that is determined by an innovative adaptive routing algorithm.

The switching methods disclosed and claimed in this patent application overcome the limitations encountered by conventional packet switching using virtual circuits. The fast packet switch utilizes a "datagram" approach that routes every packet conveyed by the system independently at every node in the network. The packets are directed along an optimized pathway through the network by a fast packet switch that directs traffic based on instructions from a microprocessor that continuously runs an adaptive routing algorithm. This microprocessor uses orbital position information generated aboard each spacecraft to monitor the rapidly changing topology of the constellation and the distribution of traffic among its nodes and links.

The self-routing fast packet switch works in combination with an input packet processor, a routing cache memory, and an adaptive routing processor. The input packet processor functions like a gatekeeper or guide that extracts the destination node address from each packet and uses it to access routing information stored in the routing cache memory. The adaptive routing processor constantly updates the routing cache memory so each satellite has an accurate "knowledge" of the whereabouts of all its neighbors, and of the expected packet delay from adjacent nodes to all possible destination nodes. Based upon this position and expected delay information, the adaptive routing processor selects the best pathway from a particular satellite to a single neighboring satellite, and the packet is then moved through internal switch circuitry onboard the satellite on its way to other spacecraft in its journey to some eventual destination on Earth. The switching methods of the present invention optimize the utilization of the network facilities and minimizes transmission delays and variances of transmission delays. By precalculating the optimal route for each packet one step at a time at each satellite, the amount of time required to process individual packets is greatly reduced.

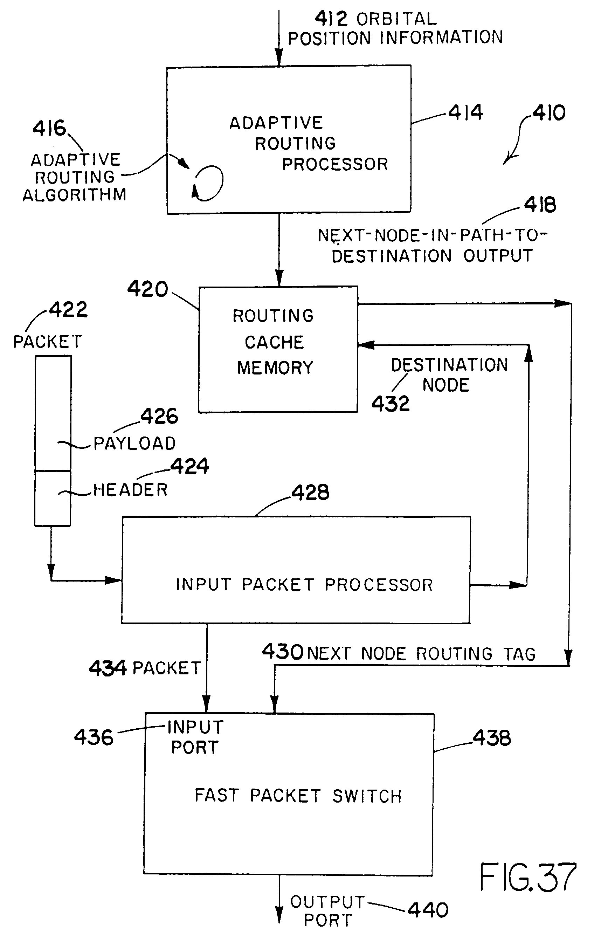

Figure 37 is a flow chart 410 that explains the switching process as it occurs on each satellite S in the constellation C. Orbital position information 412 is an input to an adaptive routing processor 414 which runs an adaptive routing algorithm (ARA) 416. The ARA 416 constantly monitors The changing locations of all the spacecraft S in the network, and also keeps track of communications traffic congestion among the links and nodes of the system. The adaptive routing processor 414 produces an output called "Next-node-in-path-to-destination" 418. As the name implies, this output 418 contains information and provides instructions for moving communications data through the network one node at a time.

Packets 422 generated by a packetizing circuit (not shown) arrive at one of the satellites S from a portable P, mobile M or fixed F terminal or gateway G or from another satellite S. Packeting circuits may include analog-to-digital converters that are well known in the electronic arts which translate audio signals to streams of digital bits. Each packet 422 comprises a string of one's and zero's and is divided into two general sections called a header 424 and a payload 426. The header 424 includes the address of the packet's destination, and information called a destination node 432, which refers more particularly to the location in the network where the packet must be delivered. An input packet processor 428 receives an asynchronous sequence of packets in a serial transmission format. Each packet 422 contains information in its header section 424 that enables circuitry aboard the satellites S to route the packets 422. The input packet processor 428 extracts the destination node information from each packet 422 and forwards the destination node 432 as an input to a routing cache memory 420. This memory 420 is also the recipient of next-node-in-path-to-destination output 418 produced by the adaptive routing processor 414. Since the routing cache memory 420 is used by more than one input packet processor 428, a time-sequencer or multiple cache memories can be used to eliminate contention problems that occur when more than one input packet processor 428 seeks the services of the cache 420.

The input packet processor 428 receives a next node routing tag 430 from the routing cache memory 420 prepends the tag 430 to the processed packet 434, and forwards the packet 434 to a fast packet switch 438. The switch 438 receives the processed packet 434 through one of its many input ports 436, and conveys it to one of many multistage self-routing switch sections (MSSRSS) within it. The tag 430 is read by an MSSRSS, and the MSSRSS automatically routes it to an asynchronous packet multiplexing section (APMS). The multiplexing section multiplexes the packets 434 received in parallel from various input ports 436 into a serial output stream at one of its output ports 440.

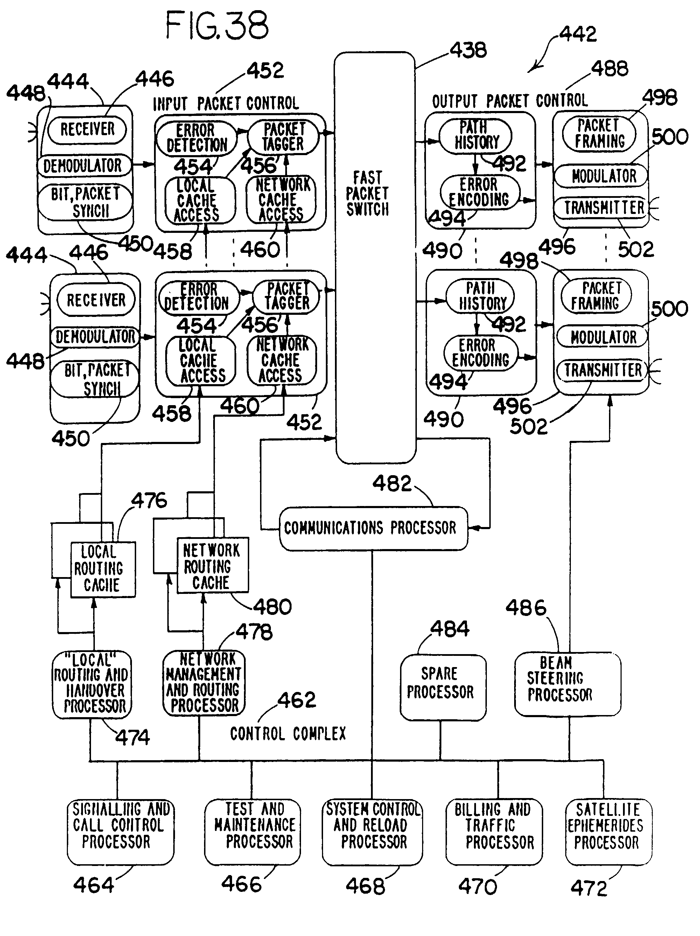

Figure 38 presents a block diagram of a satellite switch node 442. One fast packet switch 438 is shown in the upper portion of the diagram, and receives signals from a series of circuit modules 444 and 452. Module 444 includes a receiver 446 coupled to receive antennas (not shown in Figure 38), a demodulator 448, and a bit/packet synchronizer 450. Module 452 provides input packet control, and comprises circuits for error detection 454, packet tagging 456, local cache access 458 and network cache access 460. The series of input packet control modules 452 are also connected to control complex 462 through a local routing cache 476 and a local routing and handover processor 474. Another link to the input packet control modules 452 are coupled to the control complex 462 through a network routing cache 480 and a network management and routing processor 478. The control complex 462 is an array of circuit stages that include a signalling and call control processor 464, a test and maintenance processor 466, a system control and reload processor 468, a billing and traffic processor 470 and a satellite ephemerides processor 472. The control complex 462 is coupled to a communications processor 482, a spare processor 484 and a beam steering processor 486, which is connected to output packet control modules 490 and 496. Modules 490 comprise circuits that keep track of path history 492 and that are responsible for error encoding 494. Modules 496 include packet framing circuits 498, modulators 500 and transmitters 502 connected to transmit antennas (not shown in Figure 38).

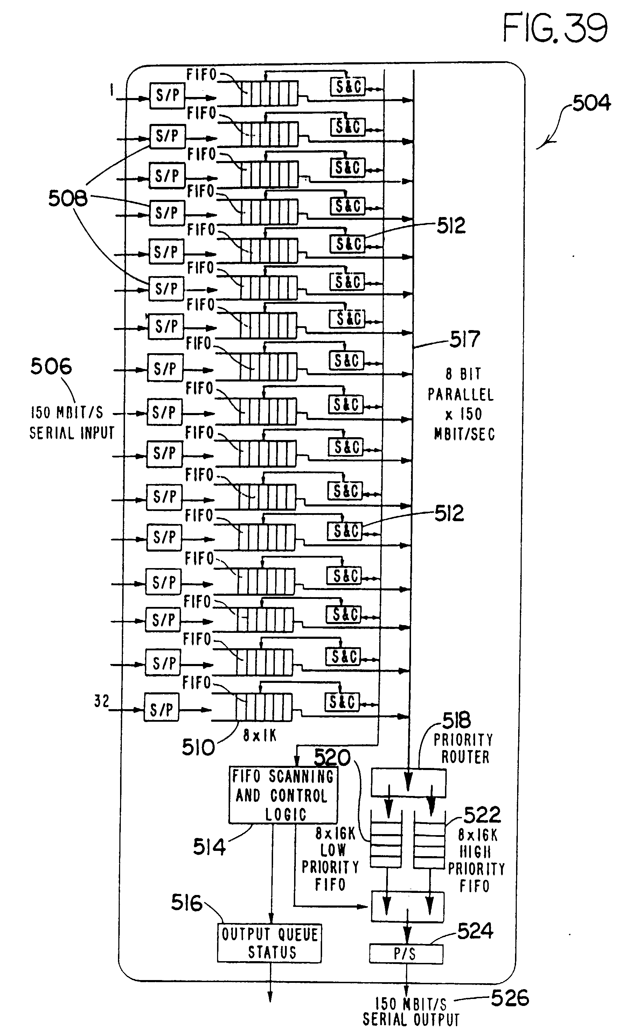

Figure 39 supplies a schematic illustration of a 32 by 1 packet priority multiplexor 504. Serial input signals 506 are fed to the multiplexor 504 at the rate of 150 megabits per second (MBIT/S) through a series of serial-to-parallel (S/P) converters 508. The S/P converters 508 are coupled to first-in, first-out (FIFO) buffering circuits 510, which are also connected to status and control (S&C) circuits 512. All the S&C circuits 512 are linked to FIFO scanning and control logic circuitry 514 and an output queue status stage 516. An eight bit parallel bus 517 receives the output of the FIFO circuits 510, and are conveyed to a priority router 518, 8 by 16K low and high priority FIFO circuits 520 and 522, and through a parallel-to-serial converter (P/S) 524 to provide a 150 MBIT/S serial output 526.

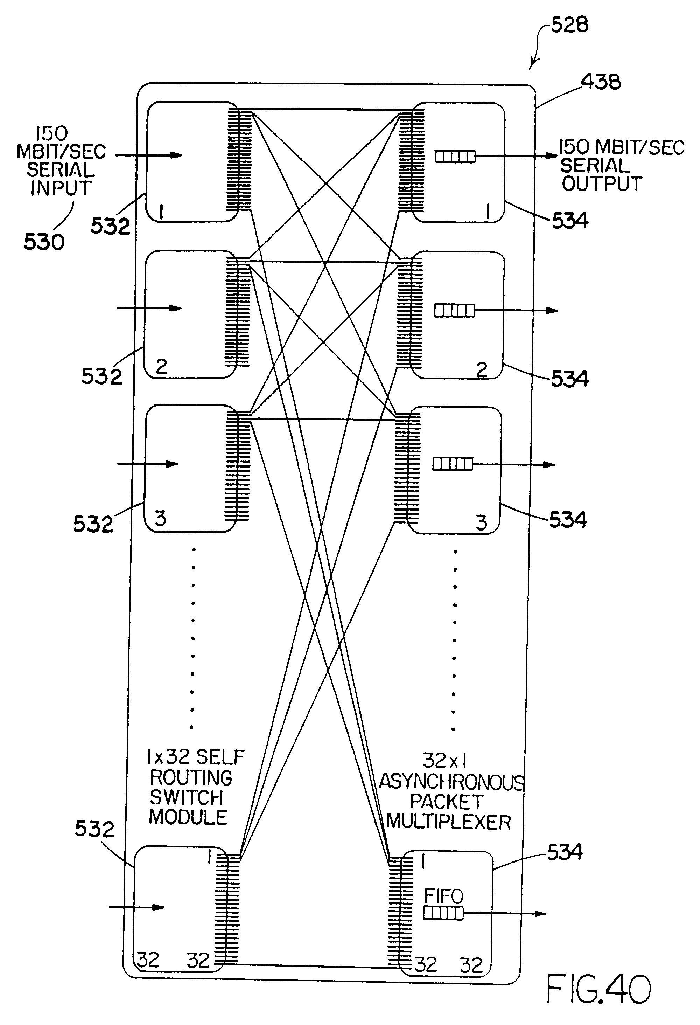

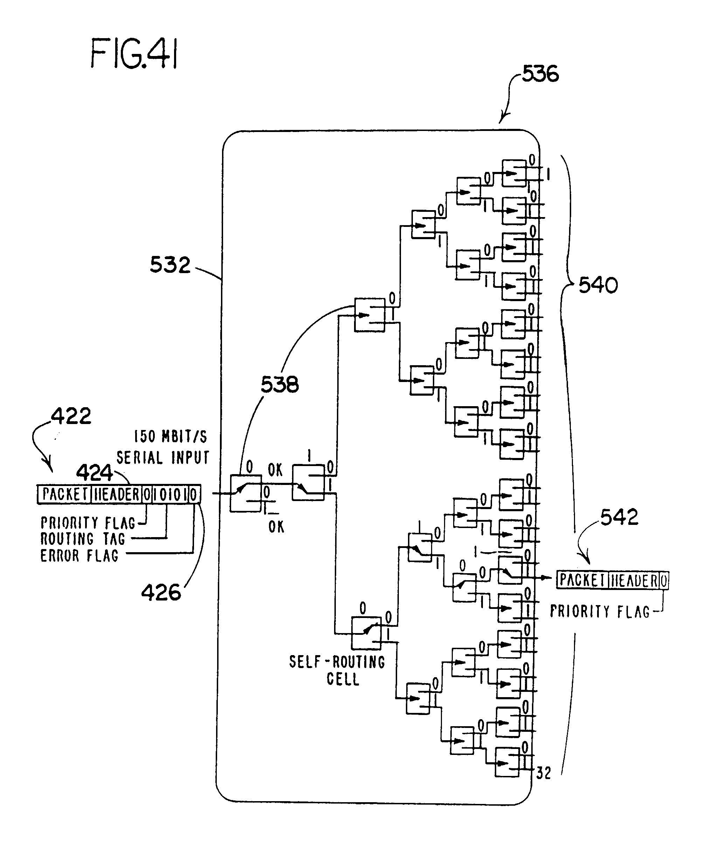

Figure 40 is a block diagram 528 which reveals the details of a fast packet switch 438. Serial inputs 530 are transported into the switch 438 via a series of 1 x 32 self-routing switch modules 532 that are, in turn, associated with a series of 32 x 1 asynchronous packet multiplexors 534. Figure 41 is a schematic diagram 536 that shows the details of the 1 x 32 self-routing switch module 532 illustrated in Figure 40. Packets 422 having headers 424 and payloads 426 are fed into the module 532 at the rate of 150 MBIT/S. The packet 422 comprises a string of ones and zeroes, and includes a priority flag, a routing tag and an error flag. A series of self-routing cells 538 read the bits in the header 424, and direct routed packets 542 with their payloads of data 426 to the output side 540 of the module 532.

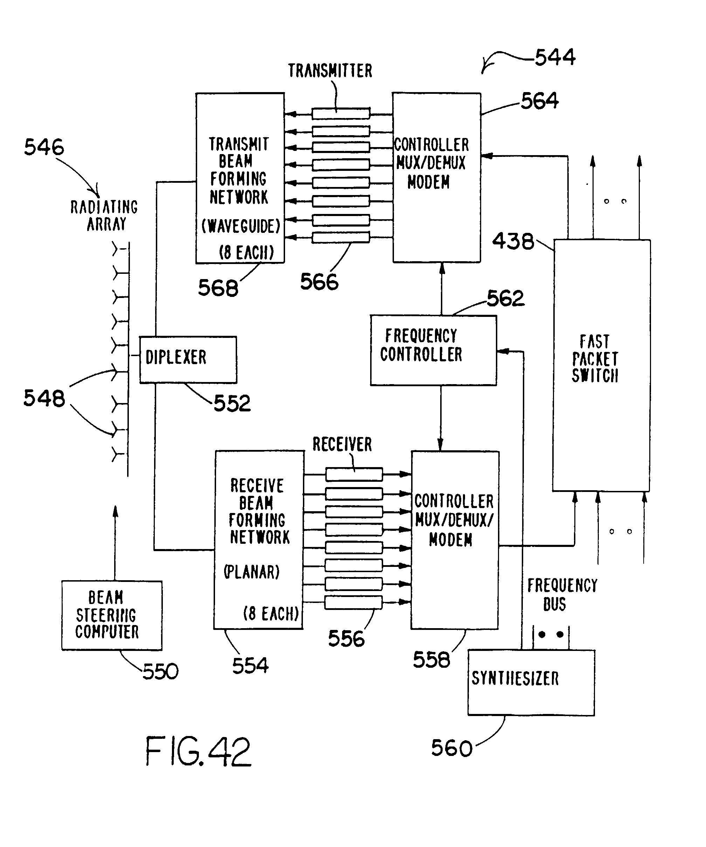

Figure 42 is an illustration which presents a block diagram of a mobile/fixed satellite link 544. A radiating array 546 which both receives and transmits signals through feeds 548 is controlled by a beam steering computer 550. Incoming signals pass through a diplexer 552 on their way to a receive beam forming network 554 and a bank of receivers 556 that are all linked to controller mux/demux/modem 558 that provides input to the fast packet switch 438. A synthesizer 560 generates signals that are fed to a frequency controller 562, which provides an input to a second controller mux/demux/modem 564 that processes signals for transmission from the fast packet switch 438. A bank of transmitters 566 furnishes signals to a transmit beam forming network 568, which are then passed through the diplexer 552 before they are emitted from the satellite through the radiating array 546.

*Beam Compensation*

Beam compensation pertains to the assignment of individual radio beams from the constellation of satellites to delineated regions on the ground with fixed boundaries called "cells." This beam management system offers enhanced frequency coordination and communication reliability. Beam compensation substantially eliminates the problem of rapid "hand-offs" of a communication channel among the multiple beams of one satellite or between satellites as one satellite moves as one satellite moves out of range of subscribers within the cell and another takes over to supply service to the cell.

The system allocates the radio beams which are generated by the satellites. These beams are precisely controlled so that they illuminate "Earth-fixed cells" as opposed to "satellite-fixed cells." In previous satellite communication schemes, spacecraft which are not held stationary over one particular location on the Earth in geo-synchronous orbits fly over large regions of the Earth very rapidly. The radio beams generated by these fast moving spacecraft sweep across vast regions of the Earth's surface at the same rate of speed. If these beams were visible to the eye, they would paint bright circular and elliptical patches of light on the ground beneath the satellite which emitted them. In a system that employs satellite-fixed cells, the "footprint" of the radio beams propagated by the spacecraft defines the zone on the ground called a "cell" which is illuminated by the spacecraft. This satellite-fixed cell moves constantly as the spacecraft moves around the globe. In sharp contrast, an "Earth-fixed cell" is a stationary region mapped onto the surface of the Earth that has permanent fixed boundaries, just like a city or a state. Although the rapidly moving satellites still shine their radio beams over the ground in rapidly moving footprints, the locations of the footprints at any given time do not determine the location of the unchanging Earth-fixed cells. The great advantage provided by using cells having boundaries that are fixed to the Earth is realized when a subscriber being served by one satellite must switch to another beam in the same satellite or to a second satellite because the first is moving out of range below the local horizon. With satellite-fixed cells, this "handover" involves the assignment to the terminal of a new communication channel within the new beam or new satellite. This assignment process takes time and consumes processing capacity at both the terminal and the satellite. It is also subject to blocking, call interruption, and call dropping if there is not an idle communication channel in the next serving beam or satellite. The Earth-fixed cell method avoids these problems by allocating communication channels (frequency, code, and/or time slot) on an Earth-fixed cell basis rather than on a satellite-fixed cell basis. Regardless of which satellite/beam is currently serving a particular cell, the terminal maintains the same channel assignment, thus eliminating the "handover" problem.

Beam compensation is accomplished in conjunction with innovative Spacecraft Antennas, which are described in the text presented below. These antennas comprise advanced active element phased arrays that utilize electronic beam steering to provide extremely high gain signals. One of the preferred embodiments of these spacecraft antennas employs a hemispherical configuration of hexagonal antenna facets fabricated from ultra-light weight honeycomb materials and advanced composites. Gallium-arsenide (GaAs) millimeter wave integrated circuits (MMIC) coupled to each antenna panel handle call traffic. Each antenna simultaneously generates 256 beams which are electronically steered to over 4,000 positions on the surface of the Earth. At any instance, each individual beam illuminates a region on the ground called an "Earth-fixed cell". A beam illuminates each of the cells in the supercell on a pre-determined sequence and time schedule. A four by four matrix of cells forms an "Earth-fixed supercell." The entire surface of the Earth is mapped into 80,000 Earth-fixed supercells (80 km x 80km).

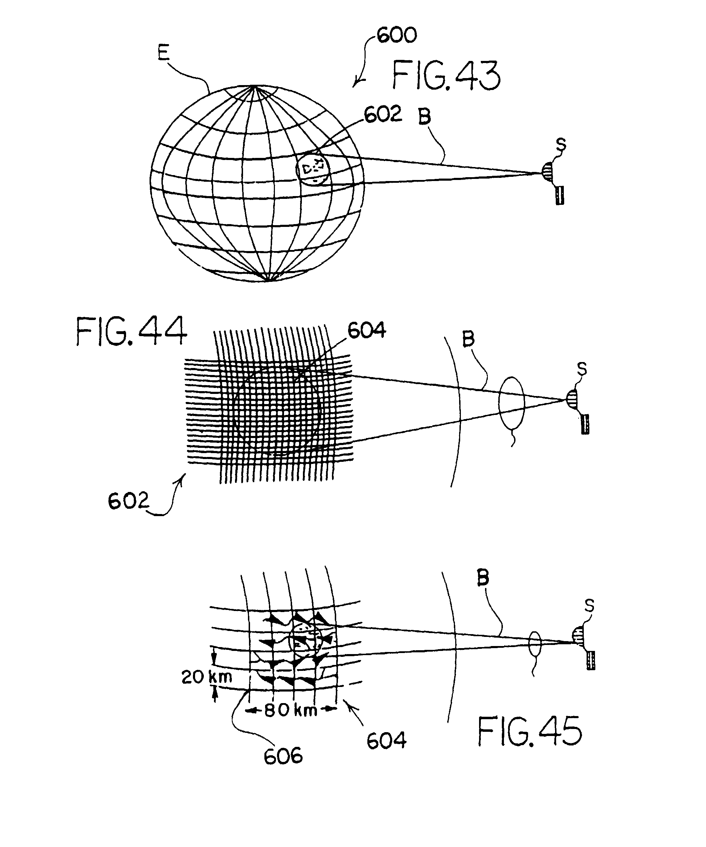

Figures 43, 44, and 45 present schematic illustrations that exhibit the relationships among the spherical surface of the Earth E, a satellite footprint 602, an Earth-fixed super cell 604, an Earth-fixed cell 606, and radio beams B emitted from a satellite S that provides service for users within the Earth-fixed cells 606. Figure 43 reveals the geometric and numerical relationships that have been established to implement beam compensation. The beams B emanating from a constellation C of satellites S illuminate generally circular footprints 602 on the surface of the Earth E. These footprints 602, which have a radius of about 700 kilometers, are associated with a grid of approximately 80,000 Earth-fixed supercells 604 that span the entire globe. Each footprint 602 is served by 256 supercells 604. Each supercell 604 is divided into a four by four matrix comprising four Earth-fixed cells 606 on a side. Every Earth-fixed cell 606 is twenty kilometers wide and twenty kilometers high. There are approximately 1.28 million Earth-fixed cells 606 covering the surface of the world. The upper and lower boundaries of each Earth-fixed supercell 604 are parallel to lines of latitude. The Earth-fixed supercells 604 circle the Earth in bands, with the largest bands residing at the equator. The number of Earth-fixed supercells 604 in an Earth-circling band decreases toward the poles. Earth-fixed supercells 604 in adjacent bands are not necessarily aligned. In the text below, the terms "supercells" 604 and "cells" 606 are employed as a shorthand reference to the more technically correct terms "Earth-fixed supercells" 604 and "Earth-fixed cells" 606. The cells 606 and supercells 604 defined and utilized by the present invention are different from the topography of previous communication systems because they are literally fixed to the Earth like a permanent grid of lines of longitude and latitude. In earlier systems, the perimeter of the beam footprint determined the instantaneous location of a cell.

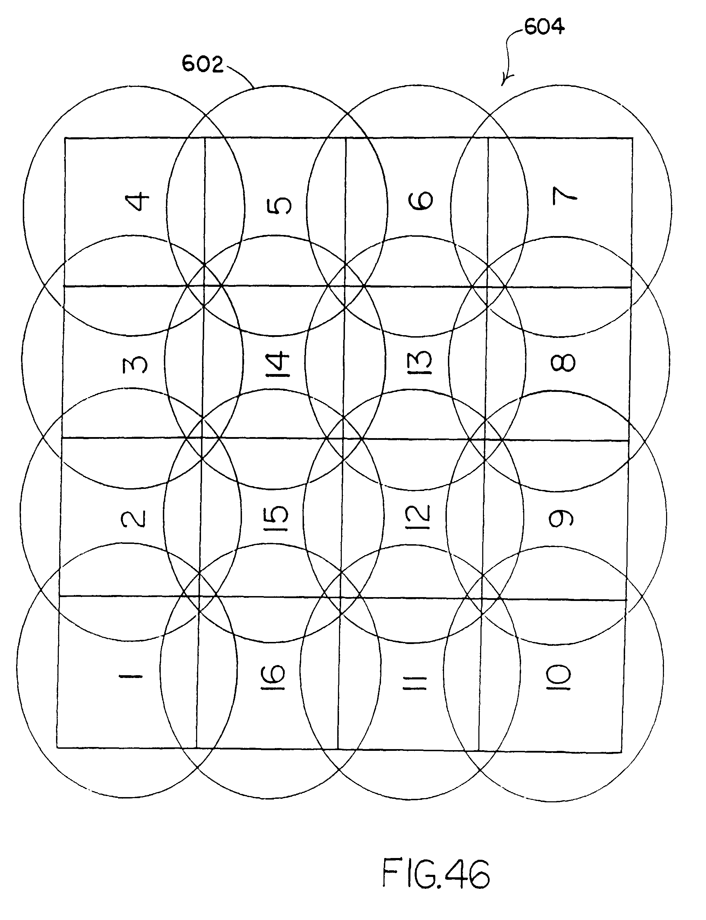

Figure 46 exhibits a pattern 608 that reveals how an Earth-fixed supercell 604 is mapped into sixteen Earth-fixed cells 606, and how the circular footprints 602 from the satellites S cover the square cell regions. The cells 606 in this diagram are also numbered from one to sixteen. These numerals indicate the timing assignments that represent the schedule of sequential satellite transmissions that serve each cell. This cell pattern 608 insures that three inactive cells are always present between every two active cells during normal operations. In the event of a timing skew between satellites servicing adjacent supercells 604, this pattern still provides for a minimum of two inactive cells 606 between active cells 606. This separation is sufficient to eliminate signal interference between two cells 606 which are being illuminated at the same time.

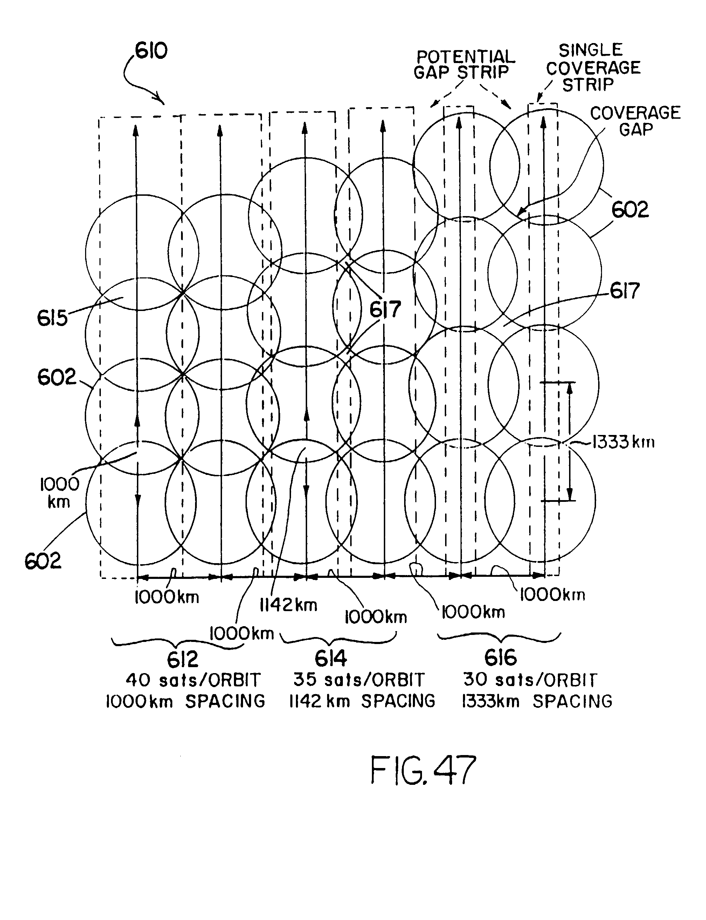

Figure 47 is a diagram 610 that depicts satellite footprint overlaps 615 and gaps 617 at the equator for three different orbit populations. Each footprint has a radius of 700 km, and the orbital planes are spaced at nine degrees, which results in 1000 km spacing at the equator. Figure 47 presents six columns of overlapping circles. Three pairs of adjacent columns 612, 614 and 616 reveal the coverage gaps that result from different orbit populations. If each orbit in the constellation C has 40 satellites, virtually no gaps 617 are encountered, as shown by column pair 612. In this first instance, the footprints 602 are closely packed, being deployed only 1000 km apart from center to center. The second and central pair of adjoining columns 614 represent the footprints 602 generated when each orbit has only 35 satellites. The footprints 602 depicted in the middle pair of columns are 1142 km apart when measured from center to center along the path of the orbit. The footprints shown in column pair 614 are separated by small gaps 617. The last pair of columns 616 shows what happens when each orbit has 30 satellites. The Spacing between footprints 602, measuring along the orbit path, is now 1333 km. Consequently, large gaps 617 separate some of the footprints 602 shown in the rightmost pair of columns 616.

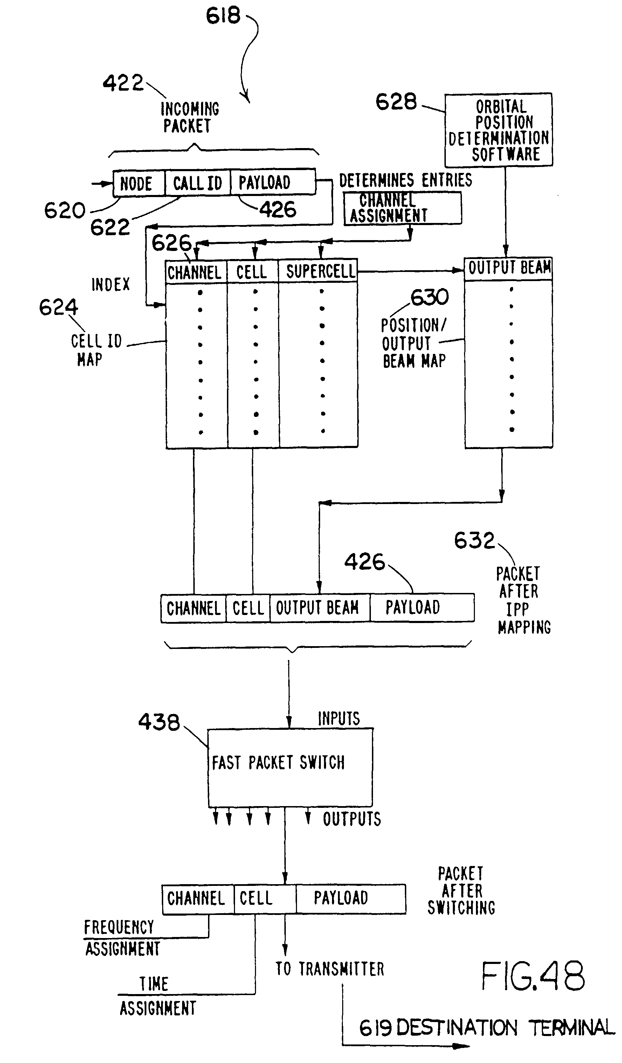

Figure 48 is a flow chart 618 which discloses one implementation of one of the preferred embodiments of beam compensation. A packet 422 is shown as it progresses through mapping and switching hardware which directs the packet 422 to the beam which is currently serving the Earth-fixed supercell 604 and cell 606 in which the destination terminal 619 resides. The incoming packet 422 possesses "node" 620 and "call identification (ID)" 622 bits that comprise a terrestrial location identification about the terminal where the call originated. The substance of the phone call, such as voice or video information, has been digitized and is carried as the payload portion 426 of the packet 422. The node 620 identifies the satellite S currently serving the destination terminal 619. The call ID 622 is used as an input to a cell ID map 624, which is used as a translation device for a fast packet switch 438 that actually selects the beam B that will be used to deliver the payload 426. The call ID map 624 identifies the supercell 604, cell 606, and channel 626 assigned to the destination terminal 619 within this node 620 as identified by the call ID 622 in the incoming packet 422. In the present context, a channel 626 is a portion of beam B that has been allocated into several frequencies. Output beams are recorded in a position/output beam map 630. The satellite beam B which is currently assigned to serve a particular supercell 604 is also a function of the instantaneous position of the satellite S which is generating beams B to handle a given call. This position information is produced by autonomous orbit position determination software 628. Once the channel 626, cell 606, and beam assignments have been derived, these assignments are appended to the payload 426 of the packet 422, replacing the call ID 622. After mapping, the modified packet 632 is then transmitted to the fast packet switch 438, which uses this information to direct the packet 422 to the appropriate buffer slot in the beam B currently serving this supercell 604. The transmission system determines the frequency that will be used for the transmission of the packet 422 based on the selected channel, and picks the time slot for transmission based on the selected cell 606.

In one of the preferred embodiments of the beam compensation invention, the time slot is 1.444 milliseconds in duration, and the frequency domain modulation (FDM) cycle for the beams is 23.111 milliseconds long. The time required for communication is 1.156 milliseconds, and 0.289 milliseconds of guard time is provided. The receive beams lag the transmit beams by twice the time encountered by the transit delay between the user and the satellite. This lag time varies from 6.8 milliseconds for supercells at the edge of the footprint to 4.7 milliseconds for supercells directly below the satellite. The variation over a supercell 604 ranges from 0.04 milliseconds for cells 606 directly below the satellite to 0.7 milliseconds for cells 606 at the edge of the footprint.

The beams B generated by antenna facets (not shown in Figure 48, but shown below in Figures 49 and 50) on the satellites S include 256 transmit and 256 receive scanning beams. The satellites travel at an orbital height of 700 km and service cells within a 40 degree terminal elevation mask angle footprint. The satellite footprint 602 measures approximately 1.6 million square kilometers. The satellite antenna beams B that service cells 606 directly below the satellite S have a gain of 37.7 dB and half power beamwidths of 2.6 degrees. The beams B that service cells 606 at the edge of the satellite footprint 602 have a gain of 40 dB and half power beamwidth of 1.8 degrees. The beams illuminate circular spots on the Earth's surface of approximately 800 square kilometers. The square inscribed within this circular spot has an area of 512 square kilometers (22.6 km sides). This geometry provides 1.84 km (13%) of overlap at the cell corners. The overlap 615 mitigates the effects of satellite position errors and beam pointing errors. The tolerable error limits are 300 meters maximum for satellite position determination error and 1.5 km (0.17 degree) maximum for beam pointing errors. The movement of the beam footprint 602 on the Earth's surface due to the motion of the satellite S is less than 12 meters over the 1.444 millisecond dwell time, and less than 200 meters during the 23.111 millisecond supercell timing cycle. Instead of computing the required pointing angles for each spot beam every 1.444 milliseconds, the pointing angles for the center of the supercell may be computed every 23.111 milliseconds, and the beam B is then positioned relative to this center for each cell. The rotation of the Earth contributes an error to this computation, but is less than 6% of the effect of satellite motion, and the same method can be used to compensate for this motion. The same method can also be used to compensate for satellite attitude motion (roll, pitch, and yaw). When a supercell 604 is contained within the footprints 602 of two or more satellites, then the satellites S negotiate among themselves as to which ones will service that supercell 604. One satellite may be assigned complete responsibility or the frequency allocation may be divided among several satellites. Each cell 606 is designed to provide service for up to 720 16-kilobit per second subscribers using portable terminals, and 360 terminals operating at 64-kilobits per second.

The beam compensation invention described above offers several advantages over previous beam allocation systems. Terminals are served by the footprint 602 of the satellite that happens to be passing overhead at the time a particular call flows through a given terminal. By allocating the beams to Earth-fixed cells as opposed to satellite-fixed cells, the problem of performing frequent "hand-offs" from satellite to satellite is substantially eliminated, since a terminal keeps the same frequency (channel) and time slot (cell) for the duration of the call even though it communicates via different beams and satellites during the call. A similar system using satellite-fixed cells with each satellite footprint partitioned into approximately four thousand cells would require a cell hand-off approximately every five seconds. The utilization of the beam compensation invention described above requires these undesirable hand-offs only when a subscriber using a portable P or mobile M terminal actually transits across a cell boundary. The Earth-fixed cell method also avoids the danger of accidentally terminating a call if all of the channels in the cell to which the beams are switched are already occupied. The allocation method of the present invention that switches a call from the beams of one satellite to another is completely transparent to the customer. The Earth-fixed cell technique also offers enormous spectral efficiency, since 100% of the frequencies between the cells and between the satellites are constantly reused. Similar systems using satellite-fixed cells often divide the assigned frequencies into bands assigned to satellites to avoid frequency conflicts, but that procedure is an inefficient use of the valuable frequency spectrum.

*Spacecraft Antennas*

The antennas aboard each satellite in the constellation provide advanced, steerable, active element, phased array antennas that supply extremely high gain, and which also use the available spectrum with great efficiency.

The antennas utilize electronic beam steering to provide extremely high gain signals. By incorporating these novel antenna systems on a constellation of spacecraft, phone customers across the globe will be able communicate through a communication system whose switching intelligence resides on orbit. This unique configuration bypasses traditional land-based networks, and offers a revolutionary expansion of communications potential.

The innovative design of one of the preferred embodiments employs a hemispherical configuration of hexagonal antenna facets fabricated from ultra-light weight honeycomb materials and advanced composites. Gallium-arsenide (GaAs) millimeter wave integrated circuits (MMIC) coupled to each antenna panel handle call traffic. Each antenna simultaneously generates 256 beams which are electronically steered to 4,096 positions on the surface of the Earth. Each individual beam illuminates a region on the ground that measures roughly 20 km by 20 km.

Figure 49 depicts one of the preferred embodiments of the antennas. This perspective schematic view shows a satellite S that includes an array 700 of generally hexagonal antenna Earth-facing facets 702 that are mated together along their six-sided boundaries to form a slightly flattened, hemispherical shell. An array of space facing facets 706 including panels 708 is mated to the Earth facing array 700. The antenna shell is connected to two generally rectilinear, unfurled, solar panels 704 which trail the body of the spacecraft S.

Figure 50 depicts a schematic diagram of a similar satellite S, and also reveals three sets of electronically steered beams 709 produced by the hexagonal antennas 702 and the circular and elliptical footprints 602 which the beams 709 illuminate on the Earth's surface. The footprints 602 of the radio beams 709 are shown as regions of "illumination" on various portions of the Earth's surface E. The set of beams marked 709a travel the shortest possible distance from the spacecraft S to the Earth E because these beams 709a travel along a pathway which runs from the ground to the zenith Z and back. The area on the surface illuminated by this set of beams 709a results in a generally circular footprint 602a. Other sets of beams, like those marked 709b and 709c, are more inclined to the line that runs from the center of the Earth toward the zenith Z, and the areas 602b and 602c irradiated by these beams 709b and 709c become progressively more elliptical as the angle of inclination becomes larger.

Figure 51 combines many sets of beams and portrays a complete set of line-of-sight radio waves 710 generated by one spacecraft. Figures 52 and 53 are geometric plots 712 and 714 which include sight lines between neighboring satellites that travel along the same orbit. These plots 712 and 714 reveal the geometric relationship of several spacecraft S traveling in one of the many orbital planes in the satellite constellation C. The pathways between neighboring satellites that are not occluded by the limb of the Earth provide communication links between spacecraft S in the same orbit.

In one of the preferred embodiments of the invention, the satellites shown in Figures 49 and 50 operate in a constellation which includes 29 sets of spacecraft flying in 29 orbits. The entire fleet travels around the Earth at a height of 700 km (435 miles). In this embodiment, the antennas 702 are designed to transmit and receive signals from terrestrial units that are located within the footprints 602 produced by the electronically steered beams 709. Only those terrestrial units that are within the conical line-of-sight region that is defined by a minimum elevation angle, or "mask angle," of 40 degrees can be serviced by a particular spacecraft. The hexagonal antenna facets 702 and their related signal processing circuitry produce hexagonal coverage pattern. In one embodiment of this invention, the radius to the center of each of the six sides of each facet 702 is 6.2 degrees, while the radius to the six corners of the hexagon subtends 7.16 degrees. A spacing of 12.41 degrees allows for 29 hexagonal coverage patterns in each orbital plane. A similar spacing along the equator results in 29 orbital planes. This configuration of hexagonal facets 702 offers double coverage in the equatorial regions and up to eight-fold coverage at higher latitudes, where larger numbers of subscribers are located. By selecting an odd number of satellites and planes, the center of the descending patterns will fall on the seams of the ascending patterns. This selection insures that virtually every region on the surface between the latitudes of 70 degrees North and South will be serviced by the constellation.

In general, and allowing for the somewhat inaccurate assumption that the Earth is spherical, the coverage angle of each satellite is given by the expression:

$$2\alpha = 2\arcsin\left(\frac{r\cos\theta}{r+h}\right)$$

where

a is the half angle of the cone of Earth coverage in radians;
θ is the user antenna mask angle in radians;
r is the radius of the Earth (6378 km); and

d is the height of the orbit (700 km).

Orbits of 700 km and a 40 degree user antenna mask angle yield a coverage of 87.3 degrees. The slant range at the edge of the Earth coverage cone is determined by the equation:

$$d=\sqrt{((r+h)^2-r^2)\cos^2\theta}-r\sin\theta=1022\,km$$

The Earth coverage area of the cone is:

$$A=\pi(d^2+h^2-2dh\cos(\alpha))=1,568,000\,km^2$$

This quantity represents the Earth coverage area of each satellite if the entire circular footprint is utilized. As described above in the sub-section describing *Beam Compensation,* this area is divided into 256 supercells 604 and each supercell 604 is further divided into 16 smaller individual cells 606. The total number of cells 606 created by each spacecraft is then 256 x 16, or 4096. Each of these 4,096 cells has an area of 383 km$^2$. If each cell 606 is square, they measure approximately 19.6 km on a side. Although the preferred embodiment of the invention utilizes circular footprints 602, the footprints created by the satellites need not be circular. Any regular polygon inscribed in the circle may be effectively employed. Other alternative embodiments employ inscribed squares and inscribed hexagons. The area of the square is 63.7% of the total area, while the area of the hexagon is 82.7% of the total area. If the cell size is maintained constant, then the resulting numbers of cells 606 are 2609 for the square and 3387 for the hexagon.

The spaceborne antennas 702 are capable of providing a gain of 45 dB at the periphery of each footprint and 42 dB at the nadir position. Because the beams generated by the spaceborne antennas 702 are so powerful, Earth-based terminals can incorporate low power antenna designs which substantially eliminate any radiation hazards that might otherwise harm the user. Each antenna uses a combination of the 20 and 30 Ghz frequency bands for satellite to ground communications, and propagates 256 simultaneous beams, which are multiplexed to 4,096 positions. Beams aimed at the horizon possess an elliptical, as opposed to a circular or polygonal, shape to compensate for the low grazing angle, so that a constant Earth coverage footprint is maintained. Uncorrected beams have an elliptical ground pattern which degrades spectral reuse efficiency. Electronic beam steering also permits the independent control of directivity gain and power gain. The beam steering provides a convenient method of correcting power levels during rain fades. The transmitted power gain from the satellite can be increased on transmit to overcome downlink fading. Satellite receive power gain can be increased during receive to overcome uplink fading. The use of these two techniques overcomes possibly poor communication performance during rainy weather conditions.

Signal processing components residing in the spacecraft include GaAs MMIC filters and are responsible for electronically steering active antenna arrays on board each satellite. Figure 54 reveals a schematic diagram of a GaAs MMIC time delay network 716. Figure 55 shows a schematic of the active lens 718, which includes a large number of the time delay networks 716 coupled to radiating elements 720.

In the preferred embodiment of the present invention, a circuit Model No. TD101 produced by Pacific Monolithics, Inc. in California is employed as the time delay network. Other more conventional time delay networks may also be employed. The electronic steering is accomplished by using these time delay networks 716 to create an active lens 718. The focal point of the lens 718 is related to the directivity gain of the antenna 702 and can be controlled electronically. The ability to control the directivity gain is important for communications satellites in low Earth orbit because less gain is needed when a cell 606 is addressed at the satellite nadir than when a cell is addressed at the periphery of the satellite footprint 602. It is also desirable to increase the directivity gain in the elevation plane when addressing a cell at the satellite footprint periphery. The active lens 718 incorporated in the antennas 702 allows these variable directivity gains to be implemented without the reduction in efficiency that is associated with conventional antenna arrays. The active lens 718 illustrated in Figure 55 is the microwave analog of an optical lens. By increasing the time delay for the signal paths in the center of the lens with respect to the edge of the lens, the focal length of the lens can be changed electronically, which, in turn, changes the directivity gain of the antenna 702.

The antennas 702 provide electronic steering which is sufficiently accurate to implement a practical gain variation in the 42 dB to 45 dB regime. For example, changing the radius of a radiation pattern by 200 meters at a range of 1200 kilometers requires a time delay control of 4 picoseconds for a 45 dB gain antenna array with dimensions of 1.2 meters on a side. Active lens control for the 42 to 45 dB range (in a 20/30 GHz system) requires time delays on the order of 4 picoseconds to 35 picoseconds.

The active lens 718 can be constructed using one of two techniques. The first, which is depicted in Figure 55, utilizes a conventional lens that includes many pairs of receive and transmit antennas that are each connected in series with an active time delay network. The second technique, which comprises the preferred embodiment of the invention, is a time delay circuit 722 exhibited in Figure 56. This circuit 722 includes a feed 724 coupled to a time delay steered array 725 which comprises a series of switches 726, time delay paths 728, transmission lines 729 and amplifiers 730. The time delay steered array 725 is connected to the time delay active lens 718 and to radiating elements 720.

The switched time delay networks 716 in the corporate feed accomplish beam steering functions. The time delay networks 716 can be adjusted for either fine gain beam steering (a few degrees) or for changing the directivity gain of the antenna (focal length of the lens).

Every satellite S controls the assignment of channels to terminals requesting services. When a terminal has more than one satellite in view, the satellites monitor the signal quality and select which one is best suited to handle the call to the terminal. The receive beam from the ground terminal lags the transmit beam emitted from the satellite by a fixed interval. The terminal transmits its data to the satellite at a delay specified by the satellite in its preceding scan. This method is used to compensate for delay differences caused by variations in path lengths. The scan pattern among beams is coordinated to insure that all cells being scanned at one instant are separated by sufficient distance to eliminate interference among many closely-spaced customers. An electronic pushbroom carries the beams through one beam position in the direction of satellite travel, and then performs a flyback. Each beam carries a pilot tone which identifies each beam for terrestrial terminals. Components on board each satellite measure time delay and Doppler shift of each subscriber signal to determine the location of the subscriber within a particular beam footprint. Because the satellite antennas operate at a relatively high gain, the footprints on the ground are relatively small. Since the cells are small and the satellite footprint moves rapidly over the Earth's surface, any particular terminal remains in the same cell for only a few seconds. To avoid the rapid handoff from satellite to satellite every few seconds, the innovative logical/physical cell mapping scheme described above as *Beam Compensation* is utilized in conjunction with the present invention.

Several spacecraft in a single orbital plane can communicate with each other if they are located above the horizon of the Earth. Satellites communicate among one another using a 60 Ghz inter-satellite frequency band. In one of the preferred embodiments, a 1.5 foot antenna provides approximately 45 Db of gain which supports a practical inter-satellite link (ISL). Four fixed and two electronically steerable antennas are used on each satellite for ISL links. Optional links in the orbital plane may increase the number of ISL antennas to ten, eight of which would be fixed and two of which would be steerable.

A second preferred embodiment comprises satellites circling in 21 orbital planes with 40 satellites in each orbit. This 21 x 40 embodiment can be implemented using the same antennas 702 which may be modified to account for the increased population of the constellation.

*Spacecraft Designs*

The constellation comprises 840 extremely high power and ultra-lightweight spacecraft grouped in sets of 40 which circle the globe in 21 separate low Earth orbits. The satellites operate in 700 km (435 mile) circular, sun-synchronous orbits which are inclined approximately 98.2 degrees to the equator.

These innovative satellites will be capable of providing direct links among users across the world without using conventional land-based networks. One of the preferred embodiments of the invention called "Domesat" includes a hemispherical, high-gain, antenna array that is always pointed toward the Earth. This electronically steered array is formed from a number of hexagonal antenna panels which are fabricated from ultra-lightweight honeycomb materials and advanced composites. The panels are held together by tubular and spherical connectors. The interior of the dome-shaped antenna array is used to store solar cell panels made from amorphous silicon which unfurl through an opening in a space-facing array when the spacecraft reaches its final orbit. Each panel is coupled to its own Gallium-arsenide (GaAs) millimeter wave integrated circuits (MMIC) which maintain the satellite's internal control systems and coordinate communications with other satellites and ground terminals. The hemispherical contour of the antenna array allows several satellites to be nested in a compact arrangement that fits within the payload bay of a launch vehicle. One of the alternative embodiments of the invention, "Gearsat", includes an inflatable torus. When viewed from the side along its circumference, the torus looks like two flattened pyramids that share a common base. Phased array antenna panels are deployed across the top of the pyramid, while arrays of amorphous silicon solar cells cover the slanted surfaces. The satellite rotates about its center, and individual portions of the antenna panels are specifically dedicated to transmit and receive signals from pre-defined regions on the ground. Another alternative embodiment, which is generally referred to as "Batsat", comprises a central cylindrical body and a plurality of substantially circular, foldable, linked panels which carry antennas and solar/thermal arrays.

Domesat

Figures 57, 58, and 59 depict side views of the Earth-facing antenna array and space-facing segments of the present invention called "Domesat" 800. A satellite S having a partially hollow interior 715 includes a concave, geodesic antenna array 700 which is always pointed in the direction of the Earth E. The array 700 is formed from individual panels or facets 702 which are each coupled to active beam-steering circuitry that handles and manages call traffic. A space-facing array 706 includes individual polygonal sections 708 that look away from the Earth E. As viewed by a terminal on the ground, the space-facing array 706 is always oriented in the direction of the local zenith Z. Each space-facing section 708 has one fixed edge connected to the earth-facing antenna array 700 by a hinge 711. All the other edges of each space-facing section 708 are free to move, so that the "top" of the spacecraft S can be opened once it attains orbit. When the sections 708 of the space-facing array 706 are moved apart, solar panels 704 are swung out from the interior 715 and are unfurled to their fully extended positions in a direction opposite the direction of travel 802 of the spacecraft S. The sun-facing surfaces of the rectangular solar panels 704 are covered with amorphous, thin-film silicon, and can be "canted" or rotated about their longitudinal axis 804 to gather the maximum amount of light from the sun. Figure 60 portrays several satellites 800 stored coaxially in a compact, nested arrangement within the payload bay of a launch vehicle 801. Before the satellite is opened and the solar panels 704 are unfurled, the spacecraft resembles a cup which measures about four meters across. In the preferred embodiment, the satellites S can be stacked inside launchers which are 4.4 meters wide.

Figures 61, 62 and 63 reveal a sequence of views showing the deployment of the solar panels 704. In the preferred embodiment of the invention, panels 704 are coupled to nickel metal-hydride batteries that can store over 300 AH of energy. This configuration of solar panels 704 and batteries work together to provide over three KW of continuously-available power. As an alternative, the Domesat embodiment 800 could use solar panels deployed around its circumference or trailing streamers covered with solar cells instead of the panels 704.

Figure 64 exhibits spherical and tubular connectors 806 and 808 which hold the antenna panels 702 in place. The antenna panels 702 are each coupled to their receivers, transmitters, beam steering and call switching electronics (shown in Figure 68 and also described in the section concerning *Satellite Antennas* presented above). These on-board circuit components are located within the interior 715 and are held in place by the spherical and tubular connectors 806 and 808.

## Gearsat

Figures 65, 66, and 67 illustrate three views of an alternative embodiment of the invention called "Gearsat". One embodiment of Gearsat 810 is shown schematically in a side view in Figure 65, and comprises an inflatable torus having a radius of approximately ten (10) meters. The scale of the torus 810 is suggested in a different side view by Figure 66, which includes a schematic representation of a person 811 standing two meters tall. Once deployed in orbit, Gearsat 810 revolves about its center at a rate of roughly 0.1 revolutions per minute, turning slowly like a rolling pin whose longest dimension extends perpendicular to its direction of travel. The axis of rotation of the satellite 810 is always normal to its orbital pathway. An outermost surface 812 that generally defines a cylinder lies at the periphery of the satellite 810. This cylindrical surface 812 bears an array of antennas 814 which transmit and receive radio signals to and from other satellites in the constellation and to and from personal, mobile and fixed terminals and gateways. The antenna array 814 includes sixty (60) adjacent rectangular panels, each measuring approximately one meter square. As best seen in the partial side view presented in Figure 67, two rows of solar cells 816 lie adjacent to the antennas 814. The sixty antenna panels comprise an active, electronically steered phase array.

At any given time, three of the sixty antenna panels 814 are pointed toward the Earth's surface and are transmitting and receiving signals. As the satellite 810 revolves, antenna panels 814 become active as they move into position facing the Earth E, and also terminate their activity as they turn away from the Earth. This continuous hand-off of the communication operation from one set of antenna panels 814 to another is controlled by earth sensors, and insures that radio beams B from the satellite 810 are always illuminating the footprints 602 on the surface. The Gearsat embodiment 810 derives its name from the spatial synchronization of the antenna panels 814 with specific regions of the ground that are illuminated by the beams generated by the antennas. Like the engaged teeth of two mechanical gears, particular antenna panels 814 in the array are matched with particular regions on the ground. Radio beams B emanating from the sixty panels 814 are essentially "locked" or dedicated to specific footprints 602 or cells below it on the Earth's surface. While the text above specifies one particular satellite configuration that offers this form of spatial synchronization among antennas 814 and beam footprints 602, the reader will appreciate that the central objective of providing a dedicated relationship among many antennas and footprints may be carried out using a wide variety of various implementations without departing from the scope of the invention claimed below.

In one of the preferred embodiments of the invention, the satellites shown in the figures operate in a constellation of 840 spacecraft which includes 21 sets of 40 equally-spaced satellites flying in 21 orbits. The entire fleet travels around the Earth in sun-synchronous orbits 700 km (435 miles) above the Earth. The circular orbits are inclined 98.2 degrees to the equator. There are 21 orbit planes at different fixed longitude-of-ascending-nodes. Each plane is separated approximately 8.6 degrees (34.3 minutes) from its neighbors. Every plane is occupied by 40 equally spaced satellites. All ascending nodes are grouped together between 6 AM and 6 PM. Satellites in adjacent orbits travel in the same direction except at the "seams" between north-going and south-going portions of the orbits. The satellite system is 3-axis stabilized and momentum biased. Magnetic torquers, reaction wheels and passive aerodynamic pressure provide the required autonomous control torques that keep the antenna panels 702 pointed toward the Earth E and the satellite 800 pointed toward the direction of travel 802 as shown in Figure 63.

Figures 68, 69, 70 and 71 are block diagrams of on-board internal systems that control the satellite and that handle traffic among other satellites and terminals on the ground. The systems illustrated in Figures 68, 69, 70 and 71 may be generally incorporated in any of the embodiments of Domesat 800, Gearsat 810 or Batsat 894. For the purpose of simplicity, the following description relates the components shown in Figures 68, 69, 70 and 71 to the Domesat 800 embodiment.

The diagram 818 shown in Figure 68 reveals subsystems that provide Electrical Power 826; Attitude and Orbit Determination and Control 828; Propulsion 834; and Command and Data Handling 824. Each of these subsystems are connected to a bus 820 that is also coupled to a Communications Payload Subsystem 822, which includes the fast packet switch 438 and its related circuitry. The Electrical Power Subsystem 826 (EPS) derives energy from the photovoltaic cells covering panels 704 (solar arrays S/A), and power is stored in nickel metal-hydride batteries. The Attitude and Orbit Determination and Control Subsystem (AODC) 828 maintains the orientation of the spacecraft using three axis stabilization methods. Actuators (ACTRS) 832 are employed to perform the stabilization process. Sun sensors 830 are used as an initial reference once the satellite achieves orbit. Afterwards, inertial measuring units, magnetometers, and information gathered from call traffic is used to keep the craft on course and steady in its desired position. Each satellite "knows" its own position and the positions of all the other satellites in the constellation, as well as all the positions of terminals on the ground. A Propulsion Subsystem 834 uses redundant pulse-plasma thrusters which accomplish maneuvers that include orbit insertion, drag make-up, stationkeeping and deorbit at the end of the satellites lifetime. A Command and Data Handling Subsystem (C&DH) 824 acquires, conditions and formats all satellite data and decodes, stores and distributes all satellite commands. The C&DH 824 comprises a processor with a 4Gb solid-state RAM memory that is coupled to a local area network (LAN). A microprocessor analyzes, interprets and compresses on-board data, and another microprocessor, running at 20 million instructions per second (MIPS), is dedicated to processing traffic. A Cabling Subsystem 836 contains all the conductors that unite the power and signal electronics on the ship. A Structure Subsystem 838 comprises the geodesic, concave, stackable support skeleton which bears the antenna array 700. A Mechanisms Subsystem 840 includes components that deploy and orient the solar panels 704. A Thermal Control Subsystem 842 includes blankets and coats of paint that manage the thermal conditions of the satellite S.

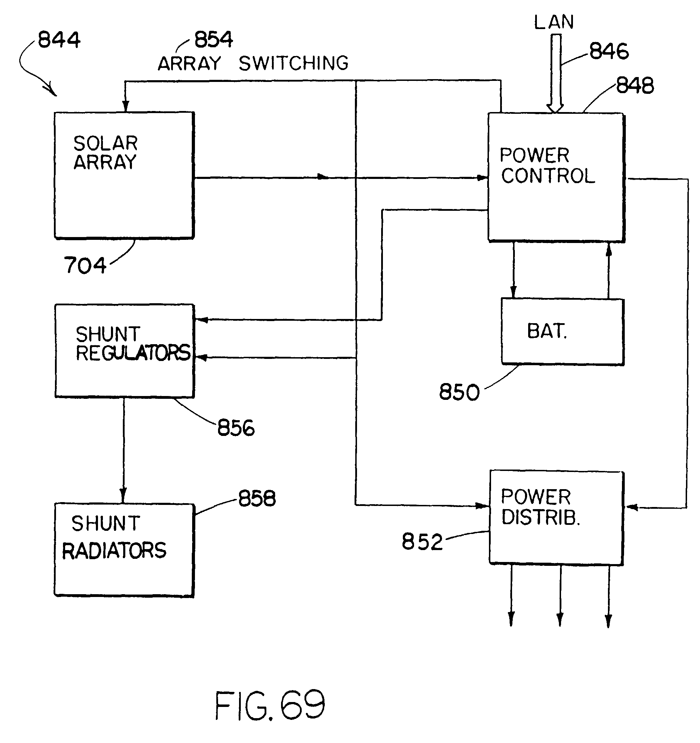

Figure 69 supplies a block diagram 844 of internal circuitry that resides within the interior 715 of the Domesat embodiment 800. A local area network (LAN) 846 is coupled to a Power Control Subsystem 848 that receives power from batteries 850. A Power Distribution Subsystem 852 is coupled to the Power Control Subsystem 848, and to the solar arrays 704 through an array switching link 854. Shunt regulators 856 and radiators 858 are provided to manage the energy distribution onboard each spacecraft.

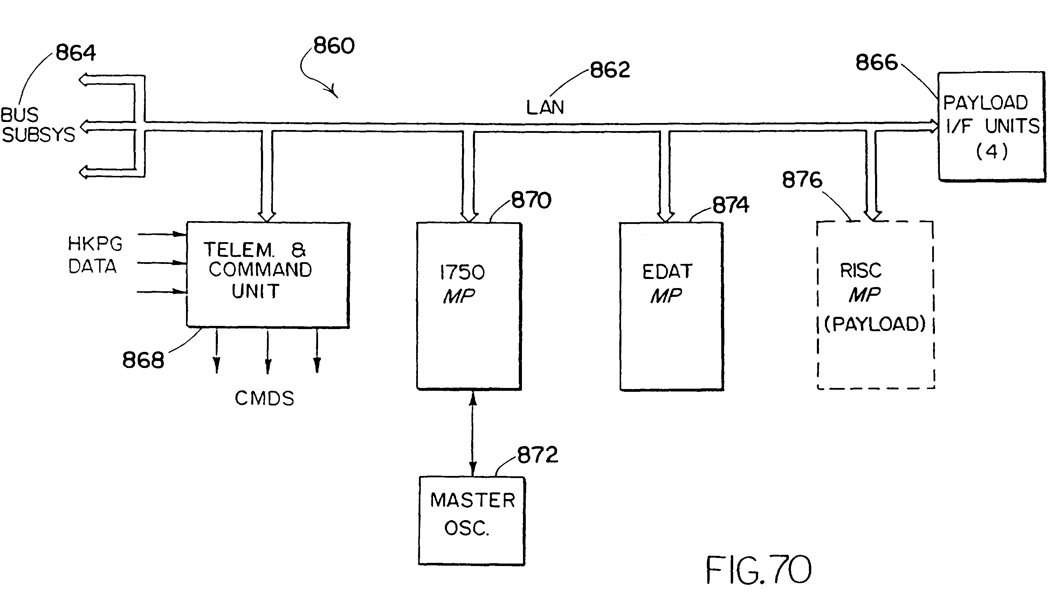

Figure 70 shows another block diagram 860 comprising a local area network 862, a bus 864 that connects to other subsystems, a payload 866, a telemetry and command unit 868, a "1750" microprocessor 870 for data control and an associated master oscillator 872, an "EDAT' (Engineering Diagnostic and Trending) microprocessor 874 developed by the Martin Marietta Corporation and a "RISC" (Reduced Instruction Set Computer) microprocessor 876. The EDAT processor 874 is a power autonomous operations controller that monitors all telemetry to determine the current "health" status of each spacecraft. It performs detailed diagnostic procedures and reports the health of each spacecraft to ground controllers.

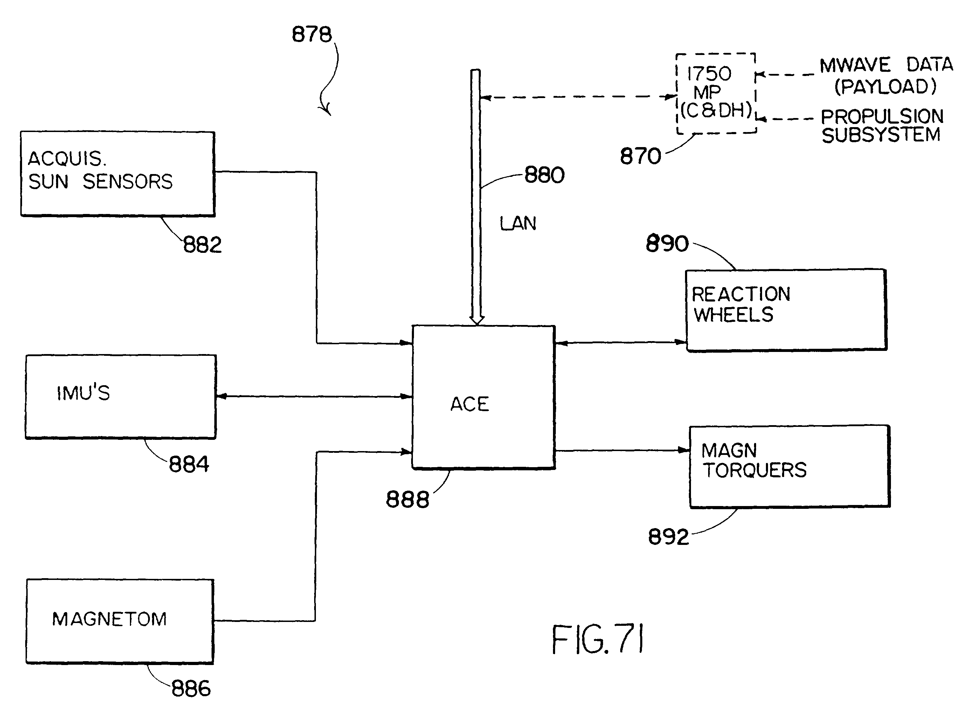

Figure 71 presents another block diagram 878 comprising a LAN 880, acquisition sun sensors 882, inertial measurement units (IMU's) 884, magnetometers 886, reaction wheels 890 and magnetic torquers 892, all of which work in concert with an Attitude Control Electronics Unit (ACE) 888.

Batsat

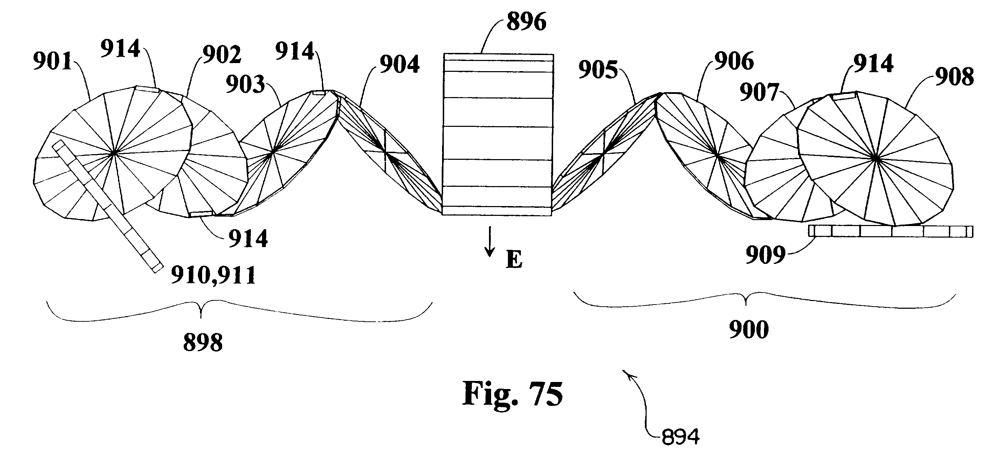

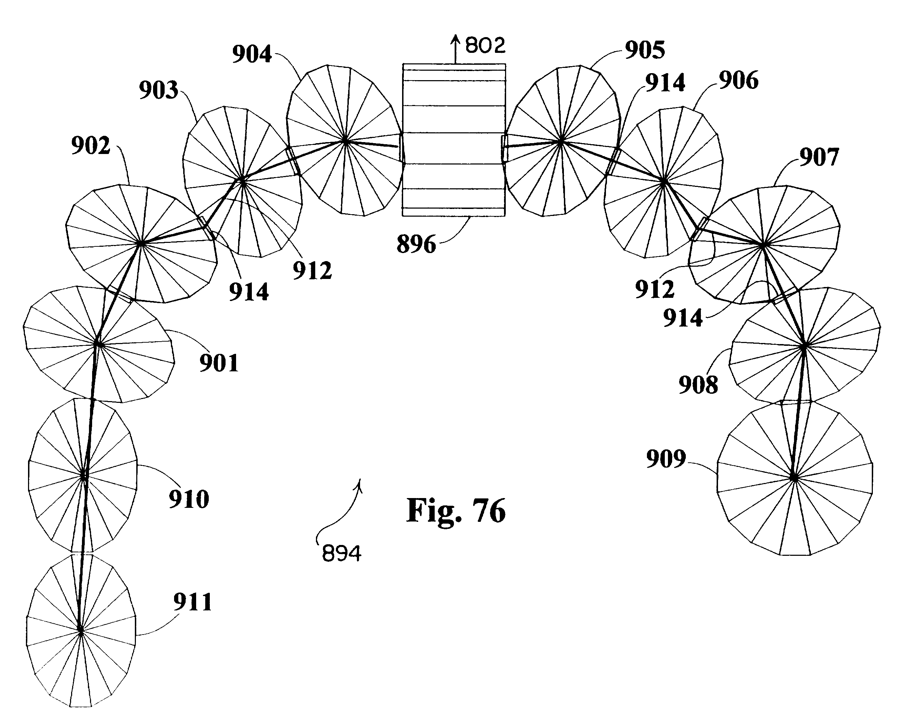

Figures 72, 73, 74, 75, 76, 77 and 78 depict another alternative embodiment of the invention which is generally referred to as "Batsat" 894. Figures 72 and 73 show the satellite 894 in its folded and stowed configuration, in which arrays 898 and 900 of disc-shaped antenna and solar and thermal panels are collapsed together against a central body 896. Figure 74 portrays a group 897 several folded Batsats 894 stacked together in preparation for launch. Figures 75 and 76 supply schematic rear and top views of the Batsat embodiment 894 after it has reached orbit and has been completely unfolded and locked into its operational configuration. Figures 75 and 76 reveal antennas 901, 902, 903, 904, 905, 906, 907, 908 and 909 and solar/thermal surfaces 910 and 911. The panels are held together by cables 912 and hinges 914.

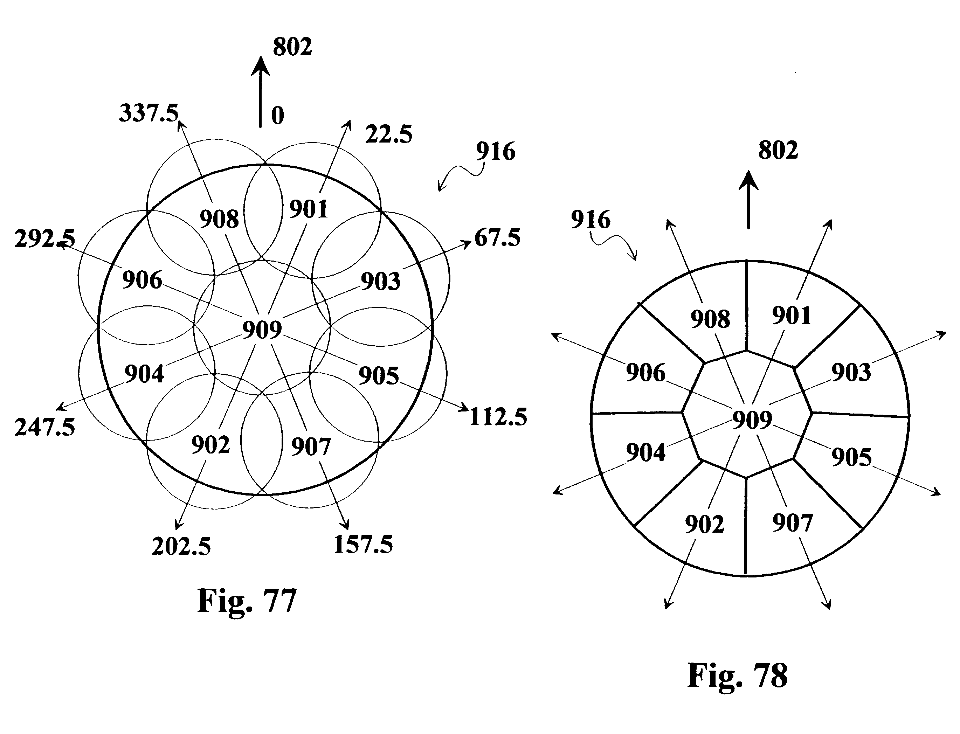

Figure 77 illustrates the potential antenna panel coverage areas generated by radio beams emitted by Batsat, while Figure 78 depicts actual antenna panel coverage areas. Figure 77 illustrates the footprint coverage capability for each panel, while Figure 78 illustrates the primary coverage areas without overlap.

The preferred embodiment of Batsat 894 includes a central cylindrical body 896 and two arms of panels 898 and 900 that extend away from the central body 896 in generally opposite directions. The arms comprise nine substantially circular, disc-shaped antenna panels 901 through 909, and a pair of solar/thermal panels 910 and 911. The central body 896 has a generally cylindrical shape, and includes two flat faces which receive antenna panels 904 and 905 when the satellite 894 is in its folded and stowed configuration. When deployed after reaching orbit, the two flat faces of the body 896 are positioned perpendicular to the direction of the Nadir. As best seen in Figure 76, four antenna panels 901, 902, 903 and 904 are connected in series to and extend from one side of central body 896, while the other five antenna panels 905, 906, 907, 908 and 909 are similarly connected in series and extend in the opposite direction. The two solar/thermal panels 910 and 911 are connected in series to antenna panel 901. Each antenna or solar/thermal panel is coupled to its neighbor or neighbors with power, control and communication cables 912 and spring-loaded self-latching hinges 914. Each panel has two generally circular flat faces. The face of each antenna panel 901-909 which is oriented toward the Earth's surface carries a set of hexagonal antenna surfaces. The faces of the two solar/thermal panels 910 and 911 carry both hexagonal areas of solar cells and thermal radiators. When Batsat 894 is fully deployed, all the connected antenna panels 901-909 and solar/thermal panels 910 and 911 are spaced as far apart as the hinges 914 and cables 912 allow. In this configuration, the spacecraft resembles a bat with its wings fully extended in two opposing arcs, and the elements of the satellite reside at their "maximum possible unfolded distances" from central body 896. When the Batsat panels are folded together like an accordion, the elements of the ship reside at their "minimum possible folded distances" from central body 896.

Batsat incorporates high-gain, electronically-steered, phased-array antennas to provide telecommunication links over a contiguous surface area within view of the satellite. The problem faced by nearly all satellite systems concerns the limited amount of frequency spectrum available for communication links between a satellite communication system and communication terminals on the Earth. Previous systems employ various multiple access schemes which divide the footprint generated by the satellite's illumination into multiple spots or cells. These cells are organized into patterns which allow the same frequencies to be reused many times within a particular footprint. When the frequencies are physically separated, the reuse technique is called "space division", and is represented by the acronym "SDMA", or space division multiple access. When the codes are different, the method is called "code division" and the abbreviation "CDMA" is used as a shorthand expression for "code division multiple access". The acronym "TDMA" stands for "time division multiple access", and indicates that many beams having the same frequency are emitted at different times. Each of these techniques help to eliminate interference between cells using the same frequencies. As a general rule, the smaller the cell, the more the set of frequencies can be reused within the footprint. The reuse of frequencies leads to spectral efficiency and the potential for higher capacity for the satellite and network as a whole.

To achieve full footprint coverage, the number of cells in a satellite footprint is selected to be inversely proportional to the area of the cell. Assuming each satellite antenna 901-909 produces one transmit or receive beam which is multiplexed over a fixed number of cells, the number of antennas on the satellite then also increases as the cell size decreases. The cell size is primarily a function of the directivity, or antenna gain, of the satellite antenna-- the smaller the cell size, the higher the required gain.

For a given frequency, the gain of an antenna is proportional to its effective area of the antenna in the direction of the source (destination) of the received (transmitted) signal. The effective area of a flat surface phased array antenna is greatest along the zenith, which is colinear with the line perpendicular to the surface of the antenna. The effective area, and thus the gain, decreases in proportion to the cosine of the angle between the zenith and a line to the communication source/destination. For the best antenna performance, the required beam steering angle needs to be kept small so that the antenna's effective area is close to its actual area. For this reason, Batsat is designed to achieve high spectral efficiency and system capacity. The present invention includes a large number of high-gain antennas and a corresponding large amount of antenna surface area. The antenna surfaces are arranged to keep the beam steering requirements to a few degrees.

Batsat not only offers high spectral efficiency and system capacity, but does so at a minimal launch cost. Because the present invention can be folded, stacked and packed into a relatively small launch vehicle 801, the cost of placing each satellite into orbit is relatively low.

Each antenna panel 901-909 is responsible for one portion of the satellite footprint. In its fully deployed configuration, the antenna panels 901-909 are arranged at angles with respect to the Earth which limit the beam steering angle of each antenna beam to a few degrees, yet allow full coverage of the footprint area by the plurality of antennas. Two panels 910 and 911 at the end of each arm provide solar arrays on the side facing the sun and thermal radiators on the opposite side. These panels are deployed at an angle which is the optimal angle for both solar energy collection and thermal radiating for the sun-synchronous orbit in which the satellite operates. The hinges H are spring loaded latching hinges. Once released from their restraints, the panels 901-909, 910 and 911 deploy automatically. The springs push the panels apart, and the locking mechanism locks them into the correct deployment angle. The hinges on each panel which join that panel to the previous panel or satellite body 896 and to the next panel are offset from each other.

The combination of offset angle and the hinge locking angle determines the deployment angle of each panel. For example, if the offset angle is 180 degrees and the locking angle is 90 degrees, the deployed wings would extend straight along the axis of the central body in a series of perpendicular panels. By changing the offset angle of the hinges, the panels can be deployed in an arc extending from each end of the central body such that each panel points at a different angle (azimuth and elevation) with respect to the earth. The flexible cables 912 may include optical fibers or copper wires, and connect the panels with each other and to the central body for passing control, data, power, etc.

Since the preferred embodiment of the invention is deployed in a sun-synchronous orbit, there is an optimum deployment angle for solar arrays and thermal radiators. For example, in the terminator orbit (6 AM - 6 PM), a vertically oriented array will always have one face to the sun and one to cold space. A panel with solar collection on one side and thermal radiators on the other can be deployed at one angle which is the optimal angle for both functions for the life of the satellite. In this design, the solar/thermal panels are the last panel(s) on the arms and are designed to be rotated about an axis parallel to the direction vector of the satellite and latched to the angle correct angle. The solar array is stowed as a panel of the same diameter as the other panels for packing efficiency, but may include deployment mechanisms if the surface area required exceeds that of one or two panels.

Although the preferred embodiment has been described as comprising the central body, nine antenna panels and two solar/thermal panels, additional small panels may used for intersatellite links. The antenna panels comprise multiple antenna facets, each capable of generating a single transmit or receive beam. Each beam can be steered ± 15° from its zenith in all directions. Table One supplies the antenna deployment angles with respect to the satellite nadir. One panel points in the nadir direction, while the other eight antenna panels point in directions which are displaced 30° in elevation from the nadir and evenly spaced at 45° increments in azimuth.

Table One

| Reference | Element | Elevation | Azimuth |
|---|---|---|---|
| 896 | Satellite Body | NA | NA |
| 901 | Antenna Panel 1 | 45 | 22.5 |
| 902 | Antenna Panel 2 | 45 | 02.5 |
| 903 | Antenna Panel 3 | 45 | 67.5 |
| 904 | Antenna Panel 4 | 45 | 247.5 |
| 905 | Antenna Panel 5 | 45 | 112.5 |
| 906 | Antenna Panel 6 | 45 | 292.5 |
| 907 | Antenna Panel 7 | 45 | 157.5 |
| 908 | Antenna Panel 8 | 45 | 337.5 |
| 909 | Antenna Panel 9 (Nadir) | 0 | NA |
| 910 | Solar/Thermal Panel 1 | 45 | 90 |
| 911 | Solar/Thermal Panel 2 | 45 | 90 |
| 912 | Power, Control, and Communication Cables | NA | NA |
| 914 | Spring Loaded, Self-Latching Hinges | NA | NA |

The values presented below the column labeled "Elevation" are angles measured in degrees with respect to the direction of the Nadir. The values presented below the column labeled "Azimuth" are angles measured in degrees with respect to the direction of the Velocity Vector 802, as shown in Figures 77 and 78.

Each of the embodiments of the invention, Domesat, Gearsat and Batsat may incorporate teflon thrusters for precise altitude, attitude and position control. These thrusters use small pieces of a material such as teflon as fuel. Extremely small amounts of the teflon are expelled from miniature nozzles, and the slight reactions of the spacecraft provide highly precise position control.

*System Communication Links*

Unlike prior conventional systems, the present invention utilizes a fast packet switch as an input to the gateways. Another feature of the Satellite Communication System which distinguishes it from earlier systems is that the control of calls is separated from the hardware that performs the call switching functions.

The satellite antennas 700 are divided into four subsystems. The first supports the links between the satellite and mobile terminals (MTSLs) and links between the fixed terminals and satellites (FSLs). Portable terminals, which include hand-held and mobile phones installed in vehicles, the term fixed terminals F refers to terminals that are installed in fixed locations like office buildings or residences. They may range from fixed terminals serving a single telephone to fixed terminals F providing up to 30 trunks serving groups of phones within a single building or in a rural town. In one embodiment of the invention, the FT antenna system includes a steerable transmit antenna and a steerable receive antenna which provide 30 dB of gain and 27 dB of gain, respectively. These antennas automatically track a fixed frequency pilot carrier tone from the satellites. They are steerable over a 100 full angle cone. Antennas used on MTs have 18 dB of transmit gain and 15 dB of receive gain.

MTSL data is transmitted at a burst data rate of 450 KBPS and a duty cycle of 6.25%. The uplink uses the 29.5 to 31 GHz band and the downlink uses the 19.7 to 21.2 GHz band. One-fourth DS-0 capacity (16 KBPS) is provided. The modulation format used is 8-PSK with 2/3 rate coding. Assuming a bandwidth efficiency factor of 1.5, each MTSL requires 0.28 MHz. Average terminal transmit power is 16mW (0.26 W peak) and average satellite transmit power is 12mW (0.19 W peak). Assuming a 512 bit packet, the beams would dwell on each cell for 1.138 millisecond (512 BPS/450 KBPS). Thus they come back to the same cell every 23.111 milliseconds (16 x 1.444 millisecond). When a transmit beam switches to a cell it sends a message saying, in effect, "beam on cell N" on a fixed beam identification frequency that all MTs monitor. The satellite also sends any packets addressed to MTs in cell N on the frequency assigned to that MT. Finally the satellite sends any paging requests on a fixed paging frequency that all MTs monitor. All of these transmissions occur simultaneously (FDMA).

Active MTs can be in one of three modes: waiting for call, ready to initiate call, or call in progress. An MT waiting for calls monitors the paging channel and periodically sends a "Here I am" message in response to a "Beam on cell N" message on the fixed frequency assigned for this purpose. The "Ilere I am" message is short relative to a packet and the MT randomly selects one of the ten 100 microsecond slots from 0 to I milliseconds after the receipt of the "Beam on cell N" message to send the "Here I am" message. This minimizes the probability of collision. The "Here I am" message allows the system to update a database of the current location of PTs.

An MT ready to initiate a call or an MT that has been paged responds to the "Beam on cell N" message by sending a "Request for assignment" message on the fixed frequency assigned to the calling channel. The "Request for assignment" message is short relative to a packet and the MT randomly selects one of the ten 100 microsecond slots from 0 to 1 milliseconds after the receipt of the "Beam on cell N" message to send the "Request for assignment". This minimizes the probability of collision. After sending a "Request for assignment" message, the MT monitors the fixed frequency assignment channel for an assignment message. The assignment message tells the MT which satellite and cell to respond to, and which frequency to use. If an MT does receive an assignment within 40 nisec of sending a request, it assumes that the request was blocked and re-requests. On the average it will take 120 msec to obtain an assignment.

An MT in the call in progress mode has already been assigned a cell number and frequency slot. When it receives the "Beam on cell N" message for its cell it transmits any packet it has waiting on the assigned frequency slot and receives any packet from the satellite on the assigned receive frequency slot. If the MT does not have a packet ready it transmits an empty packet. Whenever an MT in the "call in progress" mode sends a packet to the satellite it includes, in the header, information which can be used to identify the satellite ID and cell number from which it has received "Beam on cell N" messages and the channel (frequency) assigned as a result of the "Request for Assignment" message. This information is used by the destination terminal to address its packets to this terminal.

Another option for receiving calls is for the satellites to carry a VHF pager payload. The satellites would then page the terminal similarly to a conventional pager. The terminal user would then know to enable the terminal to receive his call. The Fixed Terminal/Satellite link is substantially similar to the MT/Satellite link. Similar, but more powerful satellite antennas are used. The FSLs use a different frequency allocation and employ separate paging, calling, and assignment channels.

The second antenna subsystem supports the links between the satellites S and gateways G (GSLs), and includes eight electronically steerable arrays pointed towards the Earth. The third antenna subsystem supports the links among the satellites (ISLs), and includes of a band of electronically steerable antennas around the circumference of the satellite. The fourth antenna subsystem consists of an Earth coverage antenna for the satellite GSL, FTSL, and PTSL pilot tone. The gateways are the interfaces between the present invention and public telephone networks. They are dedicated fixed sites consisting of two antenna subsystems separated by 30 to 50 KM. The sites are connected by line-of-sight microwave or fiber optic links. This separation provides spatial diversity that virtually eliminates rain outages. Each gateway antenna subsystem includes a steerable receive antenna and a steerable transmit antenna. The receive antenna provides 41 dB of gain and the transmit antenna provides 41 dB of gain. These antenna are steerable over a 100 degree full angle cone.

Figure 4 shows the basic design of a gateway terminal. Gateway terminals provide network services such as billing, network database, administration, maintenance, and satellite operations. The GSL uplink uses the 27.5 to 29.5 GHz band and the downlink uses the 17.7 to 19.7 GIIz band. The GSLs are dedicated, and the constellation supports all authorized GSLs on a continuous basis. The gateway transmit antennas provide 45 dB of gain and autotrack the satellite pilot carrier signal. Gateway receive antennas provide 42 dB of gain and also autotrack the pilot carrier signal. Satellite gateway antennas provide 41 dB of gain. The nominal uplink and downlink transmit powers are 0.48W and 0.36W continuous, respectively. The data rate is 170 MBPS with 32-CROSS modulation and rate 4/5 coding. The GSL channel density is 1 GSL channel/51 Mhz. Each satellite can support up to 8 GSLs simultaneously and each GSL can support up to 12 GSL channels. The required frequency allocation is 612 Mhz. Spatial multiplexing allows all satellites to share the same allocation (100% reuse). The satellites cooperatively assign each gateway to one of the satellites. A standard ISL link communication packet stream is used for this purpose and for reassignments as the satellite geometry changes. The GSL is robust enough to support operation in high humidity (95% RH, 35 degrees C) environments with rain clouds and rain at the 99.9th percentile for sub-tropical wet temperate continental areas region D2. Spatial diversity is used to virtually eliminate rain outages.

Each Inter-satellite Link (ISL) channel is 170 MBPS with 32-CROSS modulation and rate 4/5 coding. The channel density is 1 ISL channel/51 MHz. Each satellite can support up to 8 ISLs simultaneously and each ISL can support up to 12 duplex ISL channels. Thus the required frequency allocation is 1,224 MHz. Spatial diversity allows all satellites to share the same allocation (100% reuse). The ISL antennas provide 35 to 50 dB gain and autotrack. The nominal transmit power is 0.5 W. The ISLs use the 59 to 64 GHz band.

All of the links utilize electronic power control of the RF transmitters to ensure that only the minimum amount of power necessary to carry out the desired communication is used. Thus minimum transmit power is used for unobstructed links and clear sky. Transmit power is increased to compensate for shadowing and rain.

Table 1A:

| Frequency Allocation | | | |
|---|---|---|---|
| The RF bandwidth requirements are given by: | | | |
| LINK | CHANNELS | Bandwidth/Channels | Bandwidth Required |
| MTSL(u) | 720/cell | 0.275 MHz | 198 MHz |
| FTSL(u) | 360/cell | 1.1 MHz | 396 MHz |
| GSL(u) | 12 | 51 MHz | 612 MHz |
| | | | |
| MTSL(d) | 720/cell | 0.275 MHz | 198 MHz |
| FTSL(d) | 360/cell | 1.1 MHz | 396 MHz |
| GSL(d) | 12 | 51 MHz | 612 MHz |
| | | | |
| ISL | 24 | 51 MHz | 1224 MHz |

The GSL and ISL bandwidth can be reused 100% from satellite to satellite because of the small antenna beamwidths. The MTSL and FTSL bandwidth can be re-used 100% from Earth fixed cell 606 to Earth fixed cell 606 because of the TDMA scanning pattern.

*Call Handling*

Figure 5 provides a schematic illustration that is commonly referred to as a "ping-pong" diagram in the telephone business. This figure represents the sequence of events which occur when a call is placed and handled by the present invention. Once a terminal has been assigned a communication channel as described previously, it sends a "Call Request" message to the satellite $S_A$ which assigned it a channel. This satellite forwards this message to one of a set of "Feature Processor" systems F which may be located on the ground or within another satellite. Included in the Call Request message is the identity of the terminal requesting to make the call $T_A$ and the identity of the called terminal $T_B$. The Feature Processor communicates with one of a set of "Database" Processors (which may be located on the ground or in a satellite node) to update the terminal's current location information and to obtain information including the services the terminal can use and the terminal's "Authentication" Key $N_A$.

The Feature Processor uses the terminal's Authentication Key $N_A$ to encrypt a 128-bit random number N which is composed of two 64-bit fields, $N_K$ (the Link key), and $N_R$ (the Response key). A private key encryption and decryption Algorithm A can be used, such as the well-known DES standard. The Feature Processor sends the encrypted number $N_E$ to the terminal. The terminal decrypts $N_E$ using its own Authentication key $N_{AT}$ and Algorithm A at to derive the two 64-bit numbers $N_{KT}$ and $N_{RT}$. It uses the derived key $N_{KT}$ to encrypt $N_{RT}$ (using Algorithm A) and sends this to the Feature Processor. The Feature Processor decrypts $N_{RT}$ using the previously derived key $N_K$ and Algorithm A. If the result matches the previously derived $N_R$, this proves that the terminal possesses the correct Authentication Key, and the terminal is allowed to use the system services. All future packets transmitted by this terminal during this call are encrypted using the derived Key $N_K$ (which is equal to $N_{KT}$) and the Algorithm A.

A similar process is used to validate and encrypt other system communication links. This method prevents the fraudulent use of system services and the "eavesdropping" on terminal-to-satellite links, both of which are serious problems in similar systems.

Following the authentication of the originating terminal $T_A$, the Feature Processor interrogates a Database Processor to determine the last known location, Authentication Key, and Service Features of the called terminal $T_B$ (if TB is a subscriber to this network), or the identity of the Gateway System serving $T_B$ (if $T_B$ is a subscriber of another network). The Feature Processor uses the Autonomous Orhit Determination (AOD) algorithm to determine the identity of the Satellite $S_B$ currently serving the location of Terminal $T_B$ or the corresponding Gateway. The location information (referred to in Figure 5 as Routing Instructions) is returned to $T_A$.

Terminal $T_A$ sends a Call Setup Request packet to Satellite $S_B$. This packet identifies the called Terminal $T_B$ or associated Gateway G. If $T_B$ is served by a Gateway, Satellite $S_B$ sends the Call Setup packet to the Gateway, which then completes the call setup to Terminal $T_B$ and returns the Connect packet to Terminal $T_A$ once $T_B$ has answered the call. If $T_B$ is not served by a Gateway, Satellite $S_B$ broadcasts a paging message to alert $T_B$. Terminal $T_B$ responds to the page by sending a "Request for Assignment" message to Satellite $S_B$ as detailed previously. In a manner similar to that described for Terminal $T_A$, Satellite $S_B$ assigns $T_B$ a communication channel, and initiates the Authentication and Link Encryption procedures using Feature Processor F. At the successful completion of these procedures, the Connect packet is returned to $T_A$, and the connection is established.

Packets transmitted between $T_A$ and $T_B$ contain a Node and Call Identifier field used to route the packet through the fast packet switch nodes to their destination. If the Node or Call Identifier associated with a Terminal changes during a call, the new information is transmitted to the other Terminal in subsequent packets to prevent a disruption of the call.

*System Services*

In addition to offering basic voice service, the present invention will also be capable of carrying data. The system is designed to relay data for alarm and security services, telemetry services, facsimile and encryption. Like land-based networks, the satellite constellation will also have the ability to provide a broad spectrum of business services, including AIOD, FX, OPX, 800, and WATS. Subscribers will also be able to use the present invention as a Centrex service which connects related users in a virtual private exchange similar to conventional PBX service. The network disclosed in this application will also support currently available phone company products, such as pay phone, free-of-charge emergency lines such as the 911 service offered in the United States, paging, calling party identification, call forwarding, call transfer, call trace, three-way calling, conference calling, and call pickup.

*Technical Specifications of a Preferred Embodiment*

Specific details and characteristics of the one of the preferred embodiments of the present invention are supplied in the tables that follow. These specifications are presented as particular examples which may be varied if alternative embodiments are employed to practice the invention. Those persons ordinarily skilled in the electronics and telecommunications arts will appreciate that this data is not intended to limit the scope of the invention, but, rather, provides a more comprehensive disclosure of design details.

Table 1B:

| Cells over land | | |
|---|---|---|
| ITEM | Quantity | Percent |
| Orbits | 21 | |
| Satellites/Orbit | 40 | |
| Total Satellites | 840 | |
| Maximum Cells/Satellite | | 4,096 |
| Total Earth-Fixed Cells | 1,280,000 | |
| Percent Ocean | 832,000 | 65.00% |
| Cells over Land | 448,00 | 35.00% |

Table 1C:

| | | | | | |
|---|---|---|---|---|---|
| Traffic Density Distribution | | | | | |
| ITEM | Percent | Cells | E/Cell | Total | Percent |
| | | | | Erlangs | Total |
| % Rural | 90.00% | 403,200 | 1.0 | 403.200 | %5 |
| % Semi-rural | 9.00% | 40,320 | 30.0 | 1,209,600 | 15% |
| % Suburban | 0.95% | 4,246 | 346.0 | 1,515,136 | 20% |
| % Big City | 0.05% | 224 | 21,435.0 | 4,801,440 | 60% |
| Total | 100.00% | 448,000 | | | 100% |
| Total O&t (E, HD) | | | | 7,929,376 | |
| Total O&T (E, ABS) | | | | 5,286,250 | |

Table 2:

| | | | | | |
|---|---|---|---|---|---|
| Calculation of Number of Intersatellite Links | | | | | |
| ITEM | Percent | Hops | Quantity | Erlangs | Virtual Trunks |
| Intersatellite Traffic | 10.00% | | 528,625 | | |
| Intersatellite 1 hop | 40.00% | 1 | 211,429 | 211,429 | |
| Intersatellite 2 hops | 25.00% | 2 | 132,156 | 264,312 | |
| Intersatellite 3 hops | 18.00% | 3 | 95,152 | 285,456 | |
| Intersatellite 4 hops | 8.00% | 4 | 42,290 | 169,160 | |
| Intersatellite > 4 hops | 9.00% | 5 | 47,562 | 237,810 | |
| Total | | | | | 1,168,167 |
| Number of Sats | 100.00% | | 841 | | |
| Active Sats | 15.00% | | 126 | | |
| Virtual Trunks/Sat | | | | | 9,271 |
| Mbit/s at 64 kbit/s/VT | | | 593 | | |
| ISL/sat at 135 Mbit/s | | | 4 | | |

Table 3:

| | UPLINK | DOWNLINK |
|---|---|---|
| Mobile Terminal-Satellite Link (MTSL) RF Plan | | |
| Frequency Band | 29.5 - 31 GHz | 19.7 - 21.2 GHz |
| Polarization | RHCP | RHCP |
| Requested Bandwidth | 198 MHz | 198 MHz |
| Channel Bandwidth | 275 KHz | 275 KHz |
| Number of Channels | 720 | 720 |
| Modulation Format | 8-PSK | 8-PSK |
| Multiplexing | FDMA/TDMA | FDMA/TDMA |
| Duty Cycle | 6.25% | 6.25% |
| Emission Designator | 275 KG1D | 275 KG1D |
| Nominal Peak XTM Pwr | 0.255 W | 0.188 W |
| Max. Peak XTM Pwr | 12.8 W | 1.20 W |
| Max. EIRP Per Channel | 28.6 dBW | 38.8 dBW |
| Max. EIRP Per Beam | 57.2 dBW | 67.4 dBW |
| Peak Flux Density in 1 MHz | -111 dBW/m$^2$ | -95 dBW/m$^2$ |
| Receiving System Noise Temp | 652° K | 394° K/504° K |
| G/T | 9.9 dB°K | -11.5/-12.5 dB°K |

Table 4:

| Fixed Terminal-Satellite Link (FTSL) RF Plan | | |
|---|---|---|
| | UPLINK | DOWNLINK |
| Frequency Band | 27.5 - 31 GHz | 17.7 - 21.2 GHz |
| Polarization | RHCP | RHCP |
| Requested Bandwidth | 396 MHz | 396 MHz |
| Channel Bandwidth | 1.1 MHz | 1.1 MHz |
| Number of Channels | 360 | 360 |
| Modulation Format | 8-PSK | 8-PSK |
| Multiplexing | FDMA/TDMA | FDMA/TDMA |
| Emission Designator | 1M10G1D | 1M10G7D |
| Nominal Peak XTM Pwr | 0.064 W | 0.047 W |
| Max. Peak XTM Power | 3.2 W | 0.305 W |
| Max. EIRP per Channel | 34.6 dBW | 32.8 dBW |
| Max. EIRP per Beam | 60.2 dBW | 58.4 dBW |
| Peak Flux Density in 1 MHz | $-112$ dBW/m$^2$ | $-107$ dBW/m$^2$ |
| Receiving System Noise Temp | 652° K | 394° K/504° K |
| G/T | 9.9 dB/°K | 0.5/-0.5 dB/°K |

Table 5:

| Gateway-Satellite Link (GSL) RF Plan | | |
|---|---|---|
| | UPLINK | DOWNLINK |
| Frequency Band | 27.5 - 29.5 GHz | 17.7 - 19.7 GHz |
| Polarization | RHCP | RHCP |
| Requested Bandwidth | 612 MHz | 612 MHz |
| Channel Bandwidth | 51 MHz | 51 MHz |
| Number of Channels | 12 | 12 |
| Modulation Format | 32-QAM | 32-QAM |
| Multiplexing | SPATIAL | SPATIAL |
| Emission Designator | 51M0D7D | 51M0D7D |
| Nominal XTM Power | 0.48 W | 0.355 W |
| Maximum XTM Power | 24 W | 2.3 W |
| Max. EIRP per Channel | 58.3 dBW | 44.1 dBW |
| Max. EIRP per Beam | 69.1 dBW | 54.9 dBW |
| Peak Flux Density in 1 MHz | $-108$ dBW/m$^2$ | $-114$ dBW/m$^2$ |
| Receiving System Noise Temp | 652° K | 394° K/504° K |
| G/T | 12.4 dB°K | 15.5/-14.5 dB/°K |

Table 6:

| Inter-Satellite Link (ISL) RF Plan | |
|---|---|
| | LINK |
| Frequency Band | 59 - 64 GHz |
| Polarization | RHCP |
| Requested Bandwidth | 1224 MHz |
| Channel Bandwidth | 51 MHz |
| Number of Channels | 24 |

Table 6: (continued)

| Inter-Satellite Link (ISL) RF Plan | |
|---|---|
| | LINK |
| Modulation | 32-QAM |
| Multiplexing | SPATIAL |
| Emission Designator | 51M0D7D |
| Minimum XTM Power | 0.5 W |
| Maximum XTM Power | 2 W |
| Max. EIRP per Channel | 52.5 dBW |
| Max. EIRP per Beam | 63.3 dBW |
| Peak Flux Density in 1 MHz | $-96$ dBW/m$^2$ |
| Receiving System Noise Temp | 687° K/4452° K |
| G/T | 21.1/13.0°K |

Table 7:

| MTSL Modulation Parameters | |
|---|---|
| Source Data Rate | 18 KBPS |
| Packet Efficiency | 512/416 bits/source bit |
| Packet Data Rate | 22.254 KBPS |
| Coding Rate | 2/3 |
| Coded Data Rate | 33.231 KBPS |
| Compression Factor | 20.312 |
| Burst Bit Rate | 675 KBPS |
| Modulation Efficiency | 3 bits/Hz (8-PSK) |
| Symbol Rate | 225 KSPS |

Table 8:

| FTSL Modulation Parameters | |
|---|---|
| Source Data Rate | 72 KBPS |
| Packet Efficiency | 512/416 bits/source bit |
| Packet Data Rate | 88.615 KBPS |
| Coding Rate | 2/3 |
| Coded Data Rate | 132.923 KBPS |
| Compression Factor | 20.312 |
| Burst Bit Rate | 2,700 KBPS |
| Modulation Efficiency | 3 bits/Hz (8-PSK) |
| Symbol Rate | 900 KSPS |

Table 9:

| GSL Modulation Parameters | |
|---|---|
| Source Data Rate | 138.125 MBPS |
| Packet Efficiency | 512/416 bits/source bit |
| Packet Data Rate | 170 KBPS |
| Coding Rate | 4/5 |

Table 9: (continued)

| GSL Modulation Parameters | |
| --- | --- |
| Coded Data Rate | 212.5 MBPS |
| Modulation Efficiency | 5 bits/Hz (32-QAM) |
| Symbol Rate | 42.5 MSPS |

Table 10:

| ISL Modulation Parameters | |
| --- | --- |
| Source Data Rate | 138.125 MBPS |
| Packet Efficiency | 512/416 bits/source bit |
| Packet Data Rate | 170 KBPS |
| Coding Rate | 4/5 |
| Coded Data Rate | 212.5 MBPS |
| Modulation Efficiency | 5 bits/Hz (32-QAM) |
| Symbol Rate | 42.5 MSPS |

*Spacecraft Position and Attitude Determination*

Each spacecraft in the constellation requires orbital position information about itself and other satellites in the constellation. Each satellite carries a navigation computer which 1000 that depicts a satellite S in low Earth orbit. The satellite is capable of routing telephone calls carrying voice, data, and video signals among ground stations 1006 and 1008 and other satellites 1002. The AOD software is used to calculate position information accurate to within 10km for a constellation of 840 satellites S orbiting at 700 km (435 miles). Although the preferred embodiment employs an orbital altitude of 700 km, the invention may utilize an altitude of from approximately 500 km to approximately 1000 km. The population of the constellation may include one hundred or more satellites, which are deployed in at least eight orbital planes. In the preferred embodiment of the invention, each of the orbital planes is inclined to the equator at an angle of 98.2 degrees. This inclination angle may, however, vary from 65 to 125 degrees. The eccentricity of the orbits may extend from 0.001 to 0.005.

The packets 422 that are transmitted and received by the satellites S include headers 424 which hold address information that enables switching circuitry 438 aboard each spacecraft to route the packet to its proper destination. The header 424 includes time and frequency information that is used by a microprocessor called an orbit determination processor aboard each satellite to generate an inter-satellite almanac packet. Unlike communications packets 422 which are constantly relayed among spacecraft in the system to their final destinations on the ground, inter-satellite almanac packets are broadcast among the entire constellation at least once every day. These inter-satellite packets contain an almanac message that contains information which is used to calculate orbital position.

Ranges between satellites and ground stations can be computed using a pseudo-range algorithm that converts time differences into distances. Two satellites, A and B, each broadcast packets that include a time-tag of the time of transmission. The microprocessors onboard each spacecraft also measure the arrival times of the packets 422. These measurements are then exchanged between satellites. The average of the two measurements is a measure of the range between the two satellites. Alternatively, a satellite can send a package to its neighbors which is addressed back to itself. By measuring the time it takes for the word to return, the range to the adjacent satellite is computed. Alternatively, Doppler shifts 1010 can be measured instead of differences in time. This measurement is made from signals called "pilot tones" which are broadcast by the satellites to steer the antenna beams that transmit the call traffic to ground stations. This alternative measurement process is independent of satellite data links. The measurements of the satellite Doppler shifts observe the range-rate between the satellites.

Figure 80 is a block diagram 1012 that illustrates the functional relationships among the autonomous orbit determination algorithm, time and frequency measurements 1014 that are used as inputs, and related hardware including radio determination satellite service (RDSS) circuitry 1020, satellite guidance and control systems 818, communication circuitry 1022, and antenna control systems 1024.

Figure 81 is a block diagram that reveals details of position determination circuitry 1026. A communication link 1028 conveys information to a demodulation stage 1030, which forwards information about the time of perception of packets 1040 to a time and frequency synchronization stage 1042. A frequency synthesizer 1032 is coupled to the data demodulation stage 1030 and to a phase locked loop stage 1036. The frequency synthesizer 1032 is also coupled to an oscillator 1034. The phase locked loop stage 1036 and an antenna control stage 1024 receive pilot tones 1038 as inputs. The phase locked loop stage 1036 measures Doppler shifts 1044, while the antenna control stage 1024 determines correct antenna pointing directions 1048. The Doppler measurements 1044 serve as inputs to an autonomous orbit determination processor 1046. The pointing directions 1048 are used for attitude determination 1050.

Figure 82 is a schematic diagram 1052 showing a satellite S in orbit communicating with a gateway G. The figure illustrates the calculation of attitude information computed by the spacecraft. The AOD methods not only provide position information which is used to select optimal pathways for routing communications traffic, but also supplies output that is utilized for spacecraft guidance and control and inter-satellite antenna steering and generates pseudo-ranging packets for highly accurate radio determination satellite service (RDSS).

*Traffic Routing*

Switching circuits about each satellite in the constellation transport packets of data through a low Earth orbit satellite network. Each satellite furnishes intelligent and autonomous on-board switching capabilities and provides synchronous, circuit-switched communication services with uniform end-to-end transmission delays. The routing methods implemented on the switching hardware manage the satellite communication links between the origin and destination of telephone calls which convey voice, data, or video information. The spaceborne switches are capable of selecting the best series of connections from a terrestrial gateway or terminal up through a satellite constellation and back down to Earth. The pathway that is selected for a particular call must be highly adaptive and able to change rapidly in response to the constantly changing geometry of the low Earth orbit constellation. Based upon inputs from the position determination algorithms that define the length of each link in the system, the methods implemented by the present invention determine the optimal route for each transmission from each satellite and also establishes the most efficient distribution pattern of traffic throughout the system.

One of the preferred embodiments of the traffic routing invention comprises an asynchronous fast packet switched network in which the user bits are collected synchronously but transported in packets having a variable transmission delays. The network employs datagram switching, as opposed to conventional virtual circuit switching techniques. Packets associated with the a single phone call do not necessarily travel along the same route, and consequently arrive at their common destinations at different times. Any re-ordering of packets that arrive due to variations in transit delays are re-sequenced by circuitry that resides at the destination node. The network's switching nodes are located aboard the satellites, which are constantly moving relative to each other. This continuous motion causes the propagation delays along the links to vary perpetually. As satellites of the constellation move in their different orbits, the set of satellites visible from any network element, such as a satellite, gateway or user terminal, constantly changes. A satellite that is visible from a gateway at some particular time may not be visible a few minutes later, and a previously invisible satellite may then appear. The underlying network "topology", which is defined as the interconnection geometry among the network elements experiences constant change. Ilardware and software that are collectively called the "router" must continuously adapt to the changing topology. The time varying network topology is irregular, unlike conventional regular networks that utilize ring, cube, or star topologies. The present invention uses an arbitrary mesh configuration. The network topology also changes when new satellites are deployed, when the useful lives of old satellites come to an end, or when satellite and link failures occur. The traffic intensity or "load" on links changes randomly due to normal traffic fluctuations. These load changes lead to variable link queuing delays in addition to variable link propagation delays. "News" of events in one portion of the network does not reach all nodes simultaneously, requiring the router to make decisions with imperfect information.

The traffic routing switches overcome the limitations encountered by conventional packet switching using virtual circuits. The present invention utilizes a "datagram" approach that routes every packet conveyed by the system independently at every node in the network. The packets are directed along an optimized pathway through the network by a fast packet switch that directs traffic based on instructions from a microprocessor that continuously runs an adaptive routing algorithm. This microprocessor uses orbital position information generated aboard each spacecraft to monitor the rapidly changing topology of the constellation and the distribution of traffic among its nodes and links.

In general, the hardware that is responsible for traffic routing comprises a self-routing fast packet switch, an input packet processor, a routing cache memory, and an adaptive routing processor. The input packet processor functions like a gatekeeper or guide that extracts the destination node address from each packet and uses it to access routing information stored in the routing cache memory. The adaptive routing processor constantly updates the routing cache memory so each satellite has an accurate "knowledge" of the whereabouts of all its neighbors, and of the expected packet delay from adjacent nodes to all possible destination nodes. Based upon this position and expected delay information, the adaptive routing processor selects the best pathway from a particular satellite to a single neighboring satellite, and the packet is then moved through internal switch circuitry onboard the satellite on its way to other spacecraft in its journey to some eventual destination on Earth. The present invention optimizes the utilization of the network facilities and minimizes transmission delays and variances of transmission delays. By precalculating the optimal route for each packet one step at a time at each satellite, the amount of time required to process individual packets is greatly reduced.

The Traffic Routing Environment

Although one of the preferred embodiments of the *Satellite Communication System* comprises 21 sets of 40 spacecraft traveling in 21 separate orbital planes, the discussion of the traffic routing portion of the invention assumes a satellite constellation comprising 336 satellites traveling in 21 orbits with 16 satellites in each orbit. The satellite altitude is fixed at 700km (435 miles). The relatively large numbers of satellites in the various preferred embodiments of the constellation were selected to provide continuous coverage of the Earth's surface at high angles of radiation with respect to the Earth's surface, thus avoiding foliage, terrain, and minimizing the length of the signal's passage through rain. Each of the individual 336 spacecraft functions as a sovereign switch which knows the position of its neighbors, and independently handles traffic without ground control. The satellites are capable of transporting calls to millions of customers using portable mobile and fixed residential and business terminals, and gateways to public phone networks. The constellation uses the 20 and 30 Ghz frequency bands for communications between Earth and the constellation, and the 60 Ghz band for communicating among the satellites. The use of these extremely high frequencies allows for the use of relatively low power, miniaturized antenna components both on the ground and aboard the satellites. The entire constellation is designed to serve over twenty million subscribers and 60,000 full time DS-0 (64kbps) circuits. The satellites will be coupled to traditional public and private phone systems on the ground through gateways which each utilize relatively large antennas and handle large volumes of call traffic. In the preferred embodiment of the invention, this interface between the terrestrial systems gateway and the terrestrial network is based on current standard ISDN interfaces to preserve compatibility. Unlike presently available cellular systems which relay calls to subscribers from local radio towers, the present invention offers direct communication between the satellites of the constellation and individuals using lightweight portable mobile and fixed telephones.

One of the important inputs to the fast packet switch circuitry is a continuous stream of orbital position information which is generated aboard each satellite by a navigation computer running Autonomous Orbit Determination algorithms (AOD). The AODs compute ephemeris parameters for each satellite. These parameters are broadcast to every satellite in the constellation, so that all the spacecraft "know" their own positions and the position of every other satellite in the network. One embodiment of the AOD algorithms employs an inter-satellite ranging algorithm that calculates distances between spacecraft by measuring time delays that are inherent in fast-packet switching transmissions. A second embodiment of the AOD software incorporates an algorithm which fixes spacecraft position by computing differences in Doppler shifts of satellite transmissions. A third version uses known location fixed Earth reference stations to determine position. Once the orbital position information is generated, it is used as an input to an adaptive routing processor which runs an adaptive routing algorithm (ARA). The ARA constantly monitors the changing locations of all the spacecraft in the network, and also keeps track of communications traffic congestion among the links and nodes of the system. The adaptive routing processor produces an output called "Next-node-in-path-to-destination". As the name implies, this output contains information and provides instructions for moving communications data through the network one node at a time.

The Traffic Router

The Satellite Communication System (SCS) will provide its end users with synchronous circuit switched communication services. Users at a portable P or fixed F terminal or gateway G will receive sequential deliveries of user "bits" regardless of their meaning with uniform end-to-end transmission delays. The SCS network is an asynchronous fast packet switched network in which the user bits are collected synchronously but transported in packets having a variable transmission delay. The efficiency of the network is achieved by employing "datagram" switching, as opposed to virtual circuit switching. Since one phone call may comprise many individually routed packets which may take different routes to reach a common destination, the network must include software and hardware systems which account for out-of-sequence arrivals of packets and for variations in packet delays. Figure 83 presents a block diagram which illustrates the node hardware architecture 1100 employed by the present invention. A common control stage 1102 aboard each spacecraft is capable of conveying internode messages 1104 and 1106 to receivers 1108 and transmitters 1110 which communicate with the other satellites S in the constellation. The common control stage 1102 is also linked to a fast packet switch 438.

The link control process 1112 is summarized in Figure 84, while the routing process 1114 is illustrated in the flow diagram shown in Figure 85. Service demand 1116 from subscribers 1118 situated around the world prompt the routing algorithm 416 to determine optimum pathways for call traffic using routing tables 1120 and other local processes 1122. Figure 86 exhibits the dynamic packet routing method 1124. The router 1126 uses entries stored in routing tables 1120 to instruct packet routers 1128 how to process packets 422 to a sorting network 1130 and associated transmitters 1132. Three disparate rates of diffusion 1134, 1136 and 1138 for routing information diffusing through the constellation are pictured in Figures 87, 88 and 89. A block diagram of an output module 1140 is revealed in Figure 90, the details of the packet router 1128 are displayed in Figure 91, and Figure 92 supplies an enhanced view of the switching architecture 1142.

Figure 93 reveals the structure of packets 422 which are conveyed through the network. All packets 422 conveyed through the network are 512 bits long. The first portion of the packet is a header 424 comprising 80 bits. The header 424 is a collection of control fields that define the packet priority and type, and contain routing information. A routing field within the header 424 includes a destination field that contains a destination node and a specific call/delivery identification within the destination node. A 416 bit payload and a 16 bit cyclic redundancy check (CRC) accompany the header. The payload 426 carries the substance of the message which the packet transports, and the CRC is used to detect errors. The structure recited above is used as a basis for all of the discussion and examples which appear in this document. For 150 Mbit links among the nodes of the network, the transmission time for a 512 bit packet is

$$T_s = \frac{512}{150,000,000} = 3.413\, microseconds$$

The discussions and examples which follow are also founded upon the presumption that all the circuits that are employed are type DSO circuits, which include a 64 Kb channel, and an associated 8K data channel. Since each packet off loads 416 bits at a time and the DS0 can handle a total of 72Kb per second, a DS0 generates

$$\frac{72,000}{416} = 173.077\, packets\ per\ second$$

or one packet every 5.777 milliseconds:

$$\frac{416}{72,000} = 5.777\, milliseconds$$

Each satellite constellation is a switching node which is treated equally as an independent and sovereign member of the network. Since each satellite is constantly moving relative to all the other satellites in the network, the broadcast links, and, therefore, the propagation delays of the packets, also vary. As the satellites move in their orbits, the group of satellites which is visible from any other satellite, gateway or terminal at any given time is constantly changing. A satellite that is visible from a gateway G at a particular time may not be visible a few minutes later, and a previously invisible satellite may conic into view within the same few minutes. The underlying network topology, which embodies the interconnection geometry among the network elements, changes continuously, and requires the router to continuously adapt to the changing topology. The time varying network topology is irregular, as opposed to the regular topology of a ring, cube or star, and represents an arbitrary mesh configuration. The network topology also changes when new satellites are deployed, when the useful life of some members of the original constellation come to an end, or when satellite or link failures occur. The traffic load or intensity on links changes randomly due to normal traffic statistics fluctuations and varying call patterns. These load changes lead to variable link queuing delays, in addition to variable link propagation delays. Because "news" occurring in one portion of the network does not reach all the nodes in the network simultaneously, the router must make decisions based upon imperfect information. The deficiencies of the information that is available to the router are caused by both a lack of correctness and the tardiness.

## Distributed routing

Packets 422 generated at traffic sources are switched through the network in a store-and-forward fashion. The router 1128 at each hop forwards the packet to the next hop, minimizing the packet end-to-end delay which the packet experiences in its trip from the source to the destination. The decision of how to forward a packet 422 is determined by each hop independently with no a-priori or static route determination. Routing decisions are based on the latest information available to the router at the switching hop, and reflect dynamic global network considerations as well as the local node considerations. In the one of the preferred embodiments, both satellites S and gateways G possess routing capabilities, so the term "node" is used to refer both to satellites and to gateways. A gateway is treated simply as a stationary satellite. The term "routing" not only includes the process of directing each packet at each node, but embraces the related operations of controlling traffic flow, overloads and congestion; and optimizing traffic distribution.

The router considers data collected locally from the router itself, as well as from other local sources such as the topology manager. Routing data is also received from peer routers located at neighboring nodes. Inter-node message communication is facilitated by the node Message Transport System (MTS). The router forms its local "view of the world" from this information, and shares it with local processes and peers in neighboring nodes. One of the key characteristics of the present invention relates to the method that a router in each node employs to exchange information with its neighboring peers. This exchange permits a node to learn the specific status of its neighbors and its neighbors' views of the rest of the network. Each node can influence or even coerce its neighbors to factor the local node's state into their own actions. The node can then deduce and construct a local routing strategy consistent with the rest of the network, and can also participate in influencing the overall distributed network routing strategy. The final distributed strategy results from the joint cooperation of all nodes. This "self-organizing" approach is accomplished subject to the following objectives:

1. Interaction is permitted only among immediate neighbors. If each of the N network nodes has an average of K neighbors, the total number of "pair-wise" interactions is on the order of K*N instead of the astronomical N*(N-1) pairs of interactions.
2. The routing strategy deduced independently by each node must be correct and consistent throughout the network. In normal operation no routing loops may be created. Major failure events however may lead to temporary but detectable and recoverable routing loops.
3. Minimum end-to-end packet delivery delay must be assured. The optimal performance of the entire network is judged based on both local and global network considerations.
4. The network is configured to permit full routing connectivity so that any node n can optimally communicate with any other node x.
5. Alternate routes are created whenever possible.
6. The network must be adaptive to changes in network load and traffic patterns, and be capable of functioning in an arbitrary network topology.
7. The network must maintain the highest levels asynchronous and time- independent behavior. The network always "tries" to do the best job at any given time with the information and nodes that are currently available.
8. The entire system is self-initializing, and is capable of automatically learning about previously unknown nodes.

Some of the essential parameters of one of the preferred embodiments of the invention are described in Tables 12 and 13.

Table 12:

| The Satellite Constellation | |
| --- | --- |
| Satellite Altitude | 700 km |
| Orbital Inclination | 70 degrees |
| Elevation Mask Angle | 15 degrees |
| Intra-orbit Overlap Ratio | 0.2238 |
| Band Overlap Ratio | 0.1249 |

Table 13:

| Satellite Deployment | |
| --- | --- |
| Orbits | 21 |
| Satellites per Orbit | 16 |
| Total Satellites | 336 |

Both Tables 12 and 13 are refer only to the discussion contained in the section of the specification entitled "Traffic Routing".

Estimating Packet Delays

The router in each node n maintains a local estimate of the delay to any other node x for each of its output links 1, 2,...,L. The delay from n to x over link l is given by:

$$\text{Algorithm 1: } D(n, x, l) = Tp(l) + Tq(l) + NDl(l^*, x)$$

Tp(l) is the current propagation delay of link l connecting local node n to the neighbor node terminating l at its remote edge. This neighbor is designated l* (the symbol ∗ is used to mean "the successor of)". Tp(l) varies with time as the distance between n and l* changes with satellite movement. The node link manager periodically updates the value of Tp(l) for each link. It is the node positioning capability which actually performs the physical measurements of Tp(1). Tq(l) is the current link queuing delay consisting of two components, Tb and Ts. Tb represents the time spent by a packet in the buffer waiting for all the packets ahead of it to be transmitted. Ts is the actual packet transmission time once it gets to the queue head (called the service time). Ts is a function of the packet length and the link transmission bandwidth. Clearly Tb, and therefore Tq, increase as the link load increases. An important fact to realize, however, is that the higher the link bandwidth, the wider the range of the semi-linear dependency of Tq on the offered traffic load. The functional behavior of Tq is described by the following expression:

$$Tq \sim k/(link\_bw - exerted\_load)$$

Until the exerted load approaches the link bandwidth, Tq is about constant, but beyond this point, Tq is exponential. This behavior is a direct consequence of the law of large numbers which, when applied in this context, suggests that scaling up both the link bandwidth (service capacity) and the traffic load by the same factor results in a decrease of Tq by the same factor. Because of the very high capacity of the 150 Mbit the links, the links between the nodes in the network can be used very efficiently and at loads approaching 100% of the total link bandwidth. Because the value of Tq may change very rapidly, its value is measured by hardware which tracks the link transmit buffer size. This monitoring circuitry provides an instantaneous measured value of Tq. The variable ND(l*, x) is the delay reported by neighbor l* to n stating the least delay from itself (from neighbor node l*) to destination node x. The router in n maintains a table NDI(l*, x) for each of its links, and reflects the most recent delay reported by neighbor l* to each destination x. The terms Tp and Tq are derived by node n from local information, whereas the term NDI(l*,x) represents the distributed term. From the routers' viewpoint, if load control issues are ignored, the optimal link from n to destination node x is that link l for which D(n, x, l) is lowest. The actual link used by n to forward packets to x is not always the optimal link. If objectives concerning traffic load distribution are factored into the decision, another link may be chosen.

### The Information Sent By A Node To Its Neighbors

The routing process in each satellite based node n (but not a gateway based node) sends routing data to each of its neighbors, including to its gateway neighbor nodes periodically. The routing data is refreshed about every 50 milliseconds. In additional to the regular updates every 50 msec, routing data is transmitted when a local event has been detected by the local router affecting its own routing tables; upon receiving information from a neighbor transforming the local routing tables in a way that might possibly affect other nodes; and upon a request by another local process, such as the topology manager, when detecting certain events affecting the router. The routing message is transported by the Message Transport System (MTS), and is sent by local node n to one of its neighbors l* (l = 1, 2, ..., L). This message is called the delay vector. It lists each node x known to n and the current minimum delay estimate D(n, x) from n to x:

Table 14:

| The Delay Vector | |
|---|---|
| Node | D(n, x) |
| 1 | D(n, 1) |
| 2 | D(n, 2) |
| . | . |
| . | . |
| x | D(n, x) |
| . | . |
| . | . |
| N | D(n, N) |

Some entries D(n, x) in the delay vector are not really the true delay from n to x. A link l may be in one of the following states:

    S1: logically disconnected;

S4: disconnect in progress; or
S5: normal information exchange.

These state names are borrowed from the X25 protocol and have similar meanings.

Generating the Transmission Delay Vector

If a link l is not in either state S4 or S5, the neighbor l* is ignored and a delay vector is not sent to it. Given n, x, and l, the value D(n, x) (an entry in the delay vector sent by n over link l to neighbor l*) is set by the router of sending node n using a Transmission Delay Vector comprising the following steps:

1. Select next destination node x.
2. If all values of x are processed, go to Step 9.
3. Use Algorithm 1, above, for each link l of n to find that link which currently yields the least D(n, x, l) to x. Call that link opt_link. If n can not reach x over any link, set opt_link to NULL.
4. If n is equal to x, set D(n, x) to 0 to reflect the delay from n to itself.
5. Otherwise, if opt_link is NULL, then set D(n, x) to infinity to signify that x can not be reached from n (infinite delay).
6. Otherwise, if opt_link is the same as link l, the link over which the delay vector is about to be sent to neighbor l*, then set D(n, x) to infinity. This step helps to avoid routing loops. The router signals to l* that it should avoid using n for reaching x because either x is not reachable at all from n (step 3 above) or that n is currently using l* for reaching x.
7. Otherwise, set D(n, x) to D(n, x, opt_link).
8. Repeat Step 1.
9. Send the delay vector to neighbor 1*.
10. If Transmission Delay Vector was triggered by the periodic vector, then send process schedule in the next transmission. (This step may be different if the Transmission Delay Vector was triggered by an urgent send request, as is described below.)

Processing Received Delay Vectors

Although each link is treated as a simplex link, the topology manager, in organizing the network topology, assures that if a link exists from node x to node y (x transmitting, y receiving) one will also be established from y to x. Multiple links may exist between the same pair of nodes. Thus if a delay vector is received by node n over the simplex input link l (from neighbor l*), a complement output link also exists from n to l*. The input link over which node n (satellite or gateway) receives a delay vector is referred to by the symbol li. Link to is its complement output link. The vector contains as many entries in it as nodes reachable by reporting node li*. Each entry ND(l*, x) in the vector is the delay from neighbor l* to node x. Upon receiving a delay vector, the local router updates table NDlo(li*,x), and deduces any implied changes. Delay vectors sent subsequently by the router to its neighbors will reflect these changes. If a delay vector is received over an input link having no associated complement output link, the message is ignored and discarded. This transient condition may arise during a link disconnect procedure, which is discussed below. Otherwise, each vector entry is processed as using a Process Reception Delay Vector comprising the following steps:

1. Set variable opt_link_changes = 0.
2. If all entries are processed, skip to step 17.
3. If x is the same as l*, then set table entry NDlo(li*, li*) = 0.
4. Otherwise, if x is the same as n, then set table entry NDlo(li*, n)= 0.
5. Otherwise, if ND(li*, x) is the same as that reported in the previous vector, that is NDlo(li*, x)= ND(li*, x), return to step 2.
6. Set NDlo(li*, x) = ND(li∗, x).
7. Set old_opt_link(x) to be the optimal link used to reach x from n up to now.
8. Use Algorithm 1 to compute old_delay(x), which is the delay estimate from n to x with the old parameters.
9. Use Algorithm 1 for each link l of n to compute new_opt_link(x): the new optimal link to x factoring in the new parameters.
10. Use Algorithm 1 to compute new_delay(x), which is the delay estimate from n to x with the new parameters.
11. If new_opt_link(x) is the same as old_opt_link(x), then return to step 2. The delay to x may have changed (up or down), but not enough to cause the optimal link to x to switch.
12. Increment variable opt_link_changes.
13. If old_opt_link(x) is NULL and new_opt_link(x) is not NULL, decide that node x is a new node which can now be reached from n via link to. Enter new x into the routing tables.

14. Otherwise, if old_opt_link(x) is not NULL and new_opt_link(x) is NULL, decide that x has been detached from the net and is no longer reachable from n. Remove x from the routing tables. This conclusion may be premature in the event of a major failure but in that case condition 13 above will occur as soon as the network performs adaptation.

15. Otherwise, if old_opt_link(x) is not NULL and new_opt_link(x) is not NULL, decide that if old_delay(x) is now very high (more than the maximum allowable transmission echo delay of 100 msec), the switch occurred because x is no longer reachable from n via old_opt_link(x), but new_opt_link(x) provides a good alternate route. This event may occur routinely when the network adapts to local or global changes in the network topology. In some cases, the switch occurs because new_opt_link(x) provides a lower delay compared to old_opt_link(x). In this case, old_opt_link(x) may become an alternate route to x.

16. Return to step 2.

17. If opt_link_changes are greater than zero, urgently send the latest delay vector to each neighbor to supply the latest changes.

Network Adaptation Through Information Diffusion

Phase 1: Topology Adaptation

When Algorithm 1 begins running within a given node, that particular node has no information about any other nodes in the network. The first delay vector received from one of its neighbors introduces n to that neighbor alone, since that neighbor itself knows only of itself as well. After a short time, each node recognizes all of its neighbors roughly within an amount of time that is approximately equal to the Tp of the link interconnecting the two neighbors. In the second "wave" of information the level of "node awareness" increases, and each neighbor g of n will report about g's neighbors, which are one or two hops away from n. Since each encounter with a new node x triggers n to urgently send the news (Process Reception Delay Vector, step 17) to its neighbors, a diffusion process is initiated, in which every node n in the network eventually learns of any other node x. Each node learns that x exists, the best way to reach node x and a first order estimate of the delay from n to x. Any subsequent topological change resulting from nodes (satellites or gateways) or links being added or removed also triggers a diffusion and topology adaptation process.

Phase 2: Minimum Delay Adaptation

Although each node has learned some information during the Topology Adaption phase, the adaptation process continues until each node n knows the best way to route packets to each destination x, i.e., how to route packets to achieve absolute minimum end-to-end delays. The Minimum Delay Adaptation Phase is complete when no further optimal link switches occur anywhere in the network. When optimal links are set and do not change, all nodes have jointly agreed on a consistent global solution for routing. This distributed solution is optimal, and though the solution is not necessarily unique, it guarantees that no better solution exists.

Ongoing Adaptation

In the normal course of operation, the link queuing delay, Tq, may change as a result of traffic load variations. The link propagation delay, Tp, varies as well, since the many nodes keep moving with respect to each other. The value of Tp is sampled periodically, while the value of Tq is sampled by the local router just prior to the transmission of a new delay vector. The packet switch uses the instantaneous value of Tq which is measured by hardware. A change in Tq or Tp of link I of node n affects the delay value D(n, x, I) as computed by Algorithm 1 (the delay may increase or decrease). If I is an optimal link for some destination node x, then the delay change may also lead to a local switch in the optimal link opt_link(x). All delay vectors sent subsequently will reflect these changes, informing the neighbors of the local changes. Even a small change in D(n, x, I), which may not even lead to a local optimal link switch (just a change in the delay value), may trigger a switch in some neighbors, which, in turn, may lead to a switch in their own neighbors. As a consequence, a small change in one portion of the network may trigger a diffusion and adaptation process that spans the entire network. The changes in the neighbors of n may, in turn, be reflected back to n to trigger more changes in n. These changes may include optimal link switching, which will again be followed by reflections back to neighbors. In most cases, because Tp is sampled frequently and because Tq may vary rapidly during heavy traffic load conditions, the effects of one local change may not have had a chance to settle down throughout the network before another local change occurs and a new diffusion and adaptation process is triggered.

Adaptation Rate

The nature of the diffusion process is random and very complex. Each node triggers diffusion waves which result from local conditions. Nodes are also influenced by waves of information originating in other nodes. Since nodes are not evenly spaced and their response to newly arrived information occurs at non deterministic times (which depend upon the node internal processing conditions, process scheduling priorities, etc.), the waves of information do not propagate uniformly about the center of the original cause. The propagation delay of an event/cause triggered in some node n to another remote node x depends primarily on two factors: the number of hops between the two, since each intervening hop processes the information and then broadcasts its resultant delay vectors in all directions (including the relative backward direction): and the message transmission times which themselves are determined by links propagation delays and the message system queuing delay.

The diffusion process may generate an avalanche of messages, which are each multiplied when they are received by a node. To limit the memory requirements, a windowing scheme is employed in which messages available for transmission are simply dropped if the window is full. In addition to lowering the amount of message system memory required (to buffer messages), this limitation assures, to the greatest extent possible, that only the latest news is transmitted. In the worst case, news will be transmitted during the periodic vector transmission cycle. It is possible that in heavy message communications loads a node x just one hop away from n (a neighbor) will receive its information from n through another node before receiving the information directly from n.

Diffusion Simulation Results

Computer simulations performed by the inventor indicate that using a small window of size l and starting in a state in which no node knows of any other node, Phase 1 (diffusion of all the topology information) is complete in about 138 milliseconds. Phase 2 (formation of an optimal minimum delay network) is complete in about 292 msec. The window size has a small effect on the adaptation time. Increasing the window size to 4 decreases the adaptation time by about ten percent. In the simulation, Tp is sampled every 50 msec and the periodic delay vector transmission process operates every 50 msec. This causes new routing information to be generated before it has a chance to be fully diffused into the network. As a result, the distributed adaptation hunts for the optimal solution continuously and never has a chance to settle down.

Packet Switching

Figure 94 is a flow chart which demonstrates the general flow of signals 144 through the fast packet switch 438. Figure 95 reveals the overall architecture of the satellite node 1146 as it relates to the packet switching process. The relationship among the fast packet switch 438 and Input Output Packet processor (IOP) units 1150 are illustrated in Figure 96. Figures 97 and 98 reveal the details of the input packet processor (IPP) 1152 and IPP common control 1154, and an IPP four stage pipleline 1158 is shown in Figure 99. Figure 100 is a flow chart that explains the general process performed by an IPP Optimal Route Controller 1160. Message communication 1162 within the switching hardware is revealed in Figure 101. Messages are conveyed on a Fiber Distributed Data Interface Token Ring (FDDI) 1127 in Figure 102 exhibits the pathways within a 128 x 128 switch 1164, while Figure 103 is a schematic diagram of a switching cell 1166.

Packets 422 are received from mobile and fixed terminals located under the satellite footprint via Mobile Terminal-Satellite Links (MTSLs) and Fixed Terminal-Satellite Links (FTSLs); gateways used for bringing in traffic from calls originating or terminating on the public network via Gateway to Satellite Links (GSLs); and other satellites via the InterSatellite Links (ISLs). Packets 422 are grouped in two categories, those carrying user data comprising voice, video, digital data, etc.; and those carrying control messages that are used in network administration and control functions. The Fast Packet Switch (FPS) is responsible for switching each incoming packet to its appropriate destination. Packets can be switched to satellites, gateways and terminals. Those destined for other satellites are transported over ISL output links. Packets passing through satellite nodes on their way to their final destinations may contain user data or control messages. Packets directed to a gateway using a GSL output link may also carry user data or control messages. If the packet type is user data, the call associated with the packet originates or terminates on the public network. If the packet conveys a control message, it terminates at the gateway node common control. Mobile and fixed terminals can communicate directly with satellites in orbit. Mobile terminal to satellite links can convey packets at 16Kh per second. Two Kb of the 16Kb MTSL capacity is reserved for a 2 Kb data channel. Fixed terminal to satellite links are 64Kb channels, of which 8Kb is reserved for data. Packets traveling to mobile and fixed terminals include user data packets that carry voice messages, and control message packets bearing call control information. Packets may also be delivered to a node Message Transport System (MTS) if the packet type is a control message.

Packet Switching and Delay Variance

Packet Routing And Link Load Distribution

The Fast Packet Switch utilizes the router to select the currently optimal output link from a local node to a destination node x. The output link is selected anew for each received packet, based on decision factors offered by the router's recommendation, as computed by D(n, x, l), and by instantaneous link load factors. Instead of limiting the choice to using only the absolute optimal link, namely, that l for which D(n, x, l) is lowest, the FPS may use links having delays that are fairly close to the optimal delay, but which have loads Tq that are lower than that of the optimal link. The parameter Delta defines the term "fairly close". In the simulation of one of the preferred embodiments of the invention, Delta is 50 microseconds. The maximum value of Delta must be significantly lower than the inter-packet generation time or the sequencing of packets may be impaired.

This method of selecting the output link provides automatic link load distribution as well as some degree of link overload control. The method of the invention comprises the following steps:

1. Find the link l whose delay D(n, x, l) is lowest. Call that delay Dmin(n, x).
2. Mark all candidate links l having delay D(n, x, l) <= Dmin(n, x) + Delta. A link in this set yields a delay of at most Dmin(n, x) + Delta.
3. From among the candidate links, select the one currently having the lowest Tq.

   a. Setting Delta to 0 constrains the router to consider only the optimal link and other links having the exact same delay.
   b. Increasing Delta increases the degree of load distribution, but only at the expense of also increasing the variance in the packet transmission delay. Using sub-optimal links can cause packets to be routed along paths which do not provide absolute minimum delay, but which help meet load distribution objectives.
   c. The (short term) worst case packet delay occurs when the packet happens to be switched over the worse sub-optimal link at each hop along the route and each such sub-optimal link happens to increase the delay by a full Delta above the optimal. With Delta set to 50 microseconds, load distribution will contribute at most . 5 msec in delay variance to a very long 10 hop circuit, which is still quite low.
   d. The best case occurs when the packet is routed over the optimal link at each hop.
   e. The load distribution process is but a single component contributing to the total variance which is also influenced by normal statistical traffic patterns and intensity fluctuations; continuous changes in Tp due to satellite movement; and topological changes resulting from link disconnects which result from loss of neighbor visibility, and new link connects that replace disconnected links. These topological changes may cause the delay to increase or decrease abruptly by as much as several milliseconds. The greater the number of satellites in the constellation, the lower the change in delays.

To select the packet output link, D(n, x, l) is computed by using routing tables NDI(l*, x), and the current values of Tp and Tq of each link. The value of Tq is a linear function of the number of bits or packets waiting to be transmitted in the output link transmitter buffer. This buffer operates on a first in, first out basis (FIFO). Tp is the latest sampled value and is measured periodically. Once the output link has been selected, its binary identification number is inserted into an N bit tag in front of the packet that is used by the FPS in navigating the packet through its internal switching stages to the selected output link. If the FPS has a total of L output links, then the value of N is equal to the upper bound of log2L. Ttag bit i controls switching stage i.

*CONCLUSION*

Although the present invention has been described in detail with reference to a particular preferred embodiment, persons possessing ordinary skill in the art to which this invention pertains will appreciate that various modifications and enhancements may be made without departing from the scope of the claims that follow. The various orbital parameters and satellite population and configuration statistics that have been disclosed above are intended to educate the reader about one preferred embodiment, and are not intended to constrain the limits of the invention or the scope of the claims. The List of Reference Characters which follows is intended to provide the reader with a convenient means of identifying elements of the invention in the specification and drawings. This list is not intended to delineate or narrow the scope of the claims.

*INDUSTRIAL APPLICABILITY*

The Satellite Communication System described above overcomes the limits that circumscribe the performance and potential of existing telephone systems. The present invention is capable of offering continuous voice, data and video service to customers across the globe on the land, on the sea, or in the air. Instead of merely improving upon or expanding existing land-based systems, the present invention bypasses centralized terrestrial switching hardware by placing all the intelligence of the network in orbit. Unlike conventional hierarchical systems, which are linked together by a complex web of wires, cables, glass fibers, and microwave repeaters that are very expensive to build and maintain, the present invention liberates the true communications potential of existing land-based networks by routing signals through spacecraft in low Earth orbit. The present invention will revolutionize the telecommunications industry, and offer a wide spectrum of services and industrial opportunities around the world.

*LIST OF REFERENCE CHARACTERS*

| | |
|---|---|
| 10 | End-to-end network model |
| 12 | First user terminal |
| 14 | First network interface |
| 16 | Calling network |
| 18 | Second network interface |
| 20 | Second user terminal |
| 22 | Operations traffic |
| 24 | User traffic |
| 26 | Single satellite |
| 28 | Orbital plane |
| 30 | Terminal |
| 31 | Keypad and display |
| 32 | Analog voice signal |
| 33 | Call-progress tones and display circuits |
| 34 | A/D converter |
| 36 | Digitized voice output |
| 38 | Speech encoder |
| 40 | Digital encoded speech |
| 42 | Encryption equipment |
| 44 | Encryption key |
| 46 | Signalling and control processor |
| 48 | Encrypted output |
| 50 | Sequence numbers |
| 52 | Destination addresses |
| 54 | Signal packets |
| 56 | Packet assembler |
| 58 | Packets |
| 60 | Error encoder |
| 62 | Transmit buffer |
| 64 | Transmitter |
| 66 | Power control circuitry |
| 68 | Frame and bit timing circuitry |
| 70 | Antenna |
| 72 | Uplink radio signals |
| 74 | Steering logic circuits |
| 76 | Downlink radio signals |
| 78 | Receiver |
| 80 | Address decoder |
| 82 | Terminal identifier information |
| 84 | Error detector |
| 86 | Header decoder |
| 88 | Signal packets |

| 90 | Speech packets |
|---|---|
| 92 | Packet receive buffer |
| 94 | Timing and packet resequencing stage |
| 96 | Decryption key |
| 98 | Security decryption circuit |
| 100 | Speech decoder |
| 102 | Echo suppressor |
| 104 | Digital analog converter |
| 106 | Gateway antennas |
| 108 | Local receivers |
| 110 | Remote receivers |
| 112 | Local receivers |
| 114 | Remote receivers |
| 116 | Receiver select logic |
| 118 | Fast packet switch |
| 120 | Incoming control circuitry |
| 122 | Outgoing control circuitry |
| 124 | Packet Assembly and Disassembly interface (PAD) |
| 126 | Series of Packet Assembly and Disassembly stages |
| 128 | DS-1 links |
| 130 | Access switching machine |
| 132 | Test access circuitry |
| 134 | Control circuitry |
| 136 | Link for spacecraft access |
| 138 | Switched traffic |
| 140 | Unswitched traffic |
| 142 | Link |
| 144 | Link |
| 146 | Clock |
| 148 | Operating system |
| 150 | DS-1 interface |
| 152 | Custom or standard interface |
| 154 | Outside telephone carrier |
| 156 | "Ping-pong" diagram |
| 158 | Network |
| 160 | Satellite node |
| 162 | Intersatellite link |
| 164 | Gateway-satellite link (GSL) |
| 166 | Gateway interface |
| 168 | Operation support system |
| 170 | Feature processor |
| 172 | Gateway switches |
| 174 | Database systems |
| 176 | Mobile terminal satellite link (MTSL) |
| 178 | Customer |
| 180 | Mobile terminal satellite link (MTSL) |
| 182 | Hand-held and car phones |
| 184 | Fixed terminal satellite link (FTSL) |
| 186 | Subscribers |
| 210 | Terrestrial Antennas |
| 210a | Trapezoidal/Semi-conical embodiment of antenna |
| 210b | Hemispherical embodiment of antenna |
| 210c | Cylindrical embodiment of antenna |
| 212 | Trapezoidal/Semi-conical surface |
| 212a | Upper portion of trapezoidal/semi-conical surface |
| 212b | Lower portion of trapezoidal/semi-conical surface |
| 214 | Top circular surface |
| 216 | Bottom circular surface |

| 218 | Circular antenna element |
|---|---|
| 220 | Conductive patch |
| 222 | Cross-slots |
| 222a | First slot |
| 222b | Second slot |
| 224 | Hemispherical surface |
| 226 | Bottom circular surface |
| 228 | Right-circular cylindrical surface |
| 230 | Top circular surface |
| 232 | Bottom circular surface |
| 234 | Nonconductive substrate layer |
| 236 | Ground plane layer |
| 238 | Five bit, time delay phase shifter |
| 240 | 11.25 degree delay line |
| 242 | 22.50 degree delay line |
| 244 | 45.00 degree delay line |
| 246 | 90.00 degree delay line |
| 248 | 180.00 degree delay line |
| 250 | Hemispherical configuration with dual frequency antenna elements |
| 252 | Upper hemispherical surface |
| 253 | Lower circular surface |
| 254 | Dual frequency antenna element |
| 256 | Upper conductive layer |
| 258 | Lower conductive layer |
| 259 | Conductive via |
| 260 | Conductive via |
| 262 | Foam layer |
| 264 | Dielectric layer |
| 266 | Ground plane layer |
| 268 | Receive circuit |
| 270 | Printed circuit four element subarray |
| 272 | Feeds |
| 274 | First radio frequency amplifier |
| 276 | First band pass filter |
| 278 | Second radio frequency amplifier |
| 280 | Mixer |
| 282 | Source |
| 284 | Output of synthesizer |
| 286 | Third radio frequency amplifier |
| 288 | Decoder |
| 290 | Intermediate frequency band pass filter |
| 292 | Analog-to-digital converter |
| 294 | Digital band pass filter |
| 296 | Threshold detector |
| 297 | Transmit circuit |
| 298 | Printed circuit four element subarray |
| 300 | Feeds |
| 302 | Amplifier |
| 304 | Encoder |
| 306 | Radio frequency source |
| 308 | Synthesizer |
| 310 | Alternate embodiment of miniaturized antenna |
| 312 | Top element |
| 314 | Radiating element |
| 315 | Soft substrate |
| 316 | Ground plane |
| 317 | Dummy element |
| 318 | Top view |

| | |
|---|---|
| 320 | 30 GHz printed circuit patch element |
| 322 | 20 GHz patch element |
| 324 | Substrate layer |
| 326 | Cross-sectional side view |
| 328 | Foam layer |
| 330 | Ground plane |
| 332 | Cross-sectional view |
| 334 | Radome |
| 335 | Dummy element |
| 336 | Printed dual frequency printed circuit elements |
| 337 | Printed dual frequency printed circuit elements |
| 338 | Microwave substrate |
| 340 | Feed networks and distribution circuits |
| 342 | Active microwave components |
| 344 | Ground plane and support structure |
| 410 | Flow chart of switching process |
| 412 | Orbital position information |
| 414 | Adaptive routing processor |
| 416 | Adaptive routing algorithm |
| 418 | "Next-node-in-path-to-destination" output |
| 420 | Routing cache memory |
| 422 | Packets |
| 424 | Header |
| 426 | Payload |
| 428 | Input packet processor |
| 430 | Next node routing tag |
| 432 | Destination node |
| 434 | Processed packet |
| 436 | Input ports |
| 438 | Fast packet switch |
| 440 | Output port |
| 442 | Satellite switch node |
| 444 | Circuit modules |
| 446 | Receiver |
| 448 | Demodulator |
| 450 | Bit/packet synchronizer |
| 452 | Input packet control modules |
| 454 | Error detection circuits |
| 456 | Packet tagging circuits |
| 458 | Local cache access |
| 460 | Network cache access |
| 462 | Control complex |
| 464 | Call control processor |
| 466 | Maintenance processor |
| 468 | Reload processor |
| 470 | Billing and traffic processor |
| 472 | Satellite ephemerides processor |
| 474 | Local routing and handover processor |
| 476 | Local routing cache |
| 478 | Routing processor |
| 480 | Network routing cache |
| 482 | Communications processor |
| 484 | Spare processor |
| 486 | Steering processor |
| 490 | Output packet control modules |
| 492 | Path history circuits |
| 494 | Error encoding circuits |
| 496 | Output packet control modules |

498     Packet framing circuits
500     Modulator
502     Transmitter
504     32 x 1 packet priority multiplexor
506     Serial input signals
508     Serial-to-parallel converters
510     First-in, first-out buffering circuits
512     Status and control circuits
514     Logic circuitry
516     Output queue status stage
517     Eight bit parallel bus
518     Priority router
520     8 x 16K low priority first-in, first-out circuit
522     8 x 16K high priority first-in, first-out circuit
524     Parallel-to-serial converter
526     150 MBIT/S serial output
528     Block diagram of fast packet switch
530     Serial inputs
532     1 x 32 self-routing switch module
534     32 x 1 asynchronous packet multiplexor
536     Schematic diagram of 1 x 32 self-routing switch module
538     Self-routing cell
540     Output side
542     Routed packets
544     Mobile/fixed satellite link
546     Radiating array
548     Feeds
550     Beam steering computer
552     Diplexer
554     Receive beam forming network
556     Bank of receivers
558     First controller mux/demux/modem
560     Synthesizer
562     Frequency controller
564     Second controller mux/demux/modem
566     Bank of transmitters
568     Transmit beam forming network
602     Footprints
602a    Footprint
602b    Footprint
602c    Footprint
604     Earth-fixed supercell
606     Earth-fixed cell
608     Cell pattern
610     Satellite footprint diagram
612     Column pair
614     Second and central column pair
615     Satellite footprint overlaps
616     Rightmost column pair
617     Satellite footprint gaps
618     Flow chart
619     Destination terminal
620     "Node" bits
622     "Call identification" bits
624     Cell ID map
626     Channel
628     Autonomous orbit position determination software
630     Position/output beam map

632     Modified packet
700     Earth-facing antenna array
702     Hexagonal antenna facets
704     Solar panel
706     Space-facing array
708     Space-facing facets
709     Electronically steered beams
709a    Set of beams
709b    Set of beams
709c    Set of beams
710     Line-of-sight radio waves
712     Geometric plots
714     Geometric plots
715     Interior of antenna array
716     Schematic diagram of a GaAs MMIC time delay network
718     Active lens
720     Radiating elements
722     Time delay circuit
724     Feed
725     Time delay steered array
726     Switch
728     Time delay path
730     Transmission lines
732     Amplifier
800     Satellite
801     Launch vehicle
802     Spacecraft direction of travel
804     Longitudinal axis of solar panels
806     Spherical connectors
808     Tubular connectors
810     Gearsat
811     Schematic representation of a person two meters tall
812     Cylindrical surface at periphery of Gearsat
814     Rectangular antenna panels on cylindrical surface
816     Solar panels
818     Block diagram of satellite subsystems
820     Bus
822     Communications Payload
824     Command and Data Handling Subsystem
826     Electrical Power Subsystem
828     Attitude and Orbit Determination and Control Subsystem
830     Sun sensors
832     Actuators
834     Propulsion Subsystem
836     Cabling Subsystem
838     Structure Subsystem
840     Mechanisms Subsystem
842     Thermal Control Subsystem
844     Block diagram of satellite subsystems
846     Local area network
848     Power Control Subsystem
850     Batteries
852     Power Distribution Subsystem
854     Array switching link
856     Shunt regulators
858     Shunt radiators
860     Block diagram of satellite subsystems
862     Local area network

864 Bus
866 Payload
868 Telemetry and command unit
870 1750 microprocessor
872 Master oscillator
874 EDAT microprocessor
876 RISC microprocessor
878 Block diagram of satellite subsystems
880 Local Area Network
882 Acquisition sun sensors
884 Inertial measurement units
886 Magnetometers
888 Attitude Control Electronics unit
890 Reaction wheels
892 Magnetic torquers
894 Batsat
896 Central body of Batsat
898 Antenna and solar/thermal panel array
900 Antenna array
901 Antenna panel
902 Antenna panel
903 Antenna panel
904 Antenna panel
905 Antenna panel
906 Antenna panel
907 Antenna panel
908 Antenna panel
909 Antenna panel
910 Solar/thermal panel
911 Solar/thermal panel
912 Cables
914 Hinges
1000 Schematic diagram showing orbit position determination
1002 Other satellite
1004 Time synchronizing signals
1006 Ground station receiver
1008 Ground station transmitter
1010 Doppler observation
1012 Block diagram showing AOD
1014 Time and frequency measurements
1016 SV POS
1018 SV LOS
1020 RDSS PR packet
1022 Communication network
1024 Antenna control
1026 Position determination circuitry
1028 Communication link
1030 Data demodulation stage
1032 Frequency synthesizer
1034 Oscillator
1036 Phase locked loop
1038 Pilot tone
1040 Time of perception of PR packet
1042 Time and frequency synchronization
1044 Doppler signals
1046 AOD processor
1048 Pointing direction signals
1050 Attitude determination processor

| | |
|---|---|
| 1052 | Schematic diagram showing attitude determination |
| 1100 | Node hardware architecture |
| 1102 | Common control stage |
| 1104 | Internode messages |
| 1106 | Internode messages |
| 1108 | Receivers |
| 1110 | Transmitters |
| 1112 | Link control process |
| 1114 | Routing process |
| 1116 | Service demand |
| 1118 | Subscribers |
| 1120 | Routing tables |
| 1122 | Local processes |
| 1124 | Dynamic packet routing method |
| 1126 | Router |
| 1128 | Packet routers |
| 1130 | Sorting network |
| 1132 | Transmitters |
| 1134 | Diffusion rate |
| 1136 | Diffusion rate |
| 1138 | Diffusion rate |
| 1140 | Output module |
| 1142 | Switching architecture |
| 1144 | Signal flow |
| 1146 | System architecture |
| 1148 | Input Output Packet (IOP) Processor and Fast Packet Switch |
| 1150 | IOP |
| 1152 | Input Packet Processor |
| 1154 | IPP Common Control |
| 1156 | Pipe delay |
| 1158 | IPP four stage pipeline |
| 1160 | IPP Optimal Route Controller |
| 1162 | Message Communication |
| 1164 | 128 x 128 Switch |
| 1166 | Switching Cell |
| B | Beam from satellite |
| BP | Battery pack for hand held phone |
| C | Constellation of satellites |
| E | Earth |
| EX | Retractable antenna mast in fully extended position |
| F | Fixed terminal |
| G | Gateway |
| H | Spring Loaded, Self-Latching Hinges |
| K | Keypad |
| L | LCD display screen |
| M | Mobile terminal |
| P | Portable terminal |
| S | Satellite |
| ST | Retractable antenna mast in stowed position |
| T | Hand-held portable telephone |
| T | Telephone |
| Z | Zenith |

**Claims**

1. A communications system for conveying communication signals from several sending terminals (10, P, M, F, G) at geographically diverse sending locations on the earth to several receiving terminals (12, P, M, F, G) at geographically diverse receiving locations on the earth comprising a multiplicity of satellites (S) each in a low earth orbit such that the satellites (S) are in constant motion over the face of the earth, the satellites (S) having means (700, 702) for receiving communication signals from earth-based sending terminals (10, P, M, F, G) and means (700, 702) for transmitting received communication signals to earth-based receiving terminals (12, P, M, F, G), the satellites (S) further including switch and intersatellite communication means (438) for routing communication signals from a satellite (S) receiving a communication signal from an earth-based sending terminal (10, P, M, F, G), by way of one or more other satellites (S), to a sending satellite (S) for transmitting the communication signal to an earth-based receiving terminal (12, P, M, F, G) thereby establishing a communication link between the sending terminal and the receiving terminal, the receiving/transmitting means including antennas (700, 702) orbiting with the satellites (S) relative to the earth and means for handing off responsibility for an earth-to-satellite segment of the communication link from one satellite to another, characterized in that the antennas (700, 702) are electronically steerable for receiving/transmitting communications signal beams (709) in different directions

and means (716, 718) controlling steering of the antennas to maintain the communication links between the earth-based sending terminals and the earth-based receiving terminals by electronic steering of the beams in the earth-to-satellite link segment as the satellites orbit over the face of the earth.

2. The system of Claim 1, further characterized by the steering controlling means (716, 718) adjusting the direction of the beams (709) to accommodate for orbiting of the satellites (S) by steering beams in a direction opposite the satellite orbiting direction

3. The system of any preceding claim, further characterized by the steering controlling means (716, 718) adjusting the direction of the beams (709) to accommodate for orbiting of each satellite (S) by steering the associated beam to dwell on a fixed location on the earth during a portion of the orbit of the satellite.

4. The system of any preceding claim, further characterized by the means for handing off responsibility for an earth-to-satellite segment of the communication link from one satellite (S) to another operating without changing the communication channel of the earth-based terminal (10,12,P,M,F,G).

5. The system of any preceding claim, further characterized by the means for handing off responsibility for an earth-to-satellite segment of the communication link from one satellite (S) to another operating without changing the communication frequency of the earth-based terminal (10, 12, P, M, F, G).

6. The system of any preceding claim, further characterized by the switch and intersatellite communication means (438) of the satellites (S) employing connectionless protocol as opposed to using virtual channels.

7. The system of any preceding claim, in which the communication signals (709) are packet-based, and the switch and intersatellite communication means (438) routes the communication signals on a packet-by-packet basis whereby different packets may follow different routes between the same receiving and sending satellites (S) based on system congestion or other factors.

8. The system of any preceding claim, further characterized by the switch and intersatellite communication means (438) of each satellites (S) being capable of autonomously determining orbit position information which defines its own position relative to the earth and the positions of at least several adjacent satellites.

9. The system of any preceding claim, further characterized by the steering controlling means (716, 718) adjusting the direction of the electronically steerable antennas (700, 702) in a sequential pattern of areas on the earth.

10. The system of Claim 9, wherein the areas of the pattern are fixed geographic areas.

11. The system of any preceding claim, further characterized by each of the satellites (S) having multiple receiving/transmitting means (700, 702) for receiving/transmitting beams (709) in earth-to-satellite segments of the links, said multiple receiving/transmitting means (700, 702) including multiple electronically steerable antennas (700, 702) and means (716, 718) controlling steering of the multiple antennas of each satellite (S) to maintain communication links between earth-based sending terminals (10, P, M, F, G) and/or earth-based receiving terminals (12, P, M, F, G).

12. The system of any preceding claim, in which the satellites (S) are arranged in a constellation (C) for whole-earth coverage whereby communication links may be established and maintained between any locations on the surface of the earth.

**Patentansprüche**

1. Ein Kommunikationssystem zum Befördern von Kommunikationssignalen von mehreren Sendeendgeräten (10, P, M, F, G) an geographisch verschiedenen Sendepositionen auf der Erde zu mehreren Empfangsendgeräten (12, P, M, F, G) an geographisch verschiedenen Empfangspositionen auf der Erde, wobei dasselbe eine Vielzahl von Satelliten (S) jeweils in einer niedrigen Umlaufbahn derart aufweist, daß die Satelliten (S) sich in einer konstanten Bewegung über der Erdoberfläche befinden, wobei die Satelliten (S) eine Einrichtung (700, 702) zum Empfangen von Kommunikationssignalen von den erdbasierten Sendeendgeräten (10, P, M, F, G) und eine Einrichtung (700, 702) zum Senden von empfangenen Kommunikationssignalen zu erdbasierten Empfangsendgeräten (12, P, M, F, G) aufweisen, und wobei die Satelliten (S) ferner eine Schalt- und Zwischensatellitenkommunikationseinrichtung (438) zum Leiten von Kommunikationssignalen von einem Satelliten (S), der ein Kommunikationssignal von einem erdbasierten Sendeendgerät (10, P, M, F, G) empfängt, mittels eines oder mehrerer anderer Satelliten (S) zu einem Sendesatelliten (S) zum Senden des Kommunikationssignals zu einem erdbasierten Empfangsendgerät (12, P, M, F, G) aufweisen, wodurch eine Kommunikationsverbindung zwischen dem Sendeendgerät und dem Empfangsendgerät eingerichtet wird, wobei die Empfangs/Sende-Einrichtung Antennen (700, 702), die mit den Satelliten (S) relativ zu der Erde umlaufen, und eine Einrichtung zum Abgeben der Verantwortung für eiri Erd-zu-Satelliten-Segment der Kommunikationsverbindung von einem Satelliten zu einem weiteren aufweist, dadurch gekennzeichnet, daß die Antennen (700, 702) zum Empfangen/Senden von Kommunikationssignalstrahlen (709) in unterschiedliche Richtungen elektronisch lenkbar sind,
und durch eine Einrichtung (716, 718), die das Lenken der Antennen steuert, um die Kommunikationsverbindungen zwischen den erdbasierten Sendeendgeräten und den erdbasierten Empfangsendgeräten durch elektronisches Lenken der Strahlen in dem Erd-zu-Satelliten-Verbindungssegment beizubehalten, sowie die Satelliten über die Erdoberfläche umlaufen.

2. Das System gemäß Anspruch 1, das ferner durch die Lenk-Steuerungseinrichtung (716, 718) gekennzeichnet ist, die die Richtung der Strahlen (709) einstellt, um das Umlaufen der Satelliten (S) durch Lenken der Strahlen in einer Richtung, die entgegengesetzt zu der Satellitenumlaufrichtung ist, zu berücksichtigen.

3. Das System gemäß einem beliebigen vorhergehenden Anspruch, das ferner durch die Lenk-Steuerungseinrichtung (716, 718) gekennzeichnet ist, die die Richtung der Strahlen (709) einstellt, um das Umlaufen jedes Satelliten (S) durch Lenken des zugeordneten Strahls, um auf einer festen Position auf der Erde während eines Abschnitts der Umlaufbahn des Satelliten zu verweilen, zu berücksichtigen.

4. Das System gemäß einem beliebigen vorhergehenden Anspruch, das ferner durch die Einrichtung zum Abgeben der Verantwortung für ein Erd-zu-Satelliten-Segment der Kommunikationsverbindung von einem Satelliten (S) zu einem weiteren gekennzeichnet ist, die betrieben wird, ohne den Kommunikationskanal des erdbasierten Endgeräts (10, 12, P, M, F, G) zu ändern.

5. Das System gemäß einem beliebigen vorhergehenden Anspruch, das ferner durch die Einrichtung zum Abgeben der Verantwortung für ein Erd-zu-Satelliten-Segment der Kommunikationsverbindung von einem Satelliten (S) zu einem weiteren gekennzeichnet ist, die betrieben wird, ohne die Kommunikationsfrequenz des erdbasierten Endgeräts (10, 12, P, M, F, G) zu ändern.

6. Das System gemäß einem beliebigen vorhergehenden Anspruch, das ferner durch die Schalt- und Zwischensatellitenkommunikationseinrichtung (438) der Satelliten (S) gekennzeichnet ist, die ein verbindungsloses Protokoll im Gegensatz zum Verwenden von virtuellen Kanälen verwendet.

7. Das System gemäß einem beliebigen vorhergehenden Anspruch, bei dem die Kommunikationssignale (709) paketbasiert sind, und bei dem die Schalt- und Zwischensatellitenkommunikationseinrichtung (438) die Kommunikationssignale auf einer Paket-für-Paket-Basis leitet, wodurch unterschiedliche Pakete unterschiedlichen Leitwegen zwischen den gleichen Empfangs- und Sende-Satelliten (S) basierend auf einem Systemstau oder anderen Faktoren folgen können.

8. Das System gemäß einem beliebigen vorhergehenden Anspruch, das ferner durch die Schalt- und Zwischensatellitenkommunikationseinrichtung (438) jedes der Satelliten (S) gekennzeichnet ist, die die Umlaufbahnpositionsinformationen autonom bestimmen kann, und die ihre eigene Position relativ zu der Erde und die Positionen von mindestens mehreren benachbarten Satelliten definiert.

**9.** Das System gemäß einem beliebigen vorhergehenden Anspruch, das ferner durch die Lenk-Steuerungseinrichtung (716, 718) gekennzeichnet ist, die die Richtung der elektronisch lenkbaren Antennen (700, 702) in einem sequentiellen Muster von Bereichen auf der Erde einstellt.

**10.** Das System gemäß Anspruch 9, bei dem die Bereiche des Musters feste geographische Bereiche sind.

**11.** Das System gemäß einem beliebigen vorhergehenden Anspruch, das ferner dadurch gekennzeichnet ist, daß jeder der Satelliten (S) mehrere Empfangs/Sende-Einrichtungen (700, 702) zum Empfangen/Senden von Strahlen (702) in Erd-zu-Satelliten-Segmenten der Verbindungen aufweist, wobei die mehreren Empfangs/Sende-Einrichtungen (700, 702) mehrere elektronisch lenkbare Antennen (700, 702) und eine Einrichtung (716, 718) aufweisen, die das Lenken der mehreren Antennen jedes Satelliten (S) steuert, um Kommunikationsverbindungen zwischen den erdbasierten Sendeendgeräten (10, P, M, F, G) und/oder erdbasierten Empfangsendgeräten (12, P, M, F, G) beizubehalten.

**12.** Das System gemäß einem beliebigen vorhergehenden Anspruch, bei dem die Satelliten (S) in einer Konstellation (C) für eine Gesamterdabdeckung angeordnet sind, wodurch Kommunikationsverbindungen zwischen beliebigen Positionen auf der Erdoberfläche eingerichtet und beibehalten werden können.

**Revendications**

**1.** Système de communication pour l'acheminement de signaux de communication depuis plusieurs terminaux émetteurs (10, P, M, F, G), situés en des positions d'émission géographiquement différentes sur la terre, vers plusieurs terminaux récepteurs (12, P, M, F, G), situés en des positions de réception géographiquement différentes sur la terre, comprenant une pluralité de satellites (S) qui sont chacun situés sur une orbite basse de telle sorte que les satellites (S) soient en déplacement constant au-dessus de la surface de la terre, les satellites (S) ayant des moyens (700, 702) servant à recevoir des signaux de communication depuis des terminaux émetteurs au sol (10, P, M, F, G) et des moyens (700, 702) servant à transmettre des signaux de communication reçus vers des terminaux récepteurs au sol (12, P, M, F, G), les satellites (S) comprenant en outre des moyens de commutation et de communication inter-satellites (438) pour acheminer des signaux de communication depuis un satellite (S) recevant un signal de communication depuis un terminal émetteur au sol (10, P, M, F, G), au moyen d'un ou de plusieurs satellites (S), vers un satellite émetteur (S), pour transmettre le signal de communication vers un terminal récepteur au sol (12, P, M, F, G), en établissant ainsi une liaison de communication entre le terminal émetteur et le terminal récepteur, les moyens de réception/ transmission comprenant des antennes (700, 702) orbitant avec les satellites (S) par rapport à la terre et des moyens servant à transférer d'un satellite à un autre la responsabilité d'un segment terre-satellite de la liaison de communication, caractérisé en ce que les antennes (700, 702) peuvent être orientées électroniquement pour recevoir/transmettre des faisceaux de signaux de communication (709) dans différentes directions,
et des moyens (716, 718) commandant l'orientation des antennes pour maintenir les liaisons de communication entre les terminaux émetteurs au sol et les terminaux récepteurs au sol grâce à l'orientation électronique des faisceaux dans le segment de liaison terre-satellite lorsque le satellite orbite sur la surface de la terre.

**2.** Système selon la revendication 1, caractérisé en outre par le fait que les moyens de commande d'orientation (716, 718) règlent la direction des faisceaux (709) pour tenir compte du fait que les satellites (S) tournent sur orbite, en orientant les faisceaux dans une direction opposée à la direction de rotation des satellites.

**3.** Système selon l'une quelconque des revendications précédentes, caractérisé en outre par le fait que les moyens de commande d'orientation (716, 718) règlent la direction des faisceaux (709) pour tenir compte du fait que les satellites (S) tournent sur orbite, en orientant le faisceau associé de façon qu'il reste dans une position fixe sur la terre pendant une partie de l'orbite du satellite.

**4.** Système selon l'une quelconque des revendications précédentes, caractérisé en outre par les moyens servant à transférer la responsabilité d'un segment terre-satellite de la liaison de communication, d'un satellite (S) vers un autre satellite en fonctionnement, sans changement du canal de communication du terminal au sol (10, 12, P, M, F, G).

**5.** Système selon l'une quelconque des revendications précédentes, caractérisé en outre par les moyens servant à transférer la responsabilité d'un segment terre-satellite de la liaison de communication, depuis un satellite (S) vers un autre satellite en fonctionnement, sans changement de la fréquence de communication du terminal au sol (10, 12, P, M, F, G).

**6.** Système selon l'une quelconque des revendications précédentes, caractérisé en outre par le fait que les moyens de commutation et de communication inter-satellites (438) des satellites (S) utilisent un protocole sans connexion par opposition à l'utilisation de canaux virtuels.

**7.** Système selon l'une quelconque des revendications précédentes, dans lequel les signaux de communication (709) se présentent sous forme de paquets, et les moyens de commutation et de communication inter-satellites (438) acheminent les signaux de communication paquet par paquet, en sorte que des paquets différents peuvent suivre des routes différentes entre les mêmes satellites récepteurs et émetteurs (S), selon l'encombrement du système et d'autres facteurs.

**8.** Système selon l'une quelconque des revendications précédentes, caractérisé en outre par le fait que les moyens de commutation et communication inter-satellites (438) de chaque satellite (S) sont capables de déterminer de manière autonome des informations sur la position orbitale qui définissent sa propre position par rapport à la terre et les positions d'au moins plusieurs satellites voisins.

**9.** Système selon l'une quelconque des revendications précédentes, caractérisé en outre par le fait que les moyens de commande d'orientation (716, 718) règlent la direction des antennes (700, 702) électroniquement orientables, suivant une configuration séquentielle des zones de la terre.

**10.** Système selon la revendication 9, dans lequel les zones de la configuration sont des zones géographiques fixes.

**11.** Système selon l'une quelconque des revendications précédentes, caractérisé en outre par le fait que chacun des satellites (S) possède une pluralité de moyens de réception/transmission (700, 702) pour recevoir/ transmettre des faisceaux (709) dans des segments terre-satellite des liaisons, ladite pluralité de moyens de réception/transmission (700, 702) comprenant plusieurs antennes (700, 702) électroniquement orientables et des moyens (716, 718) commandant l'orientation de la pluralité d'antennes de chaque satellite (S), pour maintenir des liaisons de communication entre des terminaux émetteurs au sol (10, P, M, F, G) et/ou des terminaux récepteurs au sol (12, P, M, F, G).

**12.** Système selon l'une quelconque des revendications précédentes, dans lequel les satellites (S) sont disposés suivant une constellation (C) pour une couverture globale de la terre, en sorte que des liaisons de communication peuvent être établies et maintenues entre n'importe lesquelles des positions sur la surface de la terre.

FIG. I

EP 0 611 500 B1

FIG.2

FIG.3

FIG.4

FIG.5

FIG.6

FIG.7

FIG.8

210A

214

212

218

220

FIG.9

220   222   214   212A
                    210A
                    212B
218   216

FIG.10

210B

224

220   222

FIG.11

210B

222   224

218

226
220

FIG.12

210C

230                    230

228

232   218                    232

FIG. 13

FIG. 14

FIG 15

FIG. 16

FIG. 17

FIG. 18

FIG. 19

FIG. 20

FIG. 22

FIG. 21

FIG.23

FIG.24

FIG.25

FIG.26

PRINTED CIRCUIT 4-ELEMENT SUBARRAY ( 20 GHz)
(RECEIVE)

FIG.27

PRINTED CIRCUIT 4-ELEMENT SUBARRAY (30GHZ)
(TRANSMIT)

FIG.28

EP 0 611 500 B1

# FIG. 29

# FIG. 30

FIG.31

318

320

322

324

FIG.32

322 320

324 326

328

330

322

322

FIG.33

320

320

322 320

324

328

330

FIG.34

## FIG.35

## FIG.36

FIG.37

# FIG.38

FIG. 39

FIG.40

# FIG.41

FIG.42

FIG.43

FIG.44

FIG.45

FIG.46

FIG. 47

618

422
INCOMING
PACKET

628

ORBITAL
POSITION
DETERMINATION
SOFTWARE

| NODE | CALL ID | PAYLOAD |

620

622

426

DETERMINES ENTRIES
CHANNEL
ASSIGNMENT

626

| CHANNEL | CELL | SUPERCELL |

OUTPUT BEAM

INDEX

624

CELL ID
MAP

630

POSITION/
OUTPUT
BEAM MAP

632

| CHANNEL | CELL | OUTPUT BEAM | PAYLOAD |

426

PACKET
AFTER
IPP
MAPPING

438

FAST PACKET SWITCH

INPUTS

OUTPUTS

| CHANNEL | CELL | PAYLOAD |

PACKET
AFTER
SWITCHING

FREQUENCY
ASSIGNMENT

TIME
ASSIGNMENT

TO TRANSMITTER

FIG.48

619 DESTINATION TERMINAL

FIG.49

FIG.50

FIG. 51

1.6°

710

.8°

20 KM COVERAGE
PER BEAM

Z

E

EP 0 611 500 B1

FIG.52

EP 0 611 500 B1

FIG.53

716

FIG. 54

716

720

716

720

720

718

720

FIG. 55

FIG.56

725 TIME DELAY
STEERED ARRAY

718 TIME DELAY
ACTIVE LENS

FIG.57

FIG.58

FIG.59

FIG.60

EP 0 611 500 B1

FIG.61

704

800

702

802

704

FIG.62

E

S

Z

802

E

804

FIG.63

704

EP 0 611 500 B1

FIG.64

EP 0 611 500 B1

FIG.65

FIG.66

FIG.67

FIG.68

EP 0 611 500 B1

FIG. 69

FIG.70

EP 0 611 500 B1

FIG.71

**Fig. 72**

894

896

898

900

**Fig. 73**

900

896

894

898

**Fig. 74**

894

894

897

894

EP 0 611 500 B1

**Fig. 75**

Fig. 76

**Fig. 77**

**Fig. 78**

FIG.79

EP 0 611 500 B1

FIG. 80

1012

1014
TIME/FREQUENCY
MEASUREMENTS

AOD
1016
SV POS.

AOD
ALGORITHM

SV LOS
1018

RDSS
PR PACKET
1020

SATELLITE
GUIDANCE &
CONTROL
818

COMMUNICATION
NETWORK
1022

ANTENNA CONTROL
1024

EP 0 611 500 B1

FIG.8I

$X_B$

S

$Y_B$

$Z_B$

$\perp_{SG}^{B}$ MEASURED BY ANTENNA

$\perp_{SG}^{B}$

1052

$Z_E$

$Y_E$

$X_E$

G

$\perp_{GS}^{E} \cdot \dfrac{R_S^E - R_G^E}{\left| R_S^E - R_G^E \right|}$

$\perp_{GS}^{E}$ COMPUTED FROM POSITION

FIG.82

FIG.83

1106 RX INTERNODE MESSAGES
1104 Tx INTERNODE MESSAGES
1102
COMMON CONTROL
1100
FAST PACKET SWITCH
438
1110 Tx
1108 Rx
TO OTHER Sats S
TO GATEWAYS & TERMINALS G P F M
FROM OTHER S Sats
FROM GATEWAYS & TERMINALS G P F M

FIG.84

1114

1116
SERVICE
DEMAND

1118

REST OF THE WORLD

416
ROUTING Alg

1120
ROUTING TABLES

1122
OTHER LOCAL
PROCESSES

FIG.85

# FIG.86

~1134

SINGLE EVENT
ROUTING MESSAGE RATE

WINDOW CLIPPING

FIG.87

270 msec
t

~1136

FIG.88

1138

FIG.89

FIG.90

EP 0 611 500 B1

1127

CPU

FDDI SERVER

FDDI RING

LONG HAUL ROUTING MAP

CALL ID

CALL ID MAP

psw LINE TAG

SC/C/Ch

416

Tq

Tp

ROUTING Alg

Y

THIS NODE

N

LOCAL NODE ID

TRANSPORT MESSAGES SIGNALING

PKT IN

CRC | PAYLOAD | TYPE | CALL ID | DEST NODE | SC/C/Ch | LINE TAG

CRC CHECKER

$\overline{USER}$/MESSAGE

G

G

USER DATA

CRC GENERATOR

TO psw

FIG.91

1128

FIG.92

FIG. 93

RF SIGNAL-IN → | Rx ANTENNA | → | A TO D CONVERTER | → | IPP |

| IPP | → | SWITCH | → | OPP |

RF SIGNAL-OUT ← | Tx ANTENNA | ← | D TO A CONVERTER | ← | OPP |

1144

FIG. 94

1146

CENTRAL CONTROL

| CENTRAL PROCESSOR | MESSAGE TRANSPORT |

GSL-1    ISL-1

GSL-7    ISL-7
GSL-8    ISL-8

Pkt SWITCH

FTL-1    MTL-1

FTL-14    MTL-14
FTL-15    MTL-15
FTL-16    MTL-16

438

MULTIPLE ACESS CONT.

FOOTPRINT ANTENNA

FIG.95

FIG.96

1152

1127

CPU

FDDI SERVER ← FDDI RING →

16 PAGE LONG HAUL Td ROUTING TABLE

CALL ID

CALL ID MAP

psw LINE TAG

SC/C/Ch

COMMON

Tq (LOAD DISTRIBUTION)

ROUTING Alg

Tp

416

Y

N

THIS MODE

LOCAL NODE ID

TRANSPORT MESSAGES SIGNALING

PKT IN →

| CRC | PAYLOAD | TYPE | CALL ID | DEST NODE | SC/C/Ch | psw LINE TAG |

CRC CHECKER

USER/MESSAGE

G

G

USER DATA

CRC GENERATOR

TO psw

FIG.97

109

FIG.98

1158

1152

PIPE DELAY
12 Usec

3012 nsec

IPP
1

FETCH Pkt i

180 nsec PHASE SHIFT
IPP-1 ACCESS TO Td PAGE-1
IPP-2 ACCESS TO Td PAGE-2

GET Td+Tp FROM
COMMON TABLES
FOR DEST OF
Pkt i+1

COMPUTE OPTIMAL
OUTPUT LINK AND
TAG Pkt i-2

IPP
2

FETCH Pkt i

1152

GET Td+Tp
FROM COMMON
TABLES FOR DEST
OF Pkt i-1

MOVE Pkt i-3
TO IPP
OUTPUT QUEUE

COMPUTE OPTIMAL
OUTPUT LINK AND
TAG Pkt i-2

MOVE Pkt i-3
TO IPP
OUTPUT QUEUE

FIG.99

1160

Td [DEST, LINK(i)] + Tp [LINK(i)]
FROM ROUTER MAP

Td [DEST]

Tq(i)

Tq

| 1 |
| 2 |
| 3 |

ADDER

| 1 |
| 2 |
| 3 |

Td+Tp+Tq

T < MIN

MIN

| 192 |

| 192 |

DELTA

OPTIMAL LINK
SELECT SEQUENCER

OPTIMAL LINK (TAG)

FIG. 100

FIG. 101

FIG. 102

1164

1166 FIG. 103

FIG. 104